(19) Europäisches Patentamt
European Patent Office
Office européen des brevets

(11) **EP 4 567 159 A2**

(12) **EUROPEAN PATENT APPLICATION**

(43) Date of publication:
**11.06.2025 Bulletin 2025/24**

(21) Application number: **25173577.5**

(22) Date of filing: **18.03.2022**

(51) International Patent Classification (IPC):
**C25B 15/08** *(2006.01)*

(52) Cooperative Patent Classification (CPC):
**C25B 1/04; C25B 9/05; C25B 13/00; C25B 15/083**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**KH MA MD TN**

(30) Priority: **19.03.2021 GB 202103893**

(62) Document number(s) of the earlier application(s) in
accordance with Art. 76 EPC:
**22717530.4 / 4 308 749**

(71) Applicant: **Supercritical Solutions Ltd
London W5 1HS (GB)**

(72) Inventors:
• **RUSS, Michael
London, W5 1HS (GB)**
• **GOBAILLE-SHAW, Gael Peter Abraham
London, W5 1HS (GB)**

(74) Representative: **Haseltine Lake Kempner LLP
One Portwall Square
Portwall Lane
Bristol BS1 6BH (GB)**

Remarks:
This application was filed on 30-04-2025 as a
divisional application to the application mentioned
under INID code 62.

(54) **AN ELECTROLYSER**

(57) There is disclosed an electrolyser (10, 20, 50) for operation at supercritical conditions, in which chambers (200, 210, 520) for retaining respective fluid reaction products are separated by a porous wall which permits a flow of electrolyte fluid therethrough and which inhibits a reverse flow of the respective reaction product. There is also disclosed a method of operating an electrolyser.

Figure 5

## Description

### Field of Invention

The invention relates to an electrolyser. In particular, the invention relates to an electrolyser for performing electrolysis of supercritical water.

### Background

One use of electrolysis is for the generation of hydrogen for energy storage. Electricity can be used to separate hydrogen and oxygen from water. Stored hydrogen and oxygen can be recombined in a fuel cell to generate electricity. In the meantime, the hydrogen (and oxygen) can be stored and transported. With improving efficiencies of electrolysis and fuel cell technologies, hydrogen energy storage is being proposed as a solution for many energy storage problems, particularly for the storage of energy from renewable energy sources.

The efficiency of electrolysis is dependent on the losses inherent to the design of the electrolytic cell. Such losses can be considered to impart overpotentials in the electrolytic cell, which represent the cell requiring more energy than theoretically thermodynamically required in order to continue the electrolytic reaction.

Overpotentials can arise owing to a number of different factors. For example, the pre-eminent method of electrolysis of water relies on the use of a polymer electrolyte membrane (PEM electrolysis) which separates the cathode and anode to prevent mixing of hydrogen and oxygen reaction products, while permitting ion transport. However, the presence of a PEM membrane introduces an overpotential into the system.

Further overpotentials are introduced owing to the formation of reaction product bubbles (e.g. hydrogen and oxygen bubbles) that reside on and occlude the electrode surfaces, and owing to the presence of an electrolyte (e.g. in an electrolyte fluid surrounding the electrodes).

It is desirable to reduce the overpotentials associated with electrolysis.

### Summary

According to a first aspect there is provided an electrolyser for performing continuous electrolysis of an electrolyte fluid, comprising:

first and second electrodes;
an inlet chamber disposed between the electrodes and configured to receive a flow of electrolyte fluid;
a retention chamber associated with one of the electrodes for retaining a fluid reaction product generated at the respective electrode, the retention chamber having an outlet to discharge the respective fluid reaction product;
a porous wall separating the inlet chamber and the retention chamber, wherein the porous wall is configured to permit electrolyte fluid to flow from the inlet chamber to the retention chamber, and is configured to inhibit return flow of the respective fluid reaction product from the retention chamber into the inlet chamber.

The expression "continuous electrolysis" refers to an electrolysis process in which an inlet electrolyte fluid is provided to a chamber for an electrolysis reaction simultaneously with reaction products (and any residual electrolyte fluid) being discharged from the chamber, as opposed to a batch process in which electrolysis is performed using an electrolyte fluid which is not replenished during the reaction. The expression "reaction" as used herein refers to electrolysis, and in the context may refer to a half-reaction of electrolysis at a respective electrode.

By separating the inlet chamber and the retention chamber with a porous wall that inhibits a return flow of the respective reaction product, the electrolyser provides a way to separate the reaction products generated at the respective electrodes without relying on an ion exchange membrane (which membranes can otherwise introduce losses and overpotentials into the operation of an electrolyser, such as a polymer-electrolyte membrane, PEM). As the porous wall is sufficiently porous to pass fluid flow through it, it inherently also permits ion exchange in either direction.

By permitting continuous flow of electrolyte fluid between the inlet chamber and the retention chamber, the porous wall places the inlet chamber and retention chambers in fluid communication with each other such that the pressures in the respective chambers are linked. As compared with arrangements which prevent fluid communication between such chambers, this may prevent an excessive pressure difference becoming established over the wall that may deform or otherwise damage the wall and the integrity of the electrolyser. Such a risk of damage may be particularly pronounced when operating at high pressure, such as when the electrolyte fluid is maintained at a supercritical pressure. Accordingly, the provision of a porous wall to separate the chambers which retain the respective reaction products may protect or improve the structural integrity of the electrolyser, particularly for high pressure operation.

The porous wall may be configured to inhibit return flow of the respective fluid reaction product from the retention chamber into the inlet chamber when there is no pressure difference over the porous wall and/or when there is a pressure drop over the porous wall from the inlet chamber to the retention chamber.

In the absence of a pressure difference over the porous wall, pressure differences in the electrolyser do not provide a motive force for fluid to flow through the porous wall. The porous wall may provide a resistance to flow that prevents a reaction product retained in the retention chamber from flowing back to the inlet chamber. A pressure drop over the porous wall provides a resistance to flow within the retention chamber returning to the inlet chamber, as such flow would go against the pressure gradient. This may be referred to as inhibiting reverse flow of a fluid reaction product by a pressure gradient, or by a pressure-driven flow over the porous wall.

It may be that the porous wall and a respective one of the electrodes are provided by a compound porous electrode separating the inlet chamber and the retention chamber, the compound porous wall having an inlet side adjacent to the inlet chamber and an outlet side adjacent to the retention chamber. It may be that the electrode is provided by an electrocatalytic region of the compound porous electrode.

The electrocatalytic region may be a sub-region of the compound porous region.

The electrocatalytic region may comprise an electrocatalyst suitable for catalysing a half-reaction of electrolysis of the electrolyte fluid, whereby the electrocatalytic region is electrocatalytically active. The electrolysis reaction may be electrolysis of water or an aqueous (water-based) electrolyte fluid.

The electrocatalytic region may comprise the electrocatalyst at an electrolyte interface of the electrocatalytic region with the electrolyte fluid (i.e. a surface region of the electrocatalytic region adjacent to the electrolyte fluid in use). For example a surface region of the electrocatalytic region at the electrolyte interface of the electrocatalytic region may comprise the electrocatalyst. The surface region may be a region of the electrocatalytic region which is adjacent the electrolyte fluid at the electrolyte interface. The surface region may have a thickness of $1\mu m$ from the electrolyte interface.

For a porous electrocatalytic region the electrolyte interface may comprise an internal surface (or surfaces) of pores or channels of the porous region. The electrocatalytic region may comprise a matrix (or body) and the electrocatalyst may be provided as a coating over the matrix (or body) which defines the electrolyte interface. Otherwise, the matrix (or body) of the electrocatalytic region may comprise the electrocatalyst and define the electrolyte interface, for example in the absence of a coating that forms the electrolyte interface.

The electrocatalytic region may comprise a coating or layer of an electrocatalyst which defines the outlet side of the compound porous electrode, such that the electrolyte interface of the electrocatalytic region comprises the outlet side of the compound porous electrode and optionally a portion of the internal surface (or surfaces) of pores or channels that extend through the coating or layer. References herein to coating may be by any suitable process, for example by a CVD (chemical vapour deposition) process, a sputtering process (such as magnetron sputtering) or by electroplating.

It may be that when a coating is applied to an outer surface of a porous structure (e.g. a porous matrix structure) as described herein, the coating adopts the porosity of the porous structure, since the coating may only coat the physical surfaces of the porous structure at the respective surface, and may not extend across (i.e. bridge) pores in that surface so as to close them.

At the electrolyte interface (for example, in the surface region), the electrocatalytic region may comprise at least 50 wt.% of the electrocatalyst, for example at least 80 wt.%, at least 90 wt.% or may substantially consist of the electrocatalyst. When a coating defines the electrolyte interface of the electrocatalytic region, the coating may comprise at least 50 wt.% of the electrocatalyst, for example at least 80 wt.%, at least 90 wt.% or may substantially consist of the electrocatalyst.

A mass loading of the electrocatalyst at the electrolyte interface when the electrocatalyst is provided as a coating may be at least 0.001 mg/cm$^{-2}$, for example 0.001-10, for example 0.01-1.

The electrocatalytic region may be embedded within the compound porous electrode so that it does not extend to the inlet side. Providing the electrode as part of a compound porous electrode may provide a particularly simple mode of manufacture and assembly of the electrode and porous wall in the electrolyser, while still ensuring that the respective fluid reaction product is only generated at locations which are downstream from the inlet chamber. The mode of manufacture and assembly may be particularly simple as it may not be necessary to additionally coat or otherwise provide an electrocatalytic region (e.g. as a mesh electrode) onto the porous wall to provide an electrode. For example, the compound porous wall may be made by an additive manufacturing or powder pressing process (such as hot pressing (HP) or cold isostatic pressing, or hot isostatic pressing (HIP)) so as to incorporate the electrocatalytic region.

The compound porous electrode may comprise a passive region which is configured to be less electrocatalytically active than the electrocatalytic region (for the respective half-reaction of electrolysis of the electrolyte fluid), or to inhibit the respective half-reaction.

A rate of the respective half-reaction in the passive region (as a whole) may be lower than a rate of the respective half-reaction in the electrocatalytic region (as a whole), and this may make the porous region less electrocatalytically active than the electrocatalytic region. The rate of the respective half-reaction may be: a rate of generation of the respective fluid reaction product (i.e. hydrogen or oxygen depending on the electrode) in the respective region, for example a mass of the fluid reaction product generated per unit time (e.g. g/s of hydrogen); or the current density integrated over the electrolyte interface of the respective region (e.g. in A). The rate for the respective region as used herein is the total rate for the respective region, rather than a specific rate per unit volume, thickness, mass, or surface area (e.g. of the compound porous electrode or of the electrolyte interface of the respective region of the compound porous electrode) etc. The passive region and the electrocatalytic region may be configured so that the rate of the respective half-reaction in the passive region (as a whole) may be lower than a rate of the respective half-reaction in the electrocatalytic region (as a whole). For example, the rate in the passive region may be no more than 50% of the rate in electrocatalytic region, no more than 20%, nor more than 10%, no more than 5% or no more than 1%. The rate in the passive region may be substantially zero.

It may be that the passive region comprises less of an electrocatalyst (for electrocatalysing the respective half-reaction of electrolysis of the electrolyte fluid) than the electrocatalytic region, for example less of the electrocatalyst of the electrocatalytic region; and/or any electrocatalyst of the passive region may be less electrocatalytically active for the respective half-reaction than the electrocatalyst of the electrocatalytic region.

The passive region may comprise less of the electrocatalyst of the electrocatalytic region at an electrolyte interface of the passive region with the electrolyte fluid (i.e. in a surface region of the passive region which contacts the electrolyte fluid in use) than there is at the electrolyte interface of the electrocatalytic region (i.e. in the surface region of the electrocatalytic region). In other words, a material composition of the passive region at the electrolyte interface of the passive region (i.e. in the surface region) may comprise less of the electrocatalyst than a material composition of the electrocatalytic region at the respective electrolyte interface. For example, it may comprise less than 5 wt.% of the electrocatalyst, less than 1 wt.% of the electrocatalyst, of less than 0.1 wt.% of the electrocatalyst. The composition of the passive region at the electrolyte interface may be assessed by reference to a surface region of the passive region adjacent to the electrolyte fluid in use, for example having a thickness of $1\mu m$.

For a porous passive region, the electrolyte interface may comprise an internal surface of pores of channels of the porous region. The passive region may comprise a matrix (or body) which defines the electrolyte interface, the matrix (or body) comprising less than 5 wt.% of the electrocatalyst, less than 1 wt.% of the electrocatalyst, or less than 0.1 wt.% of the electrocatalyst. The passive region may comprise a matrix (or body) provided with a passivating coating which defines the electrolyte interface, and which is less electrocatalytically active than the matrix (or body), the passivating coating having less than 5 wt.% of the electrocatalyst, less than 1 wt.% of the electrocatalyst, or less than 0.1 wt.% of the electrocatalyst. Example passivating coatings which may be applied are described elsewhere herein.

The surface region of the electrocatalytic region may have a first composition. The surface region of the passive region may have a second composition. A nominal electrode for conducting the respective half-reaction of electrolysis of the electrolyte fluid in a nominal cell may have a surface region which is adjacent the electrolyte fluid at an electrolyte interface of the nominal electrode. The surface region may have a thickness of $1\mu m$ from the electrolyte interface.

The first and second compositions may be selected so that, when the surface region of the nominal electrode has the first composition, the overpotential required to reach a current density of 10 mA cm$^{-2}$ at the nominal electrode in the nominal cell is no more than half, no more than one third, or no more than one fifth of the overpotential required to reach the current density of 10 mA cm$^{-2}$ at the nominal electrode in the nominal cell when the surface region of the nominal electrode has the second composition, at a nominal pressure and temperature, for example 22.5 MPa and 375°C.

A respective half-reaction may be inhibited by the passive region being provided as a passivating layer or coating as discussed elsewhere herein.

Any of the above statements relating to the electrocatalytic region, the passive region, and the properties of those regions as electrocatalytically active or less electrocatalytically active regions may be applied to any of the examples discussed below in the detailed description.

It may be that the electrocatalytic region comprises a coating or layer comprising an electrocatalyst, the coating or layer defining the outlet side of the compound porous electrode.

The electrocatalyst may be suitable for catalysing a half-reaction of electrolysis of the electrolyte fluid as described above, with suitable electrocatalysts being described below. When the electrocatalytic region comprises a layer defining the outlet side of the compound porous electrode, the layer may be provided as a mesh attached to the porous wall, irrespective of how the porous wall is manufactured. For example, the mesh may be formed of an expanded foil, such as a foil comprising the electrocatalyst or an electrically conductive foil provided with the electrocatalyst as a coating. Examples of suitable electrically conductive foils or meshes include expanded copper, stainless steel or titanium foils or meshes, with an electrocatalytic coating such as an Ni coating (although other suitable electrocatalysts are described elsewhere herein).

It may be that the compound porous electrode comprises a passive region which is configured to be less electrocatalytically active than the electrocatalytic region (for the respective half-reaction of electrolysis of the electrolyte fluid), or to inhibit the respective half-reaction. The passive region may be as defined in any of the statements above with respect to the first aspect of the invention, including in regard to comparative definitions with respect to the electrocatalytic region. It may be that the passive region is porous, and it may be that the electrocatalytic region is only defined by the coating or layer comprising the electrocatalyst, and which defines the outlet side of the compound porous electrode. Thereby, it may be that the electrolyte interface of the passive region comprises the internal surface (or surfaces) of pores or channels extending through the porous passive region, and that the electrolyte interface of the electrocatalytic region does not extend to internal surfaces of pores or channels of the compound porous electrode. In such an arrangement, the electrocatalytic region is substantially entirely defined towards the outlet side of the compound porous electrode.

Otherwise, it may be that the electrocatalytic region additionally comprises a porous region of the compound porous electrode where the electrolyte interface of the electrocatalytic region comprises an internal surface (or surfaces) of pores or, channels of the porous region. The electrocatalytic region may comprise a matrix (or body) and the electrocatalyst may be provided as a coating over the matrix (or) body to define the electrolyte interface comprising the internal surface (or surfaces). For example, the coating may be formed simultaneously with the coating defining the outlet side of the compound porous electrode. For example the coating may be applied internally and externally on the matrix material. A passivating coating may then be applied as defined below.

Whether a matrix material of the compound porous electrode defines the electrolyte interface of the electrocatalytic region or not (i.e. whether or not the matrix material prior to application of any coating is intended to be electrocatalytically active), the matrix material may be electrically conductive and configured to serve as a portion of the electrode and/or part of an electrical pathway in an electrolysis circuit defined by the electrolyser and including the electrode.

The compound porous electrode may have an anisotropic porous structure defined by a plurality of inclined channels extending through the electrocatalytic region and/or a passive region (where present)

It may be that the compound porous electrode extends linearly along a longitudinal axis and has an orthogonal thickness direction from the inlet side to the outlet side. The compound porous electrode may have an anisotropic porous structure defined by a plurality of inclined channels configured to permit electrolyte fluid to flow from the inlet chamber to the retention chamber, each being inclined with respect to both the longitudinal axis and the thickness direction. The inclined channels may extend through at least part of the electrocatalytic region.

A compound porous electrode that extends linearly along the longitudinal axis may maximise a surface area for the electrolysis reaction while minimising an installed volume and/or void space between adjacent electrolysers.

When the electrolyser is provided in an electrolysis installation in accordance with the second aspect, the longitudinal axis may be oriented vertically so that the inclined channels are inclined with an upward component (i.e. upwardly) towards the retention chamber.

The compound porous electrode may be axisymmetric about the longitudinal axis, such that the thickness direction at any point around the longitudinal axis is a local thickness direction corresponding to a radial direction about the longitudinal axis.

The electrolyser may be implemented with an axisymmetric (e.g. cylindrical) compound porous electrode, in which case the longitudinal axis may be the axis passing through a centroid of the cross sections of the compound porous electrode. The electrolyser may be implemented with a non-axisymmetric compound porous electrode, such as a planar electrode extending linearly along both a lateral axis and longitudinal axis. The extent of the compound porous electrode along the longitudinal axis may be relatively greater than the extent along the lateral axis, such that it is elongate along the longitudinal axis. The inclined channels are thought to inhibit return flow of the respective fluid reaction product when oriented so that the longitudinal axis is substantially vertical and the inclined channels are inclined upwardly towards the retention chamber. In particular, in an electrolysis reaction the fluid reaction products (oxygen and hydrogen) have a lower density than water (or any suitable electrolyte fluid), such that buoyancy forces on those fluid reaction products will tend to drive those fluid reaction products upward and thereby along the respective channels towards the retention chamber.

A channel may be inclined relative to an axis or direction when a centroidal axis of the channel is inclined relative to the respective axis or direction.

It may be that each channel has a diverging cross section along the thickness direction. Without wishing to be bound by theory, it is thought that the diverging cross section aids continued flow of a mixture of the electrolyte fluid and the lower density fluid reaction product along the thickness direction as a proportion of the fluid reaction product within the mixture increases owing to continued reaction within the electrocatalytic region. The diverging cross section may be considered to accommodate expansion of the mixture along the thickness direction, thereby inhibiting a return flow of the fluid reaction product.

It may be that the inlet side of the compound porous electrode is defined by a passive region which is configured to be less electrocatalytically active than the electrocatalytic region or to inhibit a respective half-reaction of electrolysis or; and/or the passive region may comprise a passivating coating defining the inlet side of the compound porous electrode.

The passive region may be as defined in any of the statements above with respect to the first aspect of the invention, including in regard to comparative definitions with respect to the electrocatalytic region.

Accordingly, the respective half-reaction of electrolysis may be inhibited or prevented from occurring on the inlet side of the compound porous electrode, such that the reaction may only take place or predominantly takes place once the electrolyte fluid (or respective ions) has passed into one of the inclined channels within the electrocatalytic region, or passed through the inclined channels to reach an electrocatalytic region defining the outlet side of the compound porous electrode. It may be that any fluid reaction product generated within the retention chamber (for example by reaction with an electrocatalytic region defining the outlet side of the compound porous electrode) may be inhibited from flowing back through the compound porous electrode as this may require the lower-density fluid reaction product to flow against buoyancy forces downwardly through the channels. This may be referred to as inhibiting reverse flow of a fluid reaction product by downstream-biased buoyancy effects, since buoyancy forces within the inclined promote downstream flow to the retention chamber rather than upstream flow to the inlet chamber. Further, a fluid reaction product within the retention chamber would have to flow against such buoyancy forces to flow back to the inlet chamber.

When the passive region comprises a passivating coating defining the inlet side of the compound porous electrode, the passivating coating may be a dielectric coating, for example an oxide coating (e.g. an inorganic metal oxide coating), such as silica ($SiO_2$), zinc oxide (ZnO), or zirconia ($ZrO_2$). All references herein to passivating or providing a passivating coating may comprise applying a dielectric coating, such as a coating of the example materials described in the preceding sentence.

By passivating the inlet side of the compound porous electrode, the respective fluid reaction product generated at the electrode may only be generated at locations which are downstream from the inlet chamber (e.g. within the compound porous electrode in an electrocatalytic region or on the outlet side of the compound porous electrode), rather than on the inlet side which delimits the inlet chamber. This may inhibit the respective fluid reaction product being generated in or migrating to the inlet chamber.

It may be that each channel has an average diameter along its length of between 25-150 $\mu$m.

As discussed above, the compound porous electrode may comprise a matrix (or body) and an coating comprising an electrocatalyst and which defines an interior surface of each channel, for example as formed by electroplating the electrocatalyst onto the interior surface of each channel. For example, a matrix (or body) for the compound porous electrode may be formed by additive manufacture and electroplated to provide the electrocatalytic coating. A passivating coating may then be provided on one side to define the inlet side of the compound porous electrode, for example by CVD (chemical vapour deposition) of a passivating substance, such as Alumina ($Al_2O_3$), Zirconia ($ZrO_2$) or Titania ($TiO_2$)

In another example, the channels may be formed by removal of material from a workpiece to form the porous wall or compound porous electrode, for example by a laser drilling process.

It may be that there is a flow path for electrolyte fluid from the inlet chamber to the retention chamber, the flow path comprising: an upstream portion through a passive region of the porous wall; and a downstream portion through, or adjacent to, an electrocatalytic region of the electrode associated with the retention chamber. The passive region may be configured to be less electrocatalytically active than the electrocatalytic region, or to inhibit a respective half-reaction of electrolysis. The electrocatalytic region may be as defined in any of the statements above with respect to the first aspect of the invention. The passive region may be as defined in any of the statements above with respect to the first aspect of the invention, including in regard to comparative definitions with respect to the electrocatalytic region. As such, all flow reaching the downstream portion first passes through the upstream portion. In other words, the porous wall (which may be a part of a compound porous electrode as defined in any of the statements above with respect to the first aspect of the invention) may have an inlet side opposing the other electrode (e.g. an inlet side of the compound porous electrode), and the electrocatalytic region may have an ion exchange boundary for ion exchange which opposes the other electrode and is spaced apart from the inlet side. In some implementations, the ion exchange boundary may be embedded within a compound porous electrode as defined in any of the statements above with respect to the first aspect of the invention. As a corollary, the electrocatalytic region may be described as being within the compound porous electrode and not extending to the inlet surface. Herein, a component, surface or boundary "opposes" another entity when it faces towards it.

The passive region and the electrocatalytic region may be configured such the passive region contributes to the resistance to flow through the passive region and the electrocatalytic region, whether with a pressure difference over the porous wall from the inlet chamber to the retention chamber, or in the absence of a pressure difference. This may be referred to as inhibiting reverse flow of a fluid reaction product by upstream flow resistance of a passive region.

It may be that the passive region of the porous wall has a thickness $t_w$ and a permeability $k_w$; the downstream portion may be through an electrocatalytic region having a thickness $t_e$ and a permeability $k_e$. A relative flow permeability of the passive region of and the electrocatalytic region may satisfy the inequality:

$$\frac{k_w t_e}{k_e t_w} \leq 5$$

In other words, the relative flow permeability of the passive region and the electrocatalytic region is calculated as the ratio of their respective permeabilities multiplied by the inverse ratio of their thicknesses.

The relative flow permeability may be no more than 2, for example no more than 1, no more than 0.5 or no more than 0.2. The relative flow permeability is related to the contribution that each region makes to the overall flow resistance along the flow path. When there is a pressure difference between the inlet chamber and the retention chamber which drives a flow of electrolyte fluid along the flow path and establishes a pressure drop along the flow path, the relative permeability is related to the proportional pressure drop over the respective regions. For example, a relative permeability of less than 5 corresponds to the pressure drop over the passive region of the porous wall providing at least one sixth of the total pressure drop or flow resistance along the upstream and downstream portions of the flow path, whereas a relative permeability of 0.2 corresponds to the pressure drop over the passive region being 5 times greater than the pressure drop over the electrocatalytic region of the electrode. Accordingly, the passive region provides a significant amount of the overall flow resistance and thereby inhibits a fluid reaction product generated at the electrocatalytic region of the electrode from returning to the inlet chamber.

In some implementations of the electrolyser the porous wall and the electrode may be provided as a unitary structure (i.e. as a compound porous electrode), such that the upstream and downstream portions of the flow path are contiguous with each other and all flow entering the retention chamber first passes through both the passive region of the porous wall and then through the electrocatalytic region of the electrode. It will be appreciated that the porous wall can overlap with the electrode (i.e. the electrocatalytic region may be porous).

The passive region (e.g. of the porous wall), the electrocatalytic region of the electrode, or a compound porous electrode which may provide such regions may comprise (i) an unstructured porous medium, or (ii) a structured array of channels that provide porosity to the wall, electrode or compound member respectively.

For example, a structured array of channels may be provided in an otherwise non-porous material to provide porosity, for example by forming the respective component by an additive manufacturing process so that a structured array of channels is present within the component, and/or by removing material from the component to provide such channels (e.g. by a laser drilling process). The expression "structured channels" is intended to denote that a plurality of channels are oriented with respect to each other in a predetermined pattern (e.g. uniformly spaced apart). The structured channels may be discrete (i.e. non-intersecting channels). The structure channels may be generally linear. A structured array of channels may generally provide the component with anisotropic porosity, and the present disclosure extends to such components having anisotropic porosity.

The expression "unstructured porous medium" is used herein to refer to porous media having a network of pores which permit flow through the material, for example defining a network of convoluted (e.g. non-linearly extending) channels. The expression "unstructured" relates to the particular flow paths through the material being generally irregular. For example, an unstructured porous medium may be provided by sintering a bed of build material (e.g. powdered or granular material) in an additive manufacturing process so that voids (e.g. randomly distributed voids) remain in the fused product, or similarly by a powder pressing process (such as hot pressing (HP), cold isostatic pressing or hot isostatic pressing(HIP)). An unstructured porous medium may have isotropic porosity, or otherwise be referred to as an isotropic porous medium or having an isotropic porous structure.

A flow rate through a porous region (i.e. of a porous wall or of a compound porous electrode) as disclosed herein (or by corollary, a flow resistance of the respective region) may be a function of its permeability k. A volumetric flow rate through a porous wall may be a function of the area A of the wall, the permeability k of the porous wall, the dynamic viscosity of the fluid, the applied pressure difference and the thickness, according to Darcy's law. The permeability may be varied by suitable selection of porosity, pore size (or pore size distribution). A porous region as described herein may have a suitable permeability selected to permit electrolyte flow at a desired flow rate for the given operating conditions (e.g. pressure and temperature) and geometry of the porous region. For example, it may be that a, or any porous region as described herein has a permeability of between 0.01 to 10 $\mu m^2$, for example 0.05-5 $\mu m^2$, 0.1-2 $\mu m^2$, or 0.5-1.5 $\mu m^2$, for example 0.7 $\mu m^2$. The porous region may have an average pore size of between 2 and 20 $\mu m$, for example between 2-10 $\mu m$, or between 5-10 $\mu m$.

It may be that the first and second electrodes have respective ion exchange boundaries that oppose each other, each ion exchange boundary being an electrocatalytic surface of the respective electrode or a boundary of an electrocatalytic region of the respective electrode. It may be that for at least 50% of a surface area of one of the ion exchange boundaries, there is a substantially constant shortest distance of separation to the opposing ion exchange boundary; and/or it may be that the opposing ion exchange boundaries are substantially locally parallel with each other.

Opposing ion exchange boundaries are boundaries of opposing electrodes that face towards each other for ion exchange (e.g. through an electrolyte fluid), for example boundaries of electrocatalytic regions of the respective electrodes.

There may be a substantially constant shortest distance of separation for at least 80%, at least 90% or substantially all of the surface area of the respective ion exchange boundary.

There may be opposing surfaces delimiting the inlet chamber, each associated with a respective one of the first and second electrodes. When a compound porous electrode delimits the inlet chamber, this may be a surface of a passive region of the compound porous electrode. It may be that for at least 50% of a surface area of one of these surfaces, there is a substantially constant shortest distance of separation to the opposing surface. It may be that the surfaces are substantially locally parallel with each other.

It is desirable to both minimise a separation between opposing ion exchange boundaries, and for it to be substantially constant so as to provide for a relatively uniform rate of reaction along the extent of the electrodes.

The expression "locally parallel" is intended to mean that, where one or both of the ion exchange boundaries are non-planar, a plane aligned with a local shortest vector of separation from any point on one of the boundaries to the other boundary intersects the opposing boundaries to define substantially parallel lines. For example, the opposing ion exchange boundaries may be cylindrical or conical and concentric, such that the boundaries may not be parallel with each other, but a plane locally intersecting the two boundaries along a local vector of shortest separation defines two respective lines which are substantially parallel with one another.

The first and second electrodes may each extend linearly, parallel to a longitudinal axis and may each be elongate along the longitudinal axis. Along a longitudinal extent of the electrodes where they are co-extensive for ion exchange, a cross-section of the electrolyser may be substantially constant.

By configuring the electrolyser to have a constant cross-section where the electrodes are co-extensive for ion exchange, the configuration of the electrolyser is adaptable to easily increase or decrease the elongate length of the electrodes (and/or the electrolyser) to increase the capacity of the electrolyser (e.g. as may be measured by a reaction rate, a flow-rate for a given reaction efficiency (e.g. the proportion of an electrolyte fluid which is reacted to produce the respective reaction products), or power input measured in kW).

The first and second electrodes may oppose each other, for ion exchange, along a co-extensive longitudinal extent over which there is an average shortest distance of separation between opposing ion exchange boundaries of the electrodes. A ratio the co-extensive elongate extent to the average shortest distance of separation may be no less than 5, for example no less than 10.

The ratio corresponds to the slender configuration of the electrolyser, and in particular the slender configuration of a separation gap between the opposing electrodes. While it is generally known to be desirable to reduce the separation distance between opposing electrodes, the elongate extent of the electrodes along which this is possible in previously considered arrangements may be limited by the means for keeping the reaction products generated at the respective electrodes separate (e.g. by way of an ion-exchange membrane or a laminar-flow buffer - i.e. a flow between the electrodes which maintains laminar conditions to prevent migration of reaction products from one side to the other). In previously-considered arrangements, those means for keeping the reaction products separate tend to either involve an ion-exchange membrane or are hard to maintain over any appreciable elongate extent. The invention provides for the electrodes to be separated by a slender separation gap - i.e. one that has an elongate extent (along which the electrolyte flows) that is far greater than the separation distance between the electrodes. Without wishing to be bound by theory, it is thought that this may be enabled by the use of a porous wall which provides a resistance to flow reversal from a retention chamber to the inlet chamber, thereby preventing flow reversal without relying on a high flow inertia from the inlet chamber to the retention chamber. A high flow inertia may be achieved by providing a relatively small flow area, which would tend to reduce the surface area of a porous wall. By using a porous wall that inhibits flow reversal (e.g. by effecting a pressure drop over the wall or otherwise as described herein), rather than relying on high flow inertia, the flow area for a given mass flow through a porous wall can be increased. This permits the separation gap between the electrodes to become slender in nature, thereby increasing a ratio between each respective surface area of the electrodes to the volume of the electrolyte fluid within the separation gap. A rate of electrolysis (e.g. as may be measured by reference to the proportion of a volume of electrolyte fluid which is reacted as it passes through the electrolyser) tends to increase as these ratios increase (i.e. the ratios between the respective surface areas of the electrodes to the volume of the electrolyte fluid within the separation gap between them).

The retention chamber may be configured to receive electrolyte fluid only through the respective porous wall.

When the electrolyser is configured so that all flow through the porous wall interacts with the respective electrode. (e.g. by providing a compound porous electrode), configuring the electrolyser so that the retention chamber receives electrolyte fluid only through the respective porous wall ensures that all flow entering the retention chamber interacts with the respective electrode. Further, by providing that electrolyte fluid can only enter into the retention chamber via the porous wall, the flow regime into the retention chamber (e.g. the flow rate) may be reliably controlled by controlling the properties of the porous wall and/or properties which influence the flow rate of electrolyte fluid through the porous wall. In other arrangements, there may be one or more inlets to the retention chamber which are not through the porous wall.

It may be that the electrode associated with the retention chamber is an anode, whereby in use with an aqueous electrolyte fluid: hydrogen produced at the other electrode which is a cathode is inhibited from migrating to the retention chamber associated with the anode by oxidation at the anode; and oxygen produced at the anode is inhibited from migrating to the inlet chamber through the porous wall.

The expression "an aqueous electrolyte fluid" as used in the present disclosure may refer to any solution comprising at least 50 % by weight of water and is suitable for an electrolysis reaction. Example aqueous electrolyte fluids are discussed elsewhere herein. The electrolyte fluid may comprise other inorganic solvents in addition to water.

The electrolyser may comprise power supply terminals coupled to the electrodes so that the electrode associated with the retention chamber is an anode, and so that the other electrode is a cathode.

Alternatively, the electrode associated with the retention chamber may be a cathode, and the other electrode may be an anode.

In the case that the electrolyser comprises two retention chambers each associated with a respective one of the first and second electrodes, it will be appreciated that the above feature relates to just one of the retention chambers, such that one of the retention chambers is associated with an electrode which is an anode, and the other retention chamber is associated with an electrode which is a cathode.

One of the inlet chamber and the retention chamber may be an outer annular chamber and the other may be an inner core chamber surrounded by the outer annular chamber.

The outer annular chamber and the inner core chamber may be concentrically arranged. The annular and core configuration may provide a particularly compact configuration for the electrolyser while permitting a relatively high ratio between the surface areas of the respective electrodes and the volume of the separation gap between them. The annular and core configuration may permit the use of cylindrical structures which are relatively more resistant to deformation under radially-outward pressure forces (e.g. as compared to rectilinear structures, for the same structural mass and characteristic dimension).

Alternatively, the inlet chamber and the outer chamber may have other configurations, for example they may have substantially rectangular cross-sections (e.g. in planes normal to a longitudinal axis of the electrolyser).

The retention chamber may be associated with the first electrode, the outlet of the first retention chamber being a first outlet. The second electrode may be a flow-past electrode defining a wall of the inlet chamber. The inlet chamber may be for retaining a fluid reaction product generated at the second electrode, and has a second outlet to discharge the respective fluid reaction product.

The second electrode may define a wall of the inlet chamber which opposes the porous wall associated with the first electrode.

It may be that the electrolyser comprises: a first retention chamber associated with the first electrode for retaining a fluid reaction product generated at the first electrode and discharging it through a first outlet; and a second retention chamber associated with the second electrode for retaining the fluid reaction product generated at the second electrode and discharging it through a second outlet. It may be that the electrolyser comprises first and second porous walls each separating the inlet chamber and a respective one of the retention chambers.

In other words, the retention chamber described in the preceding statements associated with the first aspect is one of the first and second retention chambers of the electrolyser, and the porous wall described in the preceding statements is one of first and second porous walls of the electrolyser.

Each retention chamber and each porous wall may have any of the features described above with respect to the first aspect of the invention. For example, each porous wall together with a respective one of the electrodes may be provided by a compound porous electrode, such that the electrolyser comprises two compound porous electrodes having any of the features described above with respect to the first aspect of the invention.

It may be that the first retention chamber and/or the first porous wall have a different configuration to the second retention chamber and/or the second porous wall respectively, for example the first retention chamber may have a first combination of any features described above with respect to the first aspect of the invention, whereas the second retention chamber may have a different second combination of any features described above with respect to the first aspect of the invention. Accordingly, a statement defining an electrolyser may be reformulated to define, amongst other things: a first retention chamber, a first porous wall (optionally provided by a first compound porous electrode), a second retention chamber, and a second porous wall (optionally provided by a second compound porous electrode), with the first and second retention chambers and/or the first and second porous walls being defined by different combinations of any respective features describe above with respect to the first aspect of the invention.

It may be that the inlet chamber has no outlet other than to the retention chambers via respective porous walls. In such an arrangement, the provision of flow to the inlet chamber may drive a flow of electrolyte fluid through the respective porous walls even in the absence of a significant pressure drop over each of the respective porous walls, since electrolyte fluid entering the inlet chamber must displace other electrolyte fluid out into the retention chambers. Nevertheless, as the porous wall presents more of a restriction to flow than the open space within the respective chambers, in steady state conditions there will naturally be a pressure gradient over the wall, such that the path of least resistance for fluid downstream of each retention chamber is to the respective outlet, thereby effectively inhibiting reverse flow of a fluid reaction product to the inlet chamber. This may be referred to as inhibiting reverse flow of a fluid reaction product by a displacing flow of electrolyte fluid.

It may be that the inlet chamber is an annular chamber; one of the first and second retention chambers is an inner core chamber surrounded by the inlet chamber; and the other of the first and second retention chambers is an outer annular chamber that surrounds the inlet chamber.

The electrolyser may further comprise a controller configured to control flow control equipment to control thermodynamic and/or flow rate conditions within the electrolyser.

For example, the flow control equipment may comprise one or more discharge valves downstream of the first and second outlets as described herein. Such valves may be part of the electrolyser or may be installed together with the electrolyser at (or in) an electrolysis installation. The flow control equipment may comprise a heater configured to heat electrolyte fluid upstream of the inlet chamber. The heater may be part of the electrolyser or may be installed together with it at (or in) an electrolysis installation. The flow control equipment may comprise a compressor configured to compress the electrolyte fluid upstream of the inlet chamber. The compressor may be part of the electrolyser or may be installed together with it at (or in) an electrolysis installation.

The controller may be configured to control the flow control apparatus to maintain supercritical pressure and/or temperature conditions for the electrolyte fluid within the inlet and retention chambers, such as at least 22 MPa pressure and at least 374°C for an aqueous electrolyte fluid. Although some examples discussed herein relate to operation at supercritical conditions and the appended claims refer to an electrolyser or electrolyser installation in which a controller is configured to maintain supercritical conditions, the disclosure envisages electrolysers and electrolyser installations and methods of operation according as described herein (e.g. according to any combination of features envisaged in the present disclosure) and in which there is no such controller or control to maintain supercritical conditions for the electrolyte fluid.

The controller may be configured to control the flow control apparatus to main supercritical pressure and/or temperature conditions for the electrolyte fluid within the inlet and retention chambers, such as between 22 and 27 MPa and between 374 and 550 °C., for example between 374 and 400°C. By maintaining supercritical conditions, losses associated with an electrolysis reaction may be reduced by (i) inhibiting formation of bubbles of reaction products on surfaces of the electrodes and/or (ii) increasing the conductivity of an electrolyte fluid for a given electrolyte concentration for a given amount of electrolyte (or vice versa, achieving a suitable conductivity using a relatively lower concentration of electrolyte).

It may be that the electrolyser has a first outlet associated with the first electrode for discharging a fluid reaction product generated at the first electrode; and a second outlet associated with the second electrode for discharging a fluid reaction product generated at the second electrode. It may be that the flow control equipment comprises a first discharge valve and a second discharge valve in fluid communication with the first and second outlets respectively.

The electrolyser may comprise the first discharge valve and the second discharge valve. The first discharge valve and/or the second discharge valve may be variable control valves.

It may be that the first discharge valve is configured to maintain a first target pressure upstream of the valve and the second discharge valve is configured to maintain a second target pressure upstream of the valve. It may be that the first discharge valve and the second discharge valve are configured to maintain different target pressures to cause a pressure drop over the porous wall driving a branch flow of electrolyte fluid through the porous wall from the inlet chamber into the retention chamber. Alternatively, it may be that the first discharge valve and the second discharge valve are configured to maintain the same target pressure, thereby inhibiting a pressure-driven branch flow of electrolyte fluid through the porous wall from the inlet chamber into the retention chamber. It may be that the controller is configured to control the first discharge valve and/or the second discharge valve to maintain the respective target pressure(s).

It may be that the controller is configured to control the first and/or second discharge valves to: maintain a target flow rate or a target composition out of one, or each of, the first and second outlets, based on flow rate data, upstream pressure data and/or composition data received by the controller; and/or maintain a target flow rate ratio between flow out of the first outlet and flow out of the second outlet, based on flow rate data, upstream pressure data and/or composition data received by the controller. The target flow rate ratio may correspond to: a ratio of a total flow rate out of the first outlet and a total flow rate out of the second outlet; or a ratio of a flow rate of a first fluid reaction product out of the first outlet and a flow rate of a second fluid reaction product out of the second outlet.

The controller may be configured to control the first and/or second discharge valves to maintain a respective target flow rate or a respective target composition of flow out of each of the first and second outlets, based on flow rate data and/or composition data received by the controller for a respective discharge flow.

A target flow rate as referred to above may be a total flow rate out of the respective outlet, or it may be a flow rate of a particular component fluid of a mixture flowing out of the respective outlet, for example a flow rate of oxygen within a mixture comprising oxygen and electrolyte fluid, or a flow rate of hydrogen within a mixture comprising oxygen and electrolyte fluid. The target flow rate may be a mass flow rate.

Flow rate data may be determined by a sensor of the electrolyser or of an installation in which the electrolyser is installed. For example, there may be a flowmeter downstream of each respective discharge valve. There may be one or more flowmeters downstream of a separation apparatus within an installation in which the electrolyser is installed. For example, a separation apparatus may separate flow discharged through each outlet into a flow of the respective reaction product and a flow of the electrolyte fluid (or water), and a flowmeter may be installed on the or each outlet of the separator to monitor a flow rate of each component (i.e. the reaction product and the electrolyte fluid). A combination of a discharge valve, a flowmeter for monitoring a flow rate through the respective valve, and a controller which controls the discharge valve based on a signal from the flowmeter may provide a mass flow controller, with the controller controlling the discharge valve based on the signal from the flowmeter to maintain a target flow rate.

Upstream pressure data may be determined by one or more pressures sensors of the electrolyser or of an installation in which the electrolyser is installed, to monitor a pressure of the electrolyte fluid upstream of the valve. For example, a pressure sensor may extend into one or each of the chambers which retain the respective reaction products and configured to send respective pressure signals to the controller, or a differential pressure sensor (which may be a differential pressure transducer) responsive to a pressure difference between the chambers and configured to send a differential pressure signal to the controller. For example, the controller may be calibrated to maintain the or each respective pressure within a respective target range, or to maintain the pressure differential within a target range, in order to maintain target operating conditions (e.g. for example, a target flow rate of one or each respective reaction product through the outlets).

A target composition may be a target proportion of a fluid reaction product within flow discharged through a respective outlet. The composition may be a mass fraction. Composition data may be obtained based on monitoring flow rates of each component of a flow discharged through a respective outlet (i.e. the respective reaction product and the electrolyte fluid).

It may be that the controller does not receive flow rate data or composition data from which a numerical value of a flow rate or component mass fraction can be obtained, but may receive data relating to a flow rate or composition of a flow which may be used in order to control the or each discharge valve such that, with suitable calibration of the controller, a target flow rate, composition or flow rate ratio can be maintained.

It may be that the controller is configured to determine whether there is an excessive amount of the second fluid reaction product in an outlet flow through the first outlet; or configured to determine whether there is an excessive amount of the first fluid reaction product in an outlet flow through the second outlet, based on composition data received at the controller for the respective outlet flow. The controller may be configured to control the first discharge valve and/or the second discharge valve to vary a flow rate through a porous wall of the electrolyser, based on the determination.

For example, the controller may control the first discharge valve and/or the second discharge valve to increase a pressure drop from the inlet chamber to the respective outlet to increase a flow rate through the respective outlet. For example, when the outlet is downstream of a porous wall, it may be that increasing the flow rate through that porous wall inhibits reverse flow of a reaction product through that porous wall (e.g. owing to an inertia of flow through the porous wall).

The controller may be configured to maintain thermodynamic and/or flow rate conditions of the electrolyte fluid through the electrolyser corresponding to a Reynolds number in the inlet chamber being no more than 4000, for example no more than 2300. Controlling the conditions of the electrolyte fluid to meet the above Reynolds number criterion may prevent turbulent and/or transitional mixing within the inlet chamber that may otherwise promote migration of a reaction product from the first electrode across a separation gap between the electrodes towards the retention chamber.

The first and/or second electrode disclosed herein may comprise a respective electrocatalytic region comprising an electrocatalyst (which may otherwise be referred to as an electrocatalytic material), such as an electrocatalyst for electrolysis of water (i.e. for an oxidation or reduction reaction for electrolysis of water).

Suitable electrocatalysts may include one or more elements selected from: noble metals (i.e. Ru, Rh, Pd, Os, Ir, Pt, Au, Ag, Re), d-block transition metals (i.e. Sc, Ti, V, Cr, Mn, **Fe,** Co, Ni, Cu, Zn, Y, Zr, Nb, Mo, Tc, Ru, Rh, Pd, Ag, Cd, Hf, Ta, W, R, Os, Ir, Pt, Au, Hg, Rf, Db, S, Rh, Hs, Mt, Ds, Rg, Cn), f-block lanthanides (i.e. La, Ce, Pr, Nd, Pm, Sm, Eu, Gd, Tb, Dy, Ho, Er, Tm, Yb, Lu), rare earth metals (i.e. Sc, Y, La, Ce, Pr, Nd, Pm, Sm, Eu, Gd, Tb, Dy, Ho, Er, Tm, Yb, Lu), platinum group metals (i.e. Ru, Rh, Pd, Os, Ir, Pt), P, S, C and/or combinations thereof. Said one or more elements may be present in elemental form (e.g. as (substantially) pure metals), in mixtures (e.g. alloys), in compounds (e.g. oxides, hydroxides, nitrides, borides, sulfides, phosphides, carbonates and/or organic compounds such as metal-organic frameworks) and/or incorporated into nanomaterials such as nanoparticles, nanotubes (e.g. carbon nanotubes), nanocages (e.g. fullerenes) and/or nanosheets (e.g. graphene). It may be that the electrocatalytic region of the first electrode comprises (e.g. consists of) an electrocatalyst comprising (e.g. consisting essentially or consisting of): Ru, Rh, Pd, Os, Ir, Pt, Au, Ag and/or Re; Sc, Ti, V, Cr, Mn, Fe, Co, Ni, Cu, Zn, Y, Zr, Nb, Mo, Tc, Ru, Rh, Pd, Ag, Cd, Hf, Ta, W, R, Os, Ir, Pt, Au, Hg, Rf, Db, S, Rh, Hs, Mt, Ds, Rg and/or Cn; La, Ce, Pr, Nd, Pm, Sm, Eu, Gd, Tb, Dy, Ho, Er, Tm, Yb and/or Lu; Sc, Y, La, Ce, Pr, Nd, Pm, Sm, Eu, Gd, Tb, Dy, Ho, Er, Tm, Yb, Lu; Ru, Rh, Pd, Os, Ir and/or Pt; P; S; C, and/or combinations thereof. For example, it may be that the electrocatalytic region of the first electrode comprises (e.g. consists of) an electrocatalyst comprising (e.g. consisting essentially or consisting of) Ag, Au, C, Cd, Ce, Cn, Co, Cr, Cu, Db, Ds, Dy, Er, Eu, Fe, Gd, Hf, Hg, Ho, Hs, Ir, La, Lu, Mn, Mo, Mt, Nb, Nd, Ni, Os, P, Pd, Pm, Pr, Pt, Re, Rf, Rg, Rh, Ru, S, Sc, Sm, Ta, Tb, Tc, Ti, Tm, V, W, Y, Yb, Zn, Zr, and/or combinations thereof. It may be that the electrocatalytic region of the first electrode comprises (e.g. consists of) an electrocatalyst comprising (e.g. consisting essentially or consisting of) Pt, Ir, Pd, Ni, Fe, Co, P, S, Mo and/or combinations thereof.

It may be that the electrocatalytic region of the second electrode comprises (e.g. consists of) an electrocatalyst comprising (e.g. consisting essentially or consisting of): Ru, Rh, Pd, Os, Ir, Pt, Au, Ag and/or Re; Sc, Ti, V, Cr, Mn, Fe, Co, Ni, Cu, Zn, Y, Zr, Nb, Mo, Tc, Ru, Rh, Pd, Ag, Cd, Hf, Ta, W, R, Os, Ir, Pt, Au, Hg, Rf, Db, S, Rh, Hs, Mt, Ds, Rg and/or Cn; La, Ce, Pr, Nd, Pm, Sm, Eu, Gd, Tb, Dy, Ho, Er, Tm, Yb, Lu; Sc, Y, La, Ce, Pr, Nd, Pm, Sm, Eu, Gd, Tb, Dy, Ho, Er, Tm, Yb, Lu; Ru, Rh, Pd, Os, Ir and/or Pt; P; S; C, and/or combinations thereof. For example, it may be that the electrocatalytic region of the second electrode comprises (e.g. consists of) an electrocatalyst comprising (e.g. consisting essentially or consisting of) Ag, Au, C, Cd, Ce, Cn, Co, Cr, Cu, Db, Ds, Dy, Er, Eu, Fe, Gd, Hf, Hg, Ho, Hs, Ir, La, Lu, Mn, Mo, Mt, Nb, Nd, Ni, Os, P, Pd, Pm, Pr, Pt, Re, Rf, Rg, Rh, Ru, S, Sc, Sm, Ta, Tb, Tc, Ti, Tm, V, W, Y, Yb, Zn, Zr, and/or combinations thereof. It may be that the electrocatalytic region of the second electrode comprises (e.g. consists of) an electrocatalyst comprising (e.g. consisting essentially or consisting of) Pt, Ir, Pd, Ni, Fe, Co, P, S, Mo and/or combinations thereof.

It may be that one of the first and second electrodes is an anode and the other of the first and second electrodes is a cathode. Accordingly, it may be that the respective electrocatalytic regions of the first and second electrodes comprise different electrocatalysts from each another.

For example, it may be that: the first electrode is an anode having an electrocatalytic region which comprises (e.g. consists of) a first electrocatalyst comprising (e.g. consisting essentially or consisting of): Ru, Rh, Pd, Os, Ir, Pt, Au, Ag and/or Re; Sc, Ti, V, Cr, Mn, Fe, Co, Ni, Cu, Zn, Y, Zr, Nb, Mo, Tc, Ru, Rh, Pd, Ag, Cd, Hf, Ta, W, R, Os, Ir, Pt, Au, Hg, Rf, Db, S, Rh, Hs, Mt, Ds, Rg and/or Cn; La, Ce, Pr, Nd, Pm, Sm, Eu, Gd, Tb, Dy, Ho, Er, Tm, Yb and/or Lu; Sc, Y, La, Ce, Pr, Nd, Pm, Sm, Eu, Gd, Tb, Dy, Ho, Er, Tm, Yb and/or Lu; Ru, Rh, Pd, Os, Ir and/or Pt; P; S; C; and/or combinations thereof; and the second electrode is a cathode having an electrocatalytic region which comprises (e.g. consists of) a second electrocatalyst comprising (e.g. consisting essentially or consisting of): Ru, Rh, Pd, Os, Ir, Pt, Au, Ag and/or Re; Sc, Ti, V, Cr, Mn, Fe, Co, Ni, Cu, Zn, Y, Zr, Nb, Mo, Tc, Ru, Rh, Pd, Ag, Cd, Hf, Ta, W, R, Os, Ir, Pt, Au, Hg, Rf, Db, S, Rh, Hs, Mt, Ds, Rg and/or Cn; La, Ce, Pr, Nd, Pm, Sm, Eu, Gd, Tb, Dy, Ho, Er, Tm, Yb and/or Lu; Sc, Y, La, Ce, Pr, Nd, Pm, Sm, Eu, Gd, Tb, Dy, Ho, Er, Tm, Yb and/or Lu; Ru, Rh, Pd, Os, Ir and/or Pt; P; S; C; and combinations thereof; wherein the first and second electrocatalysts are different (i.e. have different compositions).

It may be that: the first electrode is an anode having an electrocatalytic region which comprises (e.g. consists of) a first electrocatalyst comprising (e.g. consisting essentially or consisting of) Ag, Au, C, Cd, Ce, Cn, Co, Cr, Cu, Db, Ds, Dy, Er, Eu, Fe, Gd, Hf, Hg, Ho, Hs, Ir, La, Lu, Mn, Mo, Mt, Nb, Nd, Ni, Os, P, Pd, Pm, Pr, Pt, Re, Rf, Rg, Rh, Ru, S, Sc, Sm, Ta, Tb, Tc, Ti, Tm, V, W, Y, Yb, Zn, Zr, and/or combinations thereof; and the second electrode is a cathode having an electrocatalytic region which comprises (e.g. consists of) a second electrocatalyst comprising (e.g. consisting essentially or consisting of) Ag, Au, C, Cd, Ce, Cn, Co, Cr, Cu, Db, Ds, Dy, Er, Eu, Fe, Gd, Hf, Hg, Ho, Hs, Ir, La, Lu, Mn, Mo, Mt, Nb, Nd, Ni, Os, P, Pd, Pm, Pr, Pt, Re, Rf, Rg, Rh, Ru, S, Sc, Sm, Ta, Tb, Tc, Ti, Tm, V, W, Y, Yb, Zn, Zr, and/or combinations thereof; wherein the first and second electrocatalysts are different (i.e. have different compositions).

It may be that: the first electrode is an anode having an electrocatalytic region which comprises (e.g. consists of) an electrocatalyst comprising (e.g. consisting essentially or consisting of) Co, Fe, Ir, Li, Ni, P, S, Ti, Zn, and/or combinations thereof; and the second electrode is a cathode having an electrocatalytic region which comprises (e.g. consists of) an electrocatalyst comprising (e.g. consisting essentially or consisting of) Ce, Co, Fe, Ho, Ir, Mo, Ni, Pd, Pt, Ru, Sm, W, and/or combinations thereof; wherein the first and second electrocatalysts are different (i.e. have different compositions).

It may be that: the first electrode is an anode having an electrocatalytic region which comprises (e.g. consists of) a first electrocatalyst comprising (e.g. consisting essentially or consisting of) Ni, Fe, Co, P, S, and/or combinations thereof; and the second electrode is a cathode having an electrocatalytic region which comprises (e.g. consists of) a second electrocatalyst comprising (e.g. consisting essentially or consisting of) Pt, Ir, Pd, Ni, Mo, and/or combinations thereof; wherein the first and second electrocatalysts are different (i.e. have different compositions).

It may be that: the second electrode is an anode having an electrocatalytic region which comprises (e.g. consists of) a second electrocatalyst comprising (e.g. consisting essentially or consisting of) Ni, Fe, Co, P, S, and/or combinations thereof; and the first electrode is a cathode having an electrocatalytic region which comprises (e.g. consists of) a first electrocatalyst comprising (e.g. consisting essentially or consisting of) Pt, Ir, Pd, Ni, Mo, and/or combinations thereof; wherein the first and second electrocatalysts are different (i.e. have different compositions).

In some examples, the electrocatalytic region of the first electrode comprises (e.g. consists essentially of, or consists of) Ni (e.g. elemental Ni) and the electrocatalytic region of the second electrode comprises (e.g. consists essentially of, or consists of) Pt (e.g. elemental Pt).

It may be that the electrocatalytic region comprises an electrocatalyst applied on a matrix (or body) for the electrocatalytic region as a coating, or that the matrix (or body) comprises the electrocatalyst (e.g. in the absence of an electrocatalytic coating).

For example, a matrix (or body) for an electrode, such as a compound porous electrode, may comprise (e.g. consist of) a nickel-based alloy such as a nickel-based superalloy. The nickel-based alloy (e.g. nickel-based superalloy) may be a nickel-chromium alloy (e.g. a nickel-chromium superalloy) such an Inconel (R) alloy. The nickel-chromium alloy (e.g. nickel-chromium superalloy) may comprise no less than about 50 wt. %, for example, no less than about 70 wt. %, nickel and no less than about 5 wt. %, for example, no less than about 10 wt. %, chromium. The nickel-chromium alloy (e.g. nickel-chromium superalloy) may further comprise iron, manganese, copper, silicon, carbon and/or sulfur, as well as the usual impurities. For example, the nickel-chromium alloy (e.g. nickel-chromium superalloy) may be Inconel (R) 600. Inconel (R) 600 consists of: no less than about 72.0 wt. % nickel; from about 14.0 wt. % to about 17.0 wt. % chromium; from about 6.0 wt. % to about 10.0 wt. % iron; no greater than about 1.0 wt. % (i.e. including 0 wt. %) manganese; no greater than about 0.5 wt. % (i.e. including 0 wt. %) copper; no greater than about 0.5 wt. % (i.e. including 0 wt. %) silicon; no greater than about 0.15 wt. % (i.e. including 0 wt. %) carbon; no greater than about 0.015 wt. % (including 0 wt. %) sulfur; and the usual impurities, wherein the total contents of the alloy add up to 100 wt. %.

An aqueous (i.e. water-based) electrolyte solution for use with the electrolyser may be an aqueous solution of one or more alkali metal salts, such as one or more alkali metal hydroxides or carbonates. For example, the electrolyte solution may be an aqueous solution of potassium hydroxide (KOH), sodium hydroxide (NaOH), lithium carbonate (Li2CO3), sodium carbonate (Na2CO3), potassium carbonate (K2CO3), or any combination thereof (such as lithium, sodium and potassium carbonate (Li2CO3, Na2CO3, K2CO3)). In one example, the electrolyte solution is an aqueous solution of potassium hydroxide (KOH) having a concentration of 1 mol/L (i.e. 1 M). In another example, the electrolyte solution is an aqueous solution of sodium hydroxide (NaOH) and potassium carbonate (K2CO3), wherein the concentration of sodium hydroxide (NaOH) in the solution is 1 M and the concentration of potassium carbonate (K2CO3) in the solution is 0.5 M. Further examples of aqueous electrolyte solutions include organic-containing aqueous electrolyte solutions, with example organics include carbohydrates (e.g. cellulose), organic solvents (e.g. alcohols) and lipids (e.g. triglycerides).

According to a second aspect there is provided an electrolysis installation comprising: a source of an electrolyte fluid, optionally an aqueous electrolyte fluid;
an electrolyser in accordance with the first aspect for performing continuous electrolysis of the electrolyte fluid.

Where an electrode of the electrolyser of the electrolysis installation is defined as being provided by an electrocatalytic region, the electrocatalytic region is suitable for catalysing a half-reaction of electrolysis of the electrolyte fluid, whereby the electrocatalytic region is electrocatalytically active. Where the electrolyser comprises a passive region associated with an electrode (e.g. a passive region of a compound porous electrode having an electrocatalytic region), the passive region is less electrocatalytically active than the respective electrocatalytic region for catalysing the respective half-reaction of electrolysis of the electrolyte fluid.

The electrolysis installation may comprise a plurality of electrolysers in accordance with the first aspect of the invention. The electrolysis installation may comprise flow control equipment as defined herein.

According to a third aspect there is provided a method of operating an electrolyser in accordance with the first aspect, comprising:

providing an inlet flow of electrolyte fluid to the inlet chamber to conduct electrolysis half-reactions with the first and second electrodes to generate respective fluid reaction products;
wherein the electrolyte fluid and/or associated ions flow at least part way through the or each porous wall to react with the respective electrode;
wherein the or each retention chamber retains the respective fluid reaction product and the respective porous wall inhibits return flow of the fluid reaction product from the retention chamber to the inlet chamber.

The method may comprise controlling inlet and/or outlet conditions of the electrolyser so that there is no pressure difference over the or each porous wall and/or so that there is a pressure drop over the or each porous wall from the inlet chamber to the respective retention chamber.

The electrolyte fluid may be received into the or each retention chamber only through the respective porous wall.

The method may comprise operating the electrolyser so that the electrode associated with the retention chamber, or associated with one of the retention chambers, is an anode. The electrolyte fluid may be an aqueous electrolyte fluid, such that: hydrogen produced at the other electrode which is a cathode is inhibited from migrating to the retention chamber associated with the anode by oxidation at the anode; and oxygen produced at the anode is inhibited from migrating to the inlet chamber through the porous wall.

The electrode may be associated with a passive region, for example a passive region of a respective compound porous electrode which defines the electrode, or a passive region along a flow path from the inlet chamber to the retention chamber that extends through the respective electrode. The passive region may be as defined in any statement above. The passive region may be configured to be less electrocatalytically active than the electrocatalytic region, or to inhibit a respective half-reaction of electrolysis. For each electrode associated with a retention chamber, the rate of the respective half-reaction of electrolysis at the respective electrocatalytic region is greater than the rate of the half-reaction of electrolysis at the respective passive region.

The rate of the respective half-reaction may be a rate of generation of the respective fluid reaction product (i.e. hydrogen or oxygen depending on the electrode), for example in kg/s. The rate for the respective region as used herein is the total rate for the respective region, rather than a specific rate per unit volume, thickness or mass etc. For example, the rate in the passive region may be no more than 50% of the rate in electrocatalytic region, no more than 20%, nor more than 10%, no more than 5% or no more than 1%. The rate in the passive region may be substantially zero.

The passive region may define an upstream portion along a flow path from the inlet chamber to the retention chamber, as defined above. A flow of electrolyte fluid to the retention chamber, or a respective flow to each of the retention chambers, may pass along the upstream portion of the flow path through the passive region thereby effecting a pressure drop in the flow prior to reacting with the electrocatalytic region.

It may be that thermodynamic and/or flow rate conditions are controlled to maintain supercritical pressure and temperature conditions for the electrolyte fluid within the inlet chamber and the or each retention chamber, such as at least 22 MPa pressure and at least 374°C for an aqueous electrolyte fluid.

The electrolyser may comprise first and second discharge valves as defined above. It may be that the first discharge valve maintains a first target pressure upstream of the valve; and that the second discharge valve maintains a second target pressure upstream of the valve. The first and second target pressures may differ such that there is a pressure drop over the porous wall driving a branch flow of electrolyte fluid through the porous wall from the inlet chamber into the retention chamber. Alternatively, the first and second target pressures may be substantially equal such that a pressure-driven branch flow of electrolyte fluid through the porous wall from the inlet chamber into the retention chamber. It may be that the controller controls the first discharge valve and/or the second discharge valve to maintain the respective target pressure(s).

The controller may control the first and/or second discharge valve to maintain a target flow rate or a target composition out of one of, or each of, the first and second outlets, based on flow rate data, upstream pressure data and/or composition data received by the controller. The controller may control the first and/or second discharge valve to maintain a target flow rate ratio between flow out of the first outlet and flow out of the second outlet, based on flow rate data and/or composition data received by the controller. The target flow rate ratio may correspond to a ratio of a total flow rate out of the first outlet and a total flow rate out of the second outlet; or a ratio of a flow rate of a first fluid reaction product out of the first outlet and a flow rate of a second fluid reaction product out of the second outlet.

The controller may determine whether there is an excessive amount of the second fluid reaction product in an outlet flow through the first outlet, or determining whether there is an excessive amount of the first fluid reaction product in an outlet flow through the second outlet, for example based on composition data received at the controller for the respective outlet flow. The controller may control the first discharge valve and/or the second discharge valve to vary a flow rate through a porous wall of the electrolyser, based on the determination.

The electrolyser may be operated to maintain thermodynamic and/or flow rate conditions such that a Reynolds number in the inlet chamber is no more than 4000, for example no more than 2300.

According to a fourth aspect there is provided a method of manufacturing a compound porous electrode for an electrolyser, comprising:

forming the compound porous electrode by an additive manufacturing or powder pressing process in the form of a sheet-like or tubular wall having a thickness direction between two opposing major surfaces of the porous electrode; wherein build material for the additive manufacturing process, or powder for the powder pressing process, is distributed so that the compound porous electrode is formed with a layered structure between the two major surfaces including at least two layers having different material compositions, whereby in use flow through the porous electrode between the two opposing surfaces along the thickness direction passes through the at least two layers; and wherein one of the layers forms an electrocatalytic region of the porous electrode which is spaced apart from at least one of the major surfaces of the electrode.

It may be that the electrocatalytic region comprises an electrocatalyst for catalysing an oxidation or reduction reaction with an aqueous electrolyte fluid.

It may be that a layer of the porous electrode other than the electrocatalytic region provides a passive region which is less electrocatalytically than the electrocatalytic region for catalysing a respective half-reaction of electrolysis of the electrolyte fluid, the passive region optionally comprising an insulating or dielectric material to inhibit the respective half-reaction of electrolysis of the electrolyte fluid.

The method may comprise installing the compound porous electrode in an electrolyser to provide an electrolyser or electrolyser installation in accordance with the first or second aspects.

According to a fifth aspect there is provided a method of manufacturing a compound porous electrode for an electrolyser, comprising:

forming a body of the compound porous electrode so that the body extends linearly along a longitudinal axis and has an orthogonal thickness direction from a first major surface to an opposing major surface; forming a plurality of inclined channels extending through the body form the first major surface to the second major surface, each being inclined with respect to both the longitudinal axis and the thickness direction; wherein the plurality of inclined channels are formed:

during manufacture of the body by an additive manufacturing process; or after manufacture of the body, for example by removing material from the body such as by a laser drilling process.

A channel may be inclined relative to an axis or direction when a centroidal axis of the channel is inclined relative to the respective axis or direction.

Each channel may have an average diameter along its length of between 25-150 $\mu$m, for example 25-100 $\mu$m

25-75 μm or approximately 50 μm..

The body may be axisymmetric about the longitudinal axis, such that the thickness direction at any point around the longitudinal axis is a local thickness direction corresponding to a radial direction about the longitudinal axis.

The body may be non-axisymmetric, such as a planar electrode extending linearly along both a lateral axis and longitudinal axis. The extent of the compound porous electrode along the longitudinal axis may be relatively greater than the extent along the lateral axis, such that it is elongate along the longitudinal axis.

It may be that the body comprises an electrocatalytic material (i.e. an electrocatalyst) for catalysing a half-reaction of electrolysis of an electrolyte fluid. Suitable catalysts and electrolyte fluids which may be used are discussed elsewhere herein.

Each channel may be formed to have a diverging cross section along the thickness direction.

The method may further comprise: providing a coating comprising an electrocatalyst on interior surfaces of the channels and/or on one or both major surfaces of the body, to provide an electrocatalytic region of the body; and/or providing a passivating coating on a major surface of the body, optionally over a coating comprising an electrocatalyst.

The controller(s) described herein may comprise a processor. The controller and/or the processor may comprise any suitable circuitry to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The controller may comprise or the processor may comprise or be in communication with one or more memories that store that data described herein, and/or that store machine readable instructions (e.g. software) for performing the processes and functions described herein (e.g. determinations of parameters and execution of control routines).

The memory may be any suitable non-transitory computer readable storage medium, data storage device or devices, and may comprise a hard disk and/or solid state memory (such as flash memory). In some examples, the computer readable instructions may be transferred to the memory via a wireless signal or via a wired signal. The memory may be permanent non-removable memory, or may be removable memory (such as a universal serial bus (USB) flash drive). The memory may store a computer program comprising computer readable instructions that, when read by a processor or controller, causes performance of the methods described herein, and/or as illustrated in the Figures. The computer program may be software or firmware, or be a combination of software and firmware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Brief Description of the Drawings

The invention will now be described, by way of example only, with reference to the accompanying drawings in which:

Figure 1 schematically shows a cross-sectional view of a first example electrolyser;

Figure 2 schematically shows a cross-sectional view of a second example electrolyser;

Figures 3a-3g schematically show cross-sectional views of example electrode arrangements for an electrolyser as disclosed herein;

Figure 4 is a flow diagram of a method of manufacturing a compound porous electrode;

Figure 5 schematically shows a cross-sectional view of a third example electrolyser;

Figure 6 schematically shows a layout of an electrolysis installation;

Figures 7 is a flow diagram of a method of controlling operation of an electrolysis installation;

Figures 8a and 8b are flow diagrams of methods of manufacturing a compound porous electrode;

Figure 9 is an optical micrograph (at 377.5x magnification) of a surface of a porous electrode formed by laser drilling channels into the wall of an Inconel® alloy 625 tube coated with alumina;

Figure 10 is an image of a cross-section of the porous electrode shown in Figure 9 obtained by X-ray Computed Tomography (XCT);

Figure 11 (a) is a magnified view of a portion of the image shown in Figure 10;

Figure 11 (b) is an optical micrograph (at 377.5x magnification) of a surface of a porous electrode formed by laser drilling channels into the wall of an Inconel® alloy 625 tube coated with alumina;

Figure 12 (a) is a representative gas chromatogram of cathode gas obtained from an electrolyser according to the invention featuring three peaks relating to (going from left to right) hydrogen, oxygen and nitrogen content;

Figure 12 (b) is a representative gas chromatogram of anode gas obtained from an electrolyser according to the invention featuring three peaks relating to (going from left to right) hydrogen, oxygen and nitrogen content;

Figure 13 (a) is a representative gas chromatogram of oxygen calibration gas;

Figure 13 (b) is a representative gas chromatogram of hydrogen and nitrogen calibration gas;

Figures 14-16 are contour plots for simulations of flow through a model electrolyser; and

Figures 17(a) and 17(b) are charts comparing composition results from the simulations of Figures 14 and 15.

## Detailed Description

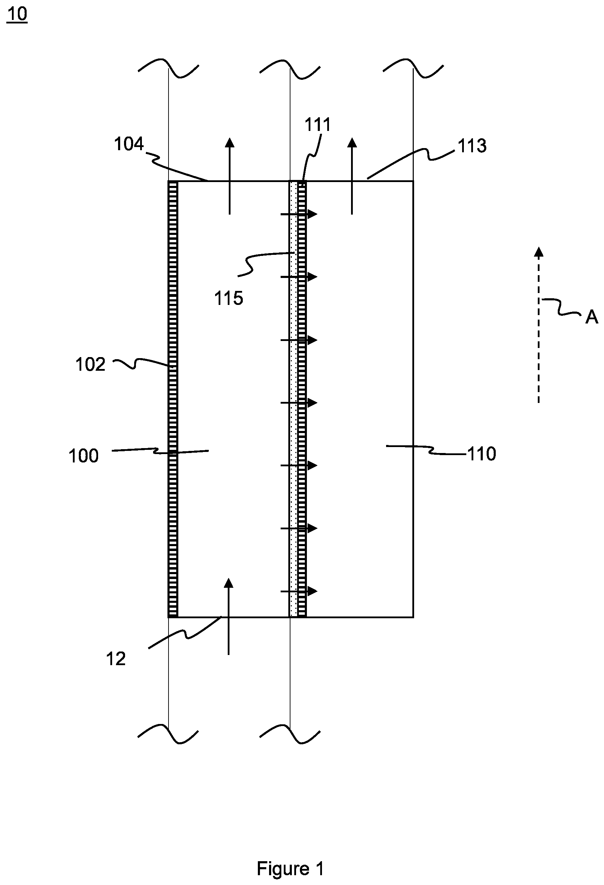

**Figure 1** shows a first example arrangement of an electrolyser 10 comprising an inlet chamber 100, a retention chamber 110 in schematic cross-sectional view.

In this example, the electrolyser 10 is in the form of a rectilinear duct having side-by-side inlet and retention chambers 100, 110 partitioned by a first porous wall 115. The chambers 100, 110 are elongate along a longitudinal axis direction A of the electrolyser from a first end in which there is an inlet 12 to the inlet chamber 100, to an opposing second end in which there are first and second outlets 113, 104 of the retention and inlet chambers 110, 100 respectively. In other examples, inlet and retention chambers may be of any suitable shape or form and the disclosure is not limited to the chambers having a rectilinear form as in this first example.

In this example, the retention chamber 110 is associated with a first electrode 111 and is configured to retain a fluid reaction product generated at the first electrode 111 in use, whereas the inlet chamber 100 is associated with a second electrode 102 and is configured to retain a fluid reaction product generated at the second electrode 102 in use. The first and second electrodes 111, 102 may be connected to and form part of an electrolysis circuit comprising a power source in use.

The inlet 12 to the inlet chamber 100 is configured to receive an electrolyte fluid from a source of electrolyte fluid coupled to the inlet 12 in use. The inlet chamber 100 is configured to convey the electrolyte fluid along the inlet chamber 100 from the inlet 12 to the opposing second outlet 102 so that the electrolyte fluid (or an associated ion) reacts with the second electrode 102 associated with the inlet chamber 100.

In this example, the second electrode 102 is a flow-past electrode which defines a wall of the inlet chamber 100, and in particular a wall which opposes the first porous wall 115 and the first electrode 111 (as will be described in detail below), so that the inlet chamber 100 is defined between the first porous wall 115 and the second electrode 102 and the porous wall 115, and is disposed between the first and second electrodes 111, 102.

The first porous wall 115 is configured to permit a branch flow of electrolyte fluid within the inlet chamber 100 to flow through the first porous wall 115 to enter the retention chamber 110. A porous medium provides a resistance to flow, such that a flow rate of electrolyte fluid through a porous medium is a function of the pressure difference across the medium and the permeability of the porous medium.

For example, a branch flow of electrolyte fluid may be caused to flow through the first porous wall 115 under action of a pressure difference between the inlet chamber 100 and the retention chamber 110. The first porous wall 115 is configured so that, when there is a pressure difference between the inlet chamber and the outlet chamber, the first porous wall 115 effects (i.e. causes) a corresponding pressure drop in the branch flow of electrolyte fluid as it passes through the first porous wall 115. The pressure drop is representative of the inherent resistance to flow through the porous wall 115.

As a corollary, the first porous wall 115 still provides a resistance to flow in the absence of a pressure difference across it, since the flow rate is a function of the pressure difference and the permeability as mentioned above. Therefore, a higher pressure would be required at the outlet side of the porous wall than the inlet side in order to drive a reverse flow through the first porous wall.

Accordingly, the first porous wall 115 is configured to inhibit a reverse flow of electrolyte fluid and/or any fluid reaction product generated at the first electrode 111 (i.e. a reverse flow from the retention chamber 110 towards the inlet chamber 100), as such a reverse flow would either be against a pressure gradient through the first porous wall 115 (i.e. in the case of a pressure-driven branch flow through the first porous wall 115), or because in the absence of a pressure difference over the wall such a reverse flow has no motive force to overcome the flow resistance of the first porous wall.

These two modes or mechanisms of flow resistance provided by the first porous wall (i.e. (i) owing to a pressure gradient through a pressure-driven branch flow from the inlet chamber to the retention through the porous wall; and (ii) owing to the absence of a pressure-driven reverse flow in the absence of a pressure difference across the porous wall) apply to every implementation of a porous wall as described herein, such that embodiments described later may not include a further detailed discussion of these mechanisms. The skilled person will appreciate that the particular configuration of the porous wall may be determined based on the intended operating conditions and whether or not the electrolyser is to be operated with a pressure-driven branch flow, or in the absence of a pressure difference over the wall. For example, it may be that a relatively lower permeability and/or a relatively higher thickness is selected for a porous wall to be operated in the absence of a pressure difference over the wall, whereas a relatively higher permeability and/or a relatively lower thickness is selected for a porous wall to be operated with a pressure difference that drives a pressure-drive branch flow into the retention chamber, since the branch flow may provide additional flow resistance owing to the pressure gradient through the porous wall, and also an inertia of the branch flow.

The first electrode 111 is arranged so that in use the branch flow of electrolyte fluid passing through the first porous wall 115 into the retention chamber 120 reacts with the first electrode 111.

In this example, the first electrode 111 is provided in the form of a layer adjacent to and substantially coextensive with the first porous wall 115. As will become apparent from the further discussion below, the disclosure envisages the first electrode 111 being coupled to or integral with the first porous wall 115 in some implementations, or separate from the first porous wall 115 in other implementations. For example, both the first porous wall and the first electrode may be provided by a compound porous electrode.

In this example there is a flow path for electrolyte fluid from the inlet chamber 100 to the retention chamber 110 which comprises an upstream portion through a passive portion of the first porous wall 115; and a downstream portion through, or adjacent to, an electrocatalytic region of the first electrode 111. The expression "passive" is used herein to mean that it is less electrocatalytically active than the electrocatalytic region for the respective half-reaction of electrolysis of the electrolyte fluid, or it inhibits the respective half-reaction. It is within the competence of the skilled person to select a material for the passive region which is less electrocatalytically active than the electrocatalytic region. Definitions as to the passive region being less electrocatalytically active than the electrocatalytic region are provided elsewhere herein (including the summary section) and may apply to this and other examples. As one example only, the passive region and the electrocatalytic region may be configured so that a rate of the respective half-reaction of electrolysis of an electrolyte fluid is lower in the passive region (as a whole) than in the electrocatalytic region (as a whole). The passive region may be provided by a passivating coating over a matrix (or body), such as a dielectric coating as discussed elsewhere herein.

The downstream portion of the flow path is through the electrocatalytic region when the first electrode 111 is implemented as a flow-through electrode, for example when it is coupled to or integral with the first porous wall. The downstream portion may be adjacent to the electrocatalytic region when, for example, the first electrode is separate from the porous wall (e.g. provided on an opposing wall of the retention chamber).

Accordingly, in this example a flow resistance provided by the porous wall as described above is provided by a passive region of the porous wall and at an upstream location relative to the electrocatalytic region of the electrode. In use, the first reaction product will be generated at the electrocatalytic region of the electrode downstream of the passive region of the porous wall, such that a reverse flow of the fluid reaction product is inhibited by the upstream flow resistance provided by the passive region of the porous wall inhibits reverse flow of the first reaction product as described above.

In some implementations of an electrolyser as envisaged herein, the first porous wall and the first electrode may be provided by a compound porous electrode, such that the downstream portion of the flow path is through (rather than adjacent to) the respective electrocatalytic region. An upstream boundary of the electrocatalytic region (i.e. the boundary which opposes the inlet chamber and is thereby the first part of the electrocatalytic region through which a branch flow to the retention chamber passes) may be referred to as an ion exchange boundary of the electrode. The electrocatalytic region may be porous and present a resistance to flow in the same manner as the passive region. Nevertheless, the fluid reaction product may be generated at any location within the electrocatalytic region, such that in this example the part of the compound porous electrode that is relevant for inhibiting the reverse flow is the upstream passive region. As stated above, flow resistance is considered to be a function of pressure difference and permeability. The particular configuration of the porous wall and in particular the passive region (e.g. its permeability and thickness) may be determined based on the intended operating conditions and which mode or mechanism is relied upon to inhibit a reverse flow of the respective reaction product as discussed above. Nevertheless, in this example the compound porous electrode is configured so that the upstream portion of the flow path provides a significant proportion of the total flow resistance provided by the upstream and downstream portions.

This may be expressed as a relative flow permeability of the non-electrocatalytic region of the porous wall and the electrocatalytic region of the electrode, in particular the relative flow permeability may satisfy the inequality:

$$\frac{k_w t_e}{k_e t_w} \leq 5$$

where k is permeability and t is thickness, with the subscript e denoting the electrode (or electrocatalytic region) and the subscript w denoting the wall (or non-electrocatalytic region). The relative permeability may be no more than 2, for example no more than 1, no more than 0.5 or no more than 0.2. A relative permeability of less than 5 corresponds to the pressure drop over the non-electrocatalytic region of the porous wall providing at least one sixth of the total pressure drop or flow resistance along the upstream and downstream portions of the flow path, whereas a relative permeability of 0.2 corresponds to the pressure drop over the non-electrocatalytic region being 5 times greater than the pressure drop over the electrocatalytic region of the electrode.

There is a separation gap between the first electrode 111 and the second electrode 102 for ion exchange (i.e. the distance between respective ion exchange boundaries of the electrodes), and which in this particular example has a substantially constant closest distance of separation between points along the electrodes, owing to a parallel arrangement of the electrodes 111, 102. In this particular embodiment, both electrodes 111, 102 extend linearly parallel to the longitudinal axis A.

In this example, the retention and inlet chambers 110, 100 are elongate along the longitudinal axis A and extend side-by-side with each other along a co-extensive longitudinal extent towards adjacent first and second outlets 113, 104, although it will be appreciated that other configurations are possible. For example, the outlets 113, 104 need not be adjacent one another, and may discharge the respective flows along different directions.

Suitable electrolyte fluids and electrocatalytic materials for the respective electrodes are disclosed in the summary and applicable to this and all examples herein.

Operation of the first example electrolyser 100 will now be described with exemplary reference to electrolysis with an electrolyte fluid which is a liquid water-based (aqueous) electrolyte fluid (e.g. electrolyte solution) at subcritical conditions, for example at an inlet pressure of less than 22 MPa and an inlet temperature of less than 360 °C, for example at 20 MPa at a temperature of 100°C. The electrolyte fluid may comprise an aqueous solution comprising NaOH at a concentration of 0.5 M NaOH. In this example of operation, the first electrode 111 is the anode and the second electrode 102 is the cathode. In use, ions are transferred between the electrodes. In this particular example, hydroxide ions (OH-) are transferred through the electrolyte fluid to the anode for generation of a first reaction product (oxygen) at the anode.

An inlet flow of the electrolyte fluid is provided to the inlet chamber 100 via the inlet 12 and undergoes a reduction reaction at the second electrode 102 (cathode) to generate a second reaction product which in this example is gaseous hydrogen, together with hydroxide ions for transfer to the anode. The second reaction product (hydrogen) has a density less than that of the liquid electrolyte fluid, such that when the longitudinal axis A of the electrolyser 10 is vertically-oriented, the production of the second reaction product tends to drive the flow of electrolyte fluid upward through the inlet chamber 100 towards the second outlet 114 under buoyancy effects, as the density of the resulting multi-component mixture will be non-uniform, with a lower density where reaction products are generated. It is thought that this buoyancy effect inhibits migration of the second reaction product across the separation gap towards the first electrode 111.

In this particular example there is a pressure difference between the inlet chamber 100 and the retention chamber 110 such that there is a pressure drop over the first porous wall. The pressure difference drives a branch flow of the electrolyte fluid through the first porous wall 115 into the retention chamber 110, thereby passing through the first electrode 111 which in this particular example is provided adjacent to the first porous wall 115 as described above. The branch flow of electrolyte fluid reacts at the first electrode 111 to generate a first reaction product, which in this example is gaseous oxygen (along with transferring electrons to the anode). The first reaction product has a lower density than the branch flow of liquid electrolyte fluid and may therefore drive the flow of electrolyte fluid upward through the retention chamber 110 towards the first outlet 113 under buoyancy effects as described above.

In this example of operation, the first reaction product (oxygen) is entrained in the branch flow so as to pass through the first electrode 111 and be retained in the retention chamber 110. The first electrode 111 is defined as associated with the retention chamber 110 because the first reaction product generated at the first electrode 111 is retained in the retention chamber. In some examples the first electrode 111 may not be within or adjacent to the retention chamber 110. For example, it may be attached to or integral with the first porous wall 115 which separates the inlet and retention chambers 100, 110.

Owing to the pressure drop across the first porous wall 115, the first reaction product does not tend to migrate towards the inlet chamber 100 as this would be against the pressure gradient through the first porous wall 115 and the inertia of the branch flow. Therefore a reverse flow of the fluid reaction product is inhibited by a pressure gradient and/or pressure-driven flow over the porous wall. Accordingly, the first porous wall 115 inhibits mixing of reaction products generated at the first and second electrodes within the inlet chamber 100.

Further, migration of the second reaction product to the retention chamber 110 to mix with the first reaction product may be inhibited. Firstly, the flow rate and buoyancy effects within the inlet chamber 100 may be such that the second reaction product does not tend to migrate towards and reach the first porous wall 115 to transfer into the retention chamber 110, as will be described in further detail below. Secondly, when the second electrode is a cathode and the first electrode is an anode, the second reaction product may be stripped of its electrons upon encountering the first electrode so as to become positively charged and therefore reversed in direction as an ion (e.g. as a proton, when the second reaction product is hydrogen) back towards the second electrode, rather than entering the retention chamber 110.

Although the first electrode is an anode and the second electrode is a cathode in the above example, with respective oxidation and reduction reactions at each electrode, it will be appreciated that in other examples the polarity of the electrodes may be reversed.

A second example of operation of the electrolyser 10 differs from the first example described above only in that there is no substantial pressure difference between the inlet chamber and the retention chamber, and as such there may be substantially no pressure-driven flow of electrolyte fluid through the first porous wall 115 and no or minimal pressure drop over the first porous wall 115. Nevertheless, since the first porous wall 115 is configured to permit a flow of electrolyte fluid, it is also configured to permit the flow of ions through the channels or pores of the porous wall. Accordingly, in this variant second example of operation, ions are transferred between the first electrode 111 and the second electrode 102 in the absence of a substantial flow of electrolyte fluid through the first porous wall.

In this variant second example of operation, ions may flow from the inlet chamber 100 through the first porous wall 115 to the first electrode 111, for example under the action of electromotive force. The first porous wall 115 is non-electrocatalytic, such that ions may only react with the first electrode 111 to generate the first reaction product having passed through the first porous wall 115. For example, as described above, the first electrode 111 may be provided as a layer on an outlet side of the first porous wall (i.e. a side adjacent to the retention chamber 110, as opposed to the side adjacent to the inlet chamber 100). The first electrode 111 may be provided as a mesh or foil comprising electrocatalytic material attached to the first porous wall 115, or as a coating of electrocatalytic material provided on the first porous wall 115 or on a mesh or foil attached thereto. In a variant example, the first electrode 111 may be spaced apart from the first porous wall 115, for example supported within the retention chamber 110 as a flow-through electrode or defining a wall of the retention chamber 110 opposing the first porous wall (i.e. as a flow-past electrode).

Although the disclosure envisages that an electrode provided in association with a porous wall as described above may have an electrical pathway to an electrolysis circuit which is independent of the porous wall, in the example electrolyser 10 described herein with reference to Figure 1, the first porous wall 115 is electrically conductive and configured to pass a current from the first electrode 111 to an electrolysis circuit. In this particular embodiment, the first porous wall 115 also structurally supports the first electrode 111.

As described above, in this variant example the first reaction product is generated upon ions associated with the electrolyte fluid reacting with the first electrode 111 which is disposed within or defines a wall of the retention chamber 110, such that the first reaction product is generated downstream of the passive region of the first porous wall 115, for example within the electrocatalytic region of the first electrode or within the retention chamber 110. In the absence of a substantial pressure difference between the inlet chamber 100 and the retention chamber 110 driving a branch flow of electrolyte fluid into the retention chamber 110, the first porous wall 115 nevertheless inhibits a reverse flow of the first reaction product to the inlet chamber 100 as described above. In particular, as a porous medium, the first porous wall presents a greater resistance to flow of the first reaction product from the retention chamber to the inlet chamber than a flow path through the retention chamber 110 to the first outlet 113, such that the first reaction product preferentially flows towards the first outlet 113. Accordingly, a reverse flow of the fluid reaction product is inhibited by upstream flow resistance of the passive porous region. The resistance to flow may be a function of a permeability and a thickness of the porous wall as described elsewhere herein. Further, the generation of the first reaction product at a lower density than the electrolyte fluid may cause the first reaction product to be driven upwardly toward the first outlet 113 in preference to reverse flow through the first porous wall 115 (a path which may have a horizontal component in use when the longitudinal axis A is aligned with the vertical).

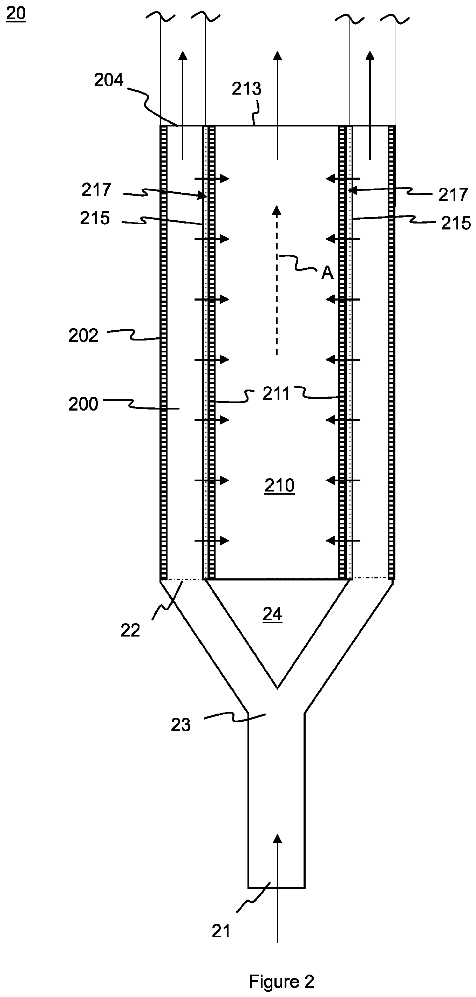

**Figure 2** shows a second example electrolyser 20. Like the first example electrolyser 10 of Figure 1, the electrolyser 20 has a retention chamber 210 and an inlet chamber 200 with respective first and second outlets 213, 204 separated by a first porous wall 215, and is configured to receive a flow of electrolyte fluid through an inlet 22 to the inlet chamber 200, from which a branch flow of electrolyte fluid may pass through the first porous wall 215 to the retention chamber 210.

The electrolyser 20 is arranged so that the inlet chamber 200 is an annular outer chamber and the retention chamber 210 is a core inner chamber surrounded by the inlet chamber 200. In this particular example, the chambers 200, 210 are arranged concentrically about an elongate axis A, and the chambers 200, 210 have cylindrical outer boundaries. In variant examples the electrolyser could have other concentric and non-concentric configurations. For example, the boundaries of the respective chambers could be conical and concentric.

In this example, there is a compound porous electrode 217 which defines both the first porous wall 215 (which may be a porous passive region of the compound porous electrode) and a first electrode 211 (an electrocatalytic region of the compound porous electrode). The compound porous electrode 217 separates the inlet chamber 200 and the retention chamber 210, such that the first electrode 211 is a flow-through electrode. In this example, the inlet chamber 200 is provided with a second electrode 202 which defines a radially-inner surface of the cylindrical outer wall of the inlet chamber 200, and is a flow-past electrode.

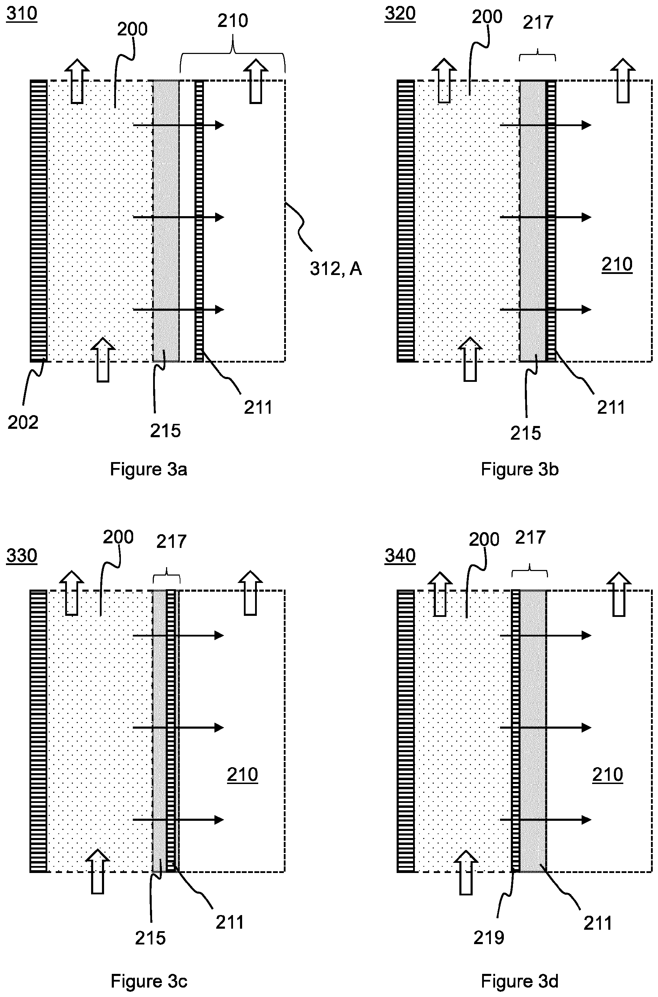

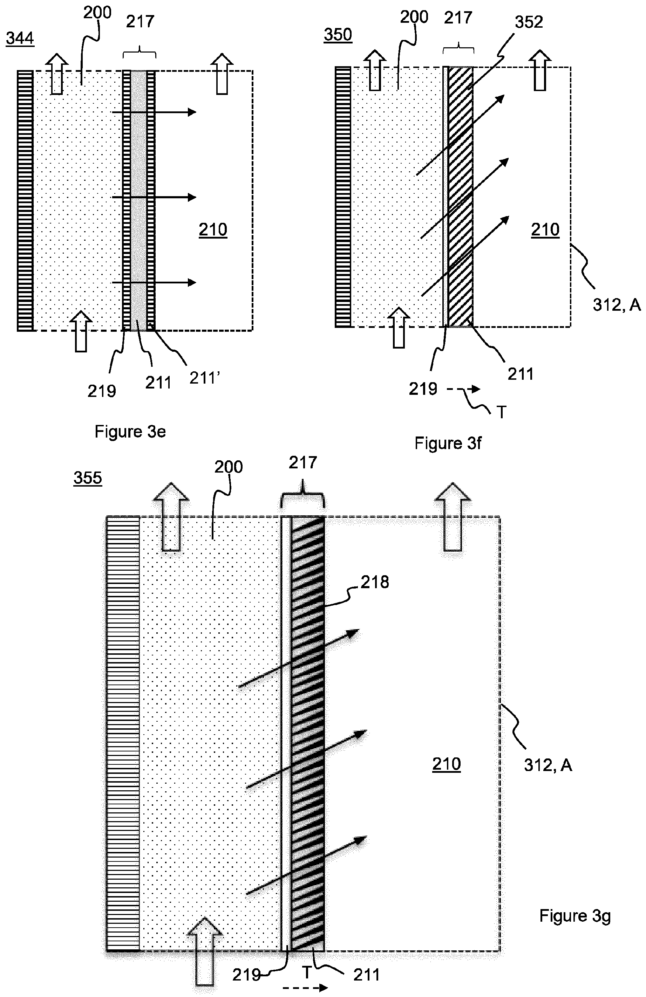

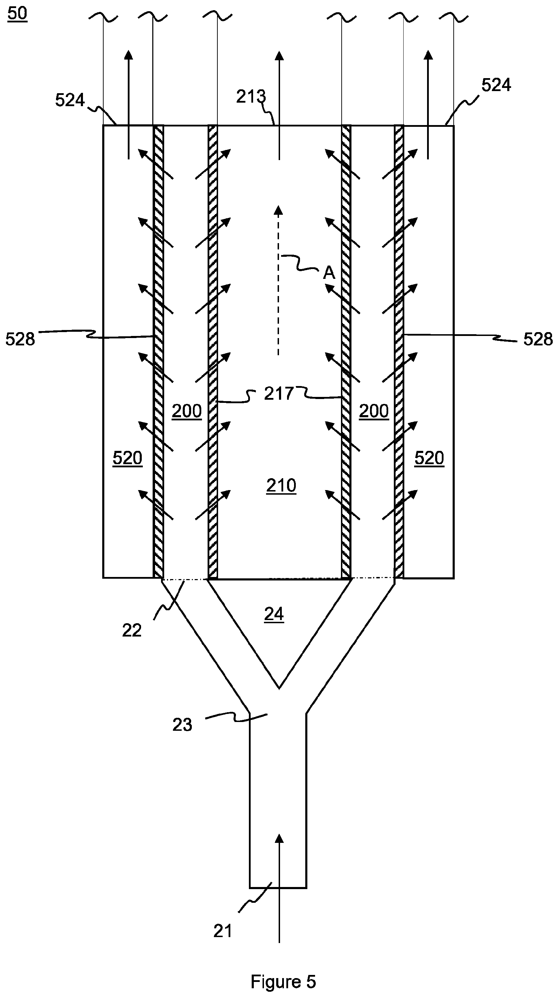

As described above with respect to the first example electrolyser 10, the compound porous electrode 217 is configured to permit electrolyte fluid to flow from the inlet chamber 200 to the retention chamber 210, but is configured to inhibit a reverse flow of a reaction product generated at the compound porous electrode (in particular at the electrocatalytic region of the compound porous electrode) back towards the inlet chamber 200. The compound porous electrode is configured to inhibit a reverse flow of the reaction product by a pressure gradient, or a pressure-driven flow as described above, when there is a pressure difference over the wall. The compound porous electrode may also inhibit a reverse flow of the reaction product by upstream flow resistance of a passive region as described below including in the presence or absence of a pressure difference over the compound porous electrode, and/or by other mechanisms when modified as envisaged below with reference to Figures 3 and 5.

Upstream of the inlet chamber 200 there is an inlet manifold 23 configured to receive electrolyte fluid from a source of electrolyte fluid at a port 21 and to provide an annular flow of electrolyte fluid to the annular inlet 22 of the inlet chamber 200. In this example, the inlet manifold 23 has a diverging conical profile configured to direct the electrolyte flow around a conical flow diverter 24. In variant examples the manifold 23 may take any suitable shape or configuration. For example, the manifold 23 may have cylindrical outer walls and there may be a conical flow diverter within the manifold 23 to direct the flow towards the annular inlet 22.

Use of the second example electrolyser 20 will now be described by way of example only with reference to electrolysis with an electrolyte fluid which is a supercritical water-based (aqueous) electrolyte fluid, for example at an inlet pressure of 22.5 MPa and an inlet temperature of 375 °C.

At supercritical conditions, a fluid behaves such that it does not have distinct liquid and gas phases. Supercritical electrolyte fluids may be advantageous for use in electrolysis, as compared with subcritical electrolyte fluids. In particular, supercritical fluids are completely miscible with each other, such that mixtures of fluids form a single phase with no phase boundary or surface tension between them. Therefore, when the reaction products remain supercritical rather than gaseous as they are generated (e.g. by having a lower critical temperature and pressure than the electrolyte fluid, or the temperature and pressure otherwise being higher than the respective critical point), those reaction products remain completely miscible with the electrolyte fluid. Accordingly, bubbles of reaction products do not accumulate on the surfaces of the electrodes. Such accumulation may otherwise inhibit the reaction by preventing local interaction between the electrolyte fluid and the electrode.

Further, it is known that a conductivity of an electrolyte fluid tends to be higher at elevated temperature and pressure (see for example the paper "High Pressure Electrolyte Conductivity of the Homogeneous, Fluid Water-Sodium Hydroxide System to 400°C and 3000bar", A. Eberz and E.U. Franck, Ber. Bunsenges. Phys. Chem. 99, 1091-1103 (1995) No. 9, in particular Table 2). Without wishing to be bound by theory, it is thought that a dissociation constant and conductivity of water increases as temperature and pressure rises. Further, a conductivity of an electrolyte or an electrolyte fluid (e.g. an electrolyte solution) is a function of pressure and temperature, with increasing conductivity being observed as pressure and temperature rise towards the critical point. Within the supercritical range (i.e. in the range of pressure and temperature conditions in which the temperature is at least the critical temperature for the fluid, and the pressure is at least the critical pressure for the fluid), conductivity may decrease with rising temperature at constant pressure. However, conductivity may increase within the supercritical range when pressure is increased. Accordingly, a concentration of electrolyte within an electrolyte solution may be reduced by operating at relatively high temperatures and pressures. The supercritical range is an example of relatively high pressure and temperature conditions, and it is considered that operation in the supercritical range may provide a relatively higher conductivity of an electrolyte fluid as compared with operation within the subcritical range at temperatures and pressures significantly below the critical temperature and critical pressure. By operating at conditions such that the conductivity of an electrolyte fluid is higher, ohmic losses associated with the electrolyte may be reduced, or otherwise a different electrolyte that is associated with reduced ohmic losses may be used, while still providing a suitable conductivity.

By way of example only, a suitable electrolyte fluid for use with the first and/or second example electrolysers described above is an aqueous electrolyte solution comprising NaOH as electrolyte. As stated above, conductivity of an electrolyte fluid tends to increase with temperature and pressure

To illustrate the above trend of conductivity increasing with pressure and temperature, reference can be made to the Eberz and Franck paper referred to above, according to which at 0.1 MPa and 25 °C an electrolyte composed of NaOH with a concentration of 17 wt% exhibits a conductivity of 0.4 S cm$^{-1}$ whereas at 30 MPa and 400 °C, the electrolyte exhibits a conductivity of 1.3 S cm$^{-1}$. It is estimated that, for a 0.5 M NaOH solution the conductivity at 22.5 MPa and 375 °C would be approximately 150-200 mS cm$^{-1}$, whereas at 0.1 MPa and 25°C the conductivity may be approximately 100 mS cm$^{-1}$.

In this example, the first electrode 211 is the anode and the second electrode 202 is the cathode. In use, ions are transferred between the electrodes.

In a first example of operation of the electrolyser 20, an inlet flow of the electrolyte fluid is provided to the inlet chamber 210 via the inlet manifold 23 to the annular inlet 22 of the inlet chamber 200. The electrolyte fluid undergoes a reduction reaction at the second electrode 202 (cathode) to generate a second reaction product which in this example is supercritical hydrogen, together with hydroxide ions for transfer to the anode. The second reaction product (hydrogen) has a density less than that of the electrolyte fluid but remains completely miscible with it as both are supercritical. Nevertheless, given its lower density, when the longitudinal axis A of the electrolyser is vertically-oriented, the production of the second reaction product tends to drive the flow of electrolyte fluid upward through the inlet chamber 200 towards the second outlet 204 under buoyancy effects. As above with respect to the first example, it is thought that this buoyancy effect may inhibit migration of the second reaction product across the separation gap towards the first electrode 211 (as provided by the first compound porous electrode 217).

A branch flow of the electrolyte fluid flows through the first compound porous electrode 217 into the retention chamber 210, thereby passing through the first porous wall 215 and the first electrode 211. Electrolyte fluid or associated ions (e.g. hydroxide ions) undergo an oxidation reaction at the first electrode (anode) 211 to generate a first reaction product, which in this example is supercritical oxygen (along with transferring electrons to the anode). The first reaction product has a lower density than the electrolyte fluid and may therefore drive the flow of branch flow upward through the retention chamber 210 towards the first outlet 213 under buoyancy effects as described above.

The first reaction product (oxygen) may be entrained in the branch flow so as to pass through the first electrode 211 and be retained in the retention chamber 210.

As described above with respect to the first example of operation of the first electrolyser 10, the first compound porous electrode 217 inhibits a reverse flow of electrolyte fluid and/or any fluid reaction product generated at the first electrode 211, for example owing to a resistance to flow provided by the porous wall. While the current example of operation refers to a pressure difference between the inlet chamber 200 and the retention chamber 210 such that a reverse flow is inhibited by a pressure gradient or a pressure-driven flow over the porous wall, the example electrolyser 20 can equally be operated in the absence of a pressure difference as described above with respect to the first example electrolyser 10, and may inhibit a reverse flow of a fluid reaction product by upstream flow resistance of a passive region.

The inventors have found that, by preventing mixing of the reaction products as described above, the electrodes can be arranged with a relatively low shortest distance of separation between them, which reduces ohmic losses in the electrolyser.

Further, the inventors have found that by providing a porous wall which inhibits a reverse flow from a retention chamber to an inlet chamber as described herein, any flow through the porous wall is substantially one-way, even if the area of the porous wall is relatively large for a given amount of flow (i.e. even when the flow rate per unit area through the porous wall is relatively low), as compared with previously-considered arrangements. In previously-considered arrangements, a flow-through electrode may be provided to span an elongate duct such that the area of the electrode is relatively low in relation to the flow rate, or such that the flow rate per unit area through the flow-through electrode is relatively high. By providing a relatively high flow rate through the flow-through electrode in previously-considered arrangements, it is thought that a reverse flow may be prevented owing to the inertia of the flow.

As the area of an electrode is increased in such previously-considered arrangements for a given flow rate of electrolyte fluid, such inertial effects may reduce and there may be a risk of local flow reversal that could permit mixing of reaction products. By providing a porous wall as disclosed herein, the flow rate per unit area can be maintained relatively low for a given reaction area of the electrodes (or conversely the reaction area can be relatively high for a given flow rate), while relying on the porous wall to prevent flow reversal as described herein.

Accordingly, the inventors have found that an arrangement for an electrolyser can be provided in which a porous wall has a relatively high area for a given flow rate. Consequently the electrodes can have relatively higher surface areas for a given flow rate of electrolyte fluid into and/or reaction products generated by the electrolyser, enabling a relatively higher surface area for conducting the electrolysis reaction, which may enable a higher reaction rate for a given flow rate of electrolyte fluid. These advantages apply equally to all example arrangements herein. The expression "surface area" as used herein with reference to the electrodes is intended to refer to the area of a substantially continuous surface extending over a respective boundary of an electrocatalytic region of the electrode, rather than to the total surface area of all pores and channels of such an electrocatalytic region (which may be referred to as the area of the electrolyte interface of the electrocatalytic region, or the area of a surface region of the electrocatalytic region which is adjacent to the electrolyte fluid in use). For example, for a substantially planar and rectangular compound porous electrode (or porous electrocatalytic region) having a longitudinal extent X and a lateral extent Y, the surface area refers to the multiple of the dimensions X and Y, rather than a total surface area of all electrocatalytic surfaces throughout any pores and channels of the porous electrode.

Consequently the separation gap between the electrodes can be made relatively slender, as the size of the electrodes can be relatively large compared to a cross-sectional area and/or separation gap defined by the inlet chamber.

These advantages apply to all example arrangements herein. For example, the first and second electrodes may oppose each other for ion exchange along a co-extensive longitudinal extent over which there is an average shortest distance of separation between opposing ion exchange surfaces of the electrodes. A ratio of the co-extensive longitudinal extent (i.e. a distance along the longitudinal axis A over which the electrodes oppose one another for ion exchange) to the average shortest distance of separation may be at least 5, for example at least 20 or at least 50 (such as 5-200, 20-200, 50-150).

In the particular example of the second electrolyser 200 shown in Figure 2, the co-extensive elongate extent of the electrodes is 100 mm, whereas the average shortest distance of separation is 1 mm, resulting in a ratio of 100. A corresponding radius to the first compound porous wall may be approximately 6-7 mm, such that in practice the gap between the electrodes is more slender than it appears in the drawings. In this example, the compound porous electrode has a permeability k measured for air at 20°C of 0.7 $\mu m^2$, which corresponds to a flow rate of approximately 4 $m^3/s/m^2$ of air through the compound porous electrode with a pressure difference of 10 kPa.

In use at the supercritical conditions described above (i.e. 22.5 MPa and 375 °C), the thermoneutral voltage for electrolysis is approximately 1.3V, which corresponds to 35.62 kWH per kg of hydrogen reaction product that is generated. This is 110% of the higher heating value of hydrogen (39.4 kWh per kg), and 93.5% of the lower heating value of hydrogen (33.3 kWh), and so is representative of efficient electrolysis. To maintain the electrolysis reaction at these conditions, the ohmic losses of the electrolyser should be no more than 0.120 V. In this example, the ohmic losses of the electrolyser (associated with ion exchange through the example electrolyte fluid of 0.5 M NaOH, having a predicted conductivity of about 150 mS $cm^{-1}$) is approximately 0.11 V when the electrode spacing is 1mm, whereas ohmic losses associated with bubble formation at the electrodes is eliminated owing to operation at supercritical conditions. The electrode spacing may be less than 1mm, for example 0.5mm or between 0.5mm and 1mm. Suitable electrocatalysts may be determined by the skilled person and are discussed elsewhere herein, but merely as an example suitable electrocatalysts may comprise nickel or a nickel alloy at the anode (which may be the first electrode), and platinum for the cathode (which may be the second electrode).

The ohmic losses are a function of the electrolyte conductivity and the electrode spacing. For example, if the electrodes are spaced apart by 3mm then it may be that a higher electrolyte conductivity is required, such as 2000 mS $cm^{-1}$.

While the first example electrolyser has been described as operating at subcritical conditions for an aqueous electrolyte solution, any of the first and second example electrolysers and their variants may be suitable for operating at supercritical conditions. For example, any of the first and second example electrolysers may be configured to operate so that the pressure of the electrolyte fluid is between 22 MPa and 27 MPa, and when the temperature of the electrolyte fluid is at least 374°C, for example between 374-550°C or 374-400°C. It may generally be desirable to operate at lower temperatures and pressures towards the critical point, which may minimise energy resources to pressurise and to heat the electrolyte fluid. Ohmic losses may be lower at higher temperatures and pressures, but it is thought that efficiency advantages to be gained at elevated temperature and pressure conditions may be offset by the additional energy required to heat and/or pressurise the electrolyte fluid, unless such additional energy is available as surplus energy (e.g. as excess heat from a heating source that would otherwise be discharged without thermal recovery).

Figures 3a-3f show example electrode configurations for use with the electrolysers of either the first or second example electrolysers 10, 20 described with reference to Figures 1 and 2. Figures 3a-3e are cross-sectional views of the respective electrolyser 10, 20 in a region where the electrodes are co-extensive along the longitudinal axis A, in a plane parallel with the longitudinal axis. When such configurations are applied to the first example electrolyser 10, which has a rectilinear cross-section in planes normal to the elongate axis, the example cross-sectional configurations shown in Figures 3a-3e are projected throughout a depth of the rectilinear duct (i.e. along a lateral axis orthogonal to the longitudinal axis and normal to the cross-section shown in Figures 3a-3e, with the right-most boundary 312 shown corresponding to a wall of the duct.

When such configuration are applied to the second example electrolyser 20, which has an axisymmetric configuration about the longitudinal axis to define an annular outer chamber and a core inner chamber, the example cross-sectional configurations shown in Figures 3a-3e are revolved around the longitudinal axis A by 360°, with the right-most boundary 312 shown corresponding to the longitudinal axis of the electrolyser.

For simplicity, the following descriptions of the example electrode configurations makes reference to the second example electrolyser 20 only, using corresponding reference numerals as appropriate, but are equally applicable and adaptable to the first example electrolyser as indicated above.

Figure 3a shows a partial cross-sectional profile 310 of the axisymmetric electrolyser 20 along a plane intersecting the longitudinal axis A of the electrolyser and terminating at the longitudinal axis. The partial cross-sectional profile corresponds to a longitudinal portion of the electrolyser 20 between the inlet to the inlet chamber 200 and the second outlet 204 of the inlet chamber 200, along which the first and second electrodes 211, 202 are co-extensive for ion transfer along the separation gap between them.

As described above with respect to Figure 2, the inlet chamber 200 is annular and surrounds a core retention chamber 210, the two chambers 200, 210 being separated by a cylindrical first porous wall 215. The radially-outer cylindrical wall of the inlet chamber 200 is defined by the second electrode 202, which in this example is a flow-past electrode (i.e. configured to prevent flow of electrolyte fluid through it). A first radially-outer inlet side of the porous wall 215 defines the radially-inner boundary of the inlet chamber 200, and opposes (i.e. faces towards) the second electrode 202 across the inlet chamber 200.

In the example configuration of Figure 3a, the porous wall 215 is separate from the first electrode 211, with the porous wall 215 being disconnected from any electrical source or circuitry so as not to contribute to any electrolysis reaction or conduct a current to or from the first electrode 211. Further, the porous wall 215 may be passive as defined herein, for example it may comprise (e.g. consist of) stainless steel 316. The porous wall may have an isotropic porous structure. A radially-inner outlet side of the porous wall 215, facing away from the second electrode 202, defines the elongate boundary of the retention chamber 210. A first end of the retention chamber 210 adjacent to the inlet 22 of the inlet chamber 210 is defined by a wall, whereas an opposing end of the retention chamber 210 is open to define a first outlet of the retention chamber 210 as described above.

In this example, the first electrode 211 is disposed within the retention chamber 210 with a small radial gap between it and the porous wall 215 (e.g. 0.25mm). Accordingly, the separation gap between the electrodes for ion transfer is the radial distance between the radially-outer surface of the first electrode 211 and the radially-inner surface of the second electrode 202, which are the respective ion exchange boundaries of the first and second electrodes 211, 202 respectively (since these are the closest boundaries of the electrocatalytic regions of the respective electrodes for conducting the respective reactions). In this example, this separation gap has a substantially constant shortest radial distance around the electrode and along its length along the longitudinal axis. In other words, at each point along either ion exchange boundary, the shortest distance to the opposing ion exchange boundary of the opposing electrode is along a radial direction with respect to the elongate axis, and that shortest distance is substantially constant from all points on the electrodes. In this example, the electrodes are cylindrical and concentric, such that the ion exchange boundaries are locally parallel with each other (i.e. within a radial plane intersecting any respective points through the electrodes). In variant examples, the shortest radial distance to the opposing ion exchange boundary may be substantially constant for at least 50% of a surface area of one of the ion exchange boundaries.

In the example of Figure 3a, the first electrode 211 may be provided as a flow-through mesh electrode. It may be that the flow-through mesh electrode presents a lower resistance to flow than the first porous wall 215, for example by having a higher permeability and/or a lower thickness than the first porous wall 215, such that any pressure drop between the inlet chamber 200 and the retention chamber 210 is primarily effected at the porous wall 215, and thereby the flow rate is determined by the configuration and resistance to flow of the porous wall 215, rather than that of the first electrode 221.

By way of example only, the first porous wall 215 may comprise (e.g. consist of) a material which is not electrocatalytically active for the respective half-reaction of electrolysis, or is less electrocatalytically active than the electrocatalytic region such as stainless steel 316 or titanium. The first porous wall 215 may comprise a matrix (or body) of any suitable material (e.g. whether electrocatalytically active for the respective half-reaction or not), and may be coated in a dielectric coating to inhibit the respective half-reaction of electrolysis, as described elsewhere herein. The first porous wall 215 may be manufactured by an additive manufacturing or powder processing process in order to provide a porous structure, such as an isotropic porous structure having a network of interconnected pores or channels to convey an electrolyte fluid. By way of example, the first electrode 211 may comprise a core of stainless steel 316 provided with an electrocatalytic coating comprising nickel. The second electrode 211 may comprise a core of stainless steel provided with an electrocatalytic coating comprising platinum.

Implementation of the electrode arrangement of Figure 3a with the electrolyser 20 of Figure 2 results in an arrangement which does not have a compound porous electrode, such that any features described above with reference to the electrolyser 20 of Figure 2 and which exclusively relate to the use of a compound porous electrode do not apply. For example, the first porous wall 215 does not conduct a current to or from the first electrode 211. When applied to an example electrolyser as described above, the electrode configuration of Figure 3a may, when there is a pressure drop from the inlet chamber to the retention chamber, inhibit reverse flow of a fluid reaction product by a pressure gradient over the first porous wall, or a pressure-driven flow through the porous wall; and/or it may inhibit a reverse flow of a fluid reaction product by upstream flow resistance of a passive region.

Figure 3b shows a further example electrode configuration 320 which differs from the configuration described above with respect to Figure 3a in that the first electrode 221 and the first porous wall 215 are provided by a compound porous electrode 217. In this example, the compound porous electrode is porous throughout, but only a sub-region may be electrocatalytic to define the first electrode 211 (the electrocatalytic region). The electrocatalytic region comprises an electrocatalyst (electrocatalytic material) for electrocatalysing a respective half-reaction of electrolysis.

In this particular example, the electrocatalytic region 211 is a layer formed as a coating on a passive region of the compound porous electrode. The electrocatalytic region 211 defines a radially-inner outlet side of the compound porous electrode 217 which serves as the elongate boundary of the retention chamber 210 and faces away from the second electrode 202.

The passive region of the compound porous electrode 217 is configured to be less electrocatalytically active than the electrocatalytic region for the electrolysis reaction, owing to the absence of an electrocatalyst to catalyse the respective reaction.

Therefore, in this particular example the ion exchange boundary of the electrode 211 is the boundary between the passive porous region 215 and the electrocatalytic 211 coating applied upon it. The electrocatalytic region is within the compound porous electrode 217, and therefore spaced-apart from an inlet side of the compound porous electrode 217 which opposes the second electrode 202 and delimits the inlet chamber 200. Accordingly, in use a branch flow of electrolyte fluid passes through the passive porous region 215 before it encounters the electrocatalytic region 211 to undergo the respective half-reaction, thereby inhibiting reverse flow of the first reaction product generated at the electrocatalytic region 211 as described above.

In this example the first electrode 211 is configured to be coupled to an electronic circuit for conducting electrolysis via the passive region of the compound porous electrode, which is electrically conductive to conduct a current to or from the first electrode 211, despite being substantially electrocatalytically inactive for the respective half-reaction of electrolysis.

For application of the electrode arrangement to the second example electrolyser 20 described above with respect to Figure 2, in which the first electrode 211 is the anode and the electrolyte fluid is a supercritical aqueous solution, a suitable example material for a matrix material of the compound porous electrode 217 may be titanium or stainless steel (e.g. stainless steel 316), whereas a suitable example electrocatalyst for the electrocatalytic region forming the first electrode 211 may be a coating is nickel. A suitable material for the second electrode (functioning as cathode) may be stainless steel with an electrocatalytic coating of platinum.

By way of example only, the compound porous electrode may be manufactured by forming the porous wall of the non-electrocatalytic matrix material by an additive manufacturing or powder pressing process, and coating one side of the porous wall with the electrocatalytic material, for example by a chemical vapour deposition (CVD) process.

It may be that the first compound porous electrode 217 has a relatively constant permeability (e.g. by having a relatively constant porosity and/or pore size) throughout both the non-electrocatalytic region and the electrocatalytic region, such that the flow resistance which determines the branch flow rate is the flow resistance of the first compound porous electrode 217 as a whole.

When applied to an example electrolyser as described above, the electrode configuration of Figure 3b may, when there is a pressure drop from the inlet chamber to the retention chamber, inhibit reverse flow of a fluid reaction product by a pressure gradient over the first porous wall, or a pressure-driven flow through the porous wall; and/or it may inhibit a reverse flow of a fluid reaction product by upstream flow resistance of a passive region.

According to an alternate manufacturing process, the electrocatalytic region 211 could be integrally formed with the passive porous region 215 rather than applied as a coating using an additive manufacturing process, as will be further described below with reference Figure 3c.

**Figure 3c** shows a further example electrode configuration 330 which differs from that described above with respect to Figure 3b in that the electrocatalytic region 211 of the first compound porous electrode 217 is provided as a layer wholly within the compound porous electrode and embedded between porous passive regions the compound porous electrode 217. Accordingly, the electrocatalytic region does not define either a radially-outer inlet side or a radially-inner outlet side of the first compound porous electrode 217.

With the remainder of the compound porous electrode 217 (i.e. the part which is not the electrocatalytic region) being passive as described herein in conducting the electrolysis reaction (for example less electrocatalytically active or electrocatalytically inactive), the reaction takes place predominantly or wholly within the electrocatalytic region 211. As above, the respective ion exchange boundary is therefore embedded within the compound porous electrode 217, at a position downstream of a passive porous region 215 which prevents a reverse flow of the first reaction product generated at the electrocatalytic region 211 by upstream flow resistance of a passive region, as described above.

As the outlet side of the first compound porous electrode 217 (i.e. the surface adjacent to the retention chamber 210) is passive as defined herein, it may be that the respective electrolysis reaction does not take place at the outlet side of the first compound porous electrode or within the retention chamber 210 itself. This may result in the reaction rate being more directly related to the flow rate of electrolyte fluid and/or associated ions through the compound porous electrode 217, which may enable more accurate control of a reaction rate by adjusting flow through the electrolyser as will be described in further detail below.

When applied to an example electrolyser as described above, the electrode configuration of Figure 3c may, when there is a pressure drop from the inlet chamber to the retention chamber, inhibit reverse flow of a fluid reaction product by a pressure gradient over the first porous wall, or a pressure-driven flow through the porous wall; and/or it may inhibit a reverse flow of a fluid reaction product by upstream flow resistance of a passive region.

By way of example only, the first compound porous electrode may be manufactured by an additive manufacturing or powder pressing process. Build material for the additive manufacturing process, or powder for the powder processing process, may be distributed so that the compound porous electrode is formed with a layered structure between two major surfaces corresponding to the inlet and outlet sides of the compound porous electrode. In this case the layered structure has three layers corresponding to the passive porous region 215 defining the inlet side, a passive porous region defining the outlet side, and an electrocatalytic region therebetween corresponding to the first electrode 211.

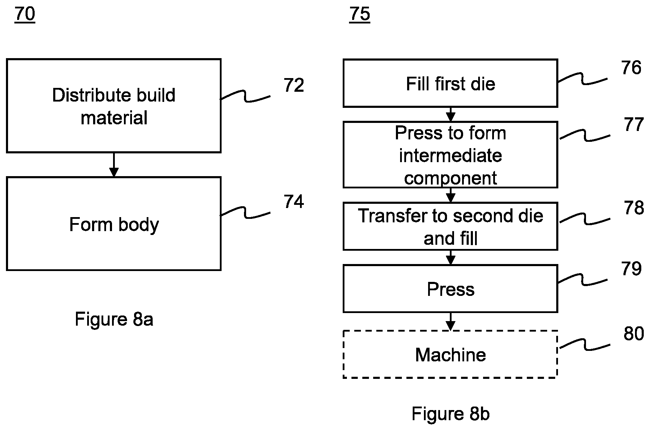

For example, in an additive manufacturing process the compound porous electrode may be manufactured in a layer-by-layer manner along the longitudinal axis, with build material being distributed and selectively fused to form each successive longitudinal slices of the compound porous electrode, as described in further detail below with reference to Figure 8a. Passive build material and build material comprising electrocatalyst for the electrocatalytic region may be selectively applied on each layer in locations corresponding to locations of the passive and electrocatalytic regions of the first compound porous electrode 217, such that the electrocatalytic region is embedded within the compound porous electrode as originally manufactured.

A similar process may be used to provide a compound porous electrode having only two regions as shown in Figure 3b, for example a passive region defining an inlet side of the compound porous electrode, and an electrocatalytic region defining an outlet surface of the compound porous electrode.

A compound porous electrode having multiple regions including at least one non-electrocatalytic region and at least one electrocatalytic region may be formed by other methods such as a powder processing process, as described in further detail below with reference to Figure 8b. A powder pressing process may comprise providing a powder in a canister or die having a shape relating to the desired shape of an article, and sintering the powder under elevated temperature and pressure to form a component having a porous structure.

In the example of Figure 3c, the second electrode may be manufactured as described above with reference to Figures 3a and 3b.

**Figure 3d** shows a further example electrode configuration 340 which differs from those described above in that the inlet side of the first compound porous electrode 217 which opposes the second electrode 202 and delimits the inner chamber 200 is passivated to inhibit a reaction at the inlet side of the compound porous electrode. For example, the compound porous electrode 217 may be provided with a passivating coating 219 defining the inlet side and which has a passivating effect for the respective half-reaction of electrolysis. The coating 219 may be an insulating or dielectric coating, for example an oxide coating (e.g. an inorganic metal oxide coating), such as silica ($SiO_2$), zinc oxide ($ZnO_2$), or zirconia ($ZrO_2$). In the examples disclosed herein, a thickness of the passivating coating may be a relatively low proportion of the thickness of the compound porous electrode. For example, in a compound porous electrode having a thickness of 1mm, the thickness of the passivating coating may be between 1-20 $\mu$m, for example between 5-10 $\mu$m. As the thickness increases, the coverage of the underlying surface increases but an excessive thickness may block pores. Accordingly, a suitable thickness may be selected to balance coverage while maintain the pores open.

By passivating the inlet surface of the first compound porous electrode 217, it can be assured that the ion exchange boundary of the electrocatalytic region 211 is embedded within the first compound porous electrode 217 (i.e. spaced apart from the inlet side) to prevent the respective half-reaction of electrolysis taking place at the inlet side of the compound porous electrode adjacent to the inlet chamber.

In this example a matrix (or body) 211 of the first compound porous electrode 217 to which the coating 219 is applied is porous and electrocatalytically active, thereby providing an electrocatalytic region 211 of the compound porous electrode.

When applied to an example electrolyser as described above, the electrode configuration of Figure 3b may, when there is a pressure drop from the inlet chamber to the retention chamber, inhibit reverse flow of a fluid reaction product by a pressure gradient over the first porous wall, or a pressure-driven flow through the porous wall.

By way of example only, the compound porous electrode 217 of Figure 3d may be manufactured using an additive manufacturing or powder pressing process as described elsewhere herein to provide the matrix (or body) 211 of the compound porous electrode as a porous structure, for example a substantially isotropic porous structure. A build material or powder for manufacture of the body 211 may comprise an electrocatalyst, such that the matrix (or body) 211 is electrocatalytically active and forms the electrocatalytic region of the compound porous electrode 217.

For example, the matrix (or body) 211 may comprise (e.g. consist of) nickel or a nickel-based alloy such as a nickel-based superalloy. A suitable example is a nickel-chromium alloy such as an Inconel® alloy (e.g. Inconel® 600). Such a material may be a suitable electrocatalyst for catalysing a half-reaction of electrolysis at the anode, and at the cathode, for an aqueous electrolyte fluid.

The passivating coating 219 may then be applied to the matrix (or body) 211. For example, the matrix (or body) 211 may be masked where the coating is not required (e.g. on the outlet side of the compound porous electrode in this example) and coated with the passivating coating 219, for example by a sputtering process, such as magnetron sputtering.

As an alternative example, the matrix (or body) 211 of the compound porous electrode 217 of Figure 3d may be manufactured as described above to provide a porous structure, but with a build material which is substantially electrocatalytically inactive, or insufficiently electrocatalytically active for the respective half-reaction of electrolysis. For example, the build material may comprise (e.g. consist of) stainless steel 316 or titanium. The matrix (or body) 211 may then be coated with a coating comprising an electrocatalyst. For example, the matrix (or body) 211 may be electroplated with a coating of a suitable electrocatalyst, to provide an electrocatalytic region for the compound porous electrode. The coating may be applied both internally (i.e. within the pores or channels of the matrix 211) and externally (e.g. on the inlet and/or outlet side of the matrix). Coating the matrix (or body) 211 to provide the electrocatalytic region may be particularly advantageous where the electrocatalyst is expensive, or not suitable for manufacturing the matrix which serves as the support structure of the compound porous electrode. For example, an electrocatalytic region of a cathode may be provided in this way, for example to apply a coating of electrocatalyst such as platinum. The passivating coating 219 may then be applied to the matrix (or body) 211 as described above.

**Figure 3e** shows a further example electrode configuration 345 which differs from that described above with respect to Figure 3d in that the matrix (or body) 211 is additionally provided with an electrocatalytic coating 211' as will be described below.

In the example of Figure 3e, the matrix (or body) 211 may comprise (e.g. consist of) a first electrocatalytic material (i.e. an electrocatalyst) which is less electrocatalytically active than the coating 211'. Accordingly, it may be that an electrocatalytic region of the compound porous electrode 217 comprises both the matrix (or body) 211 and the electrocatalytic coating 211' which defines the outlet side of the compound porous electrode. For example, the matrix (or body) 211 may be formed as a porous structure according to an example manufacturing method as discussed above with respect to Figure 3d, and may comprise (e.g. consist of) stainless steel 316. The coating 211' of electrocatalyst may then be applied to the outlet side of the matrix (or body) 211, for example by a chemical vapour deposition (CVD) process. The coating 211' may comprise an electrocatalyst which is relatively more electrocatalytically active for the respective half-reaction of electrolysis, such as nickel (when the compound porous electrode is the anode), or platinum (when the compound porous electrode is the cathode). The passivating coating 219 may then be applied to define the inlet side of the compound porous electrode 217, as described above. Accordingly, an ion exchange boundary for the compound porous electrode may lie at the interface between the passive region 219 defined by the passivating coating and the matrix (or body) 211, but it may be that a majority of the respective half-reaction of electrolysis takes place in portion of the electrocatalytic region defined by the electrocatalytic coating 211' provided on the matrix.

When applied to an example electrolyser as described above, the electrode configuration of Figure 3e may, when there is a pressure drop from the inlet chamber to the retention chamber, inhibit reverse flow of a fluid reaction product by a pressure gradient over the first porous wall, or a pressure-driven flow through the porous wall; and/or it may inhibit a reverse flow of a fluid reaction product by upstream flow resistance of a passive region.

**Figure 3f** shows a further example electrode configuration 350 in which the first compound porous electrode 217 extends linearly along (i.e. parallel to) the longitudinal axis A and has an orthogonal thickness direction T from the inlet side adjacent to the inlet chamber 200 to an outlet side adjacent to the retention chamber 210.

The electrode configuration 350 differs from that described above with respect to each of Figures 3a-e in that the compound porous electrode 217 has an anisotropic porous structure which is defined by a plurality of channels 352 extending through the thickness of the first compound porous electrode 217 and configured to permit electrolyte fluid to flow from the inlet chamber 200 to the retention chamber 210. The channels may extend at through an electrocatalytic region 211 of the compound porous electrode 217. The compound porous electrode 217 has an anisotropic structure in that channels are arranged in a structured array so that they are oriented along a particular direction so as to permit flow to permeate the compound porous electrode in that direction more easily than in other directions. In this example, the channels 352 are inclined with respect to both the longitudinal axis A and the thickness direction, such that flow along the channels 352 from the inlet side to the outlet side has an upward component when the longitudinal axis A is oriented vertically (as shown in Figure 3f). The inclined channels may have a diverging (i.e. expanding) cross-section along a direction towards the respective retention chamber as shown in Figure 3g, which shows a further example electrode configuration 355 that differs from the electrode configuration of Figure 3f only in this respect (i.e. only in that the inclined channels have a diverging cross section). A centroidal axis of each channel is inclined relative to both the longitudinal axis A and the thickness direction T. It is thought that the diverging cross section may permit the lower density fluid reaction product generated at an electrocatalytic region of the compound porous electrode to preferentially expand and flow downstream (i.e. along the channel towards the retention chamber).

In both the electrode configurations 350, 355 of Figures 3f and 3g, the compound porous electrode 217 further comprises a non-electrocatalytic or passivating coating 219 which defines the inlet surface of compound porous electrode.

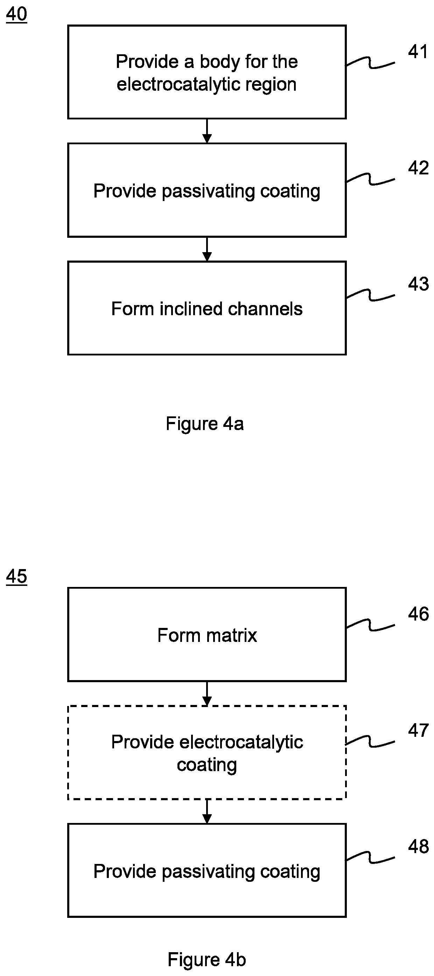

By way of example only, the compound porous electrode 217 of Figure 3g may be manufactured by a method 40 as will be described with reference to Figure 4a.

In block 41, a body for the compound porous electrode is provided. For example, the body may have a shape and size corresponding to the electrocatalytic region 211 of the compound porous electrode. It may be machined to a desired shape and size. The body may comprise (e.g. consist of) an electrocatalytic material (electrocatalyst), with suitable electrocatalysts for a respective half-reaction of electrolysis of an electrolyte fluid being discussed elsewhere herein. Merely by way of example, the body may comprise a nickel superalloy such as an Inconel® alloy (e.g. Inconel® 600).

In block 42, the passivating coating (e.g. a dielectric coating) 219 may be applied to a side of the body to define a passive region 219 of the compound porous electrode, for example to define the inlet side of the compound porous electrode 217 as discussed above. The passivating coating may be applied by any suitable process, for example a sputtering process such as magnetron sputtering. A side of the body may be masked to prevent coating with the passivating coating (e.g. the outlet side of the body). Optionally, the passivating coating may be applied to both sides of the body (i.e. both the inlet and outlet sides, without masking of either side).

In block 43, the inclined channels are formed in the body to provide an anisotropic porous structure as described above. For example, the inclined channels may be formed by removing material from the body, such as using a laser drilling process. The inclined channels may be provided with an average cross-sectional diameter along their length of 25-150 $\mu$m, for example 25-100 $\mu$m 25-75 $\mu$m, or approximately 50 $\mu$m. An example of suitable laser drilling equipment is a "Lasertec 50 Powerdrill" available from DMG Mori Seiki Co., Ltd of Japan, or a high-power ultra-short pulse laser available from Amphos GmbH of Germany (e.g. the "Amphos 2302" or a "Amphos 3000" series laser).

A suitable laser drilling process may be ultrashort-pulse laser drilling (also known as laser micromachining), with ultra-short laser pulses being in the order of pico or femtoseconds, such as 10ps, or from 0.1ps to 10ps. Such machining processes are discussed in the publication with reference Aizawa, Tatsuhiko & Inohara, Tadahiko; (2019); Pico- and Femtosecond Laser Micromachining for Surface Texturing; 10.5772/intechopen.83741, also available at: https://www.intechopen.com/books/micromachining/pico-and-femtosecond-laser-micromachining-for-surface-texturing

It may be that the inclined channels are formed to provide a diverging (e.g. expanding) cross section from the inlet side to the outlet side of the compound porous electrode, as discussed above with respect to Figure 3g. For example, this may be achieved in a laser drilling process by rotating a beam inclined with respect to the centroidal axis of the channel about the centroidal axis. As discussed in the above publication by Aizawa and Inohara, such rotation may be performed by a beam rotator in which one or more lens elements in the laser drilling apparatus rotates to rotate the beam axisymmetrically about an axis (i.e. about the centroidal axis of the inclined channel).

An alternative method 45 to manufacture the compound porous electrode 217 of Figure 3f is to use an additive manufacturing process, as will be described by way of example with reference to **Figure 4b.**

In block 46, an anisotropic porous matrix (or body) for the compound porous electrode is formed. In this example it is formed by an additive manufacturing process, for example by selectively fusing build material in a layer by layer manner so that the inclined channels 352 are formed within the matrix during the additive manufacturing process. A suitable additive manufacturing process may be selective laser sintering (SLS) or metal binder jetting.

The inclined channels may have an average cross-sectional diameter along their length of approximately 50-200 $\mu$m, for example 100-200 $\mu$m, and such channels may be suitably produced with additive manufacturing apparatus having a layer resolution of 30 $\mu$m. A suitable build material for the additive manufacturing may be a nickel powder (or nickel allow, such as an Inconel® alloy as discussed elsewhere herein, such as Inconel® 600).

In this example, the build material comprises an electrocatalyst for catalysing a respective half-reaction of electrolysis of an electrolyte fluid, and as such the anisotropic matrix for the compound porous electrode as formed in block 46 provides an electrocatalytic region for the compound porous electrode. However, in other examples it may be that the build material is less electrocatalytically active than may be required for catalysing the half-reaction, for example the build material may be titanium. The method optionally comprises, in block 47, providing a coating comprising (e.g. consisting of) an electrocatalyst for the respective half-reaction on the matrix so as to form the electrocatalytic region 211 of the compound porous electrode. For example, the coating may be electroplated onto the matrix. For example, the interior surfaces and/or one or both major surfaces of the body (corresponding to the inlet and outlet surfaces of the compound porous electrode) may be coated with an electrocatalyst.

In block 48, a passivating coating (e.g. a dielectric coating) is applied to the inlet side of the electrocatalytic region 211 to define a passive region 219 of the compound porous electrode 217, as described above.

Accordingly, in the example methods 40, 45 of Figures 4a and 4b it may be that a substantial majority of the compound porous electrode 219 is formed by the electrocatalytic region 211, with a passive region 219 being provided only on the inlet side being passivated. Optionally a further passive region may be provided as a coating on the outlet side as discussed above with reference to the method 40 of Figure 4a..

By providing a matrix for the compound porous electrode which comprises an electrocatalyst, such that the electrolyte interface of the electrocatalytic region (i.e. the surface region of the electrocatalytic region which is adjacent to the electrolyte fluid for the respective half-reaction of electrolysis in use) is defined by the matrix rather than by an additional coating of electrocatalyst, the compound porous electrode may be manufactured more simply and reliably. In particular, as is apparent from comparison of the methods 40, 45 of Figures 4a and 4b, when the matrix defines the electrolyte interface, there is no need for an additional coating to be applied. A coating applied on interior surfaces of channels or pores through the matrix may be uneven, for example if the geometry results in uneven current density over the respective surfaces. Further, when the matrix defines the electrolyte interface (i.e. in the absence of an additional coating), the electrocatalytic interface is not prone to delamination, as may be a coating.

A first example of operating the electrolyser 20 of Figure 2 is described above with reference to example supercritical operating conditions, a suitable electrolyte fluid and a configuration with the first electrode being the anode and the second electrode being the cathode. A modified example of operating the electrolyser 20 (i.e. modified relative to the first example described above), in which the electrolyser 20 of Figure 2 includes the electrode arrangement 350 of Figure 3f or the electrode arrangement 355 of Figure 3g will now be described.

In this example the electrolyte fluid is provided to the inlet 22 at supercritical conditions as described above. This example of operation is equally applicable to operation of the electrolyser to have a pressure difference over the first compound porous electrode 217 which drives a branch flow of electrolyte fluid therethrough, and operation of the electrolyser in the absence of such a pressure difference.

The electrolyte fluid may flow through the inlet chamber 200 to the second outlet 204 as described above, such that the electrolyte fluid or associated ions react with the second electrode 202 (the cathode) to generate the second fluid reaction product (e.g. hydrogen).

The inlet chamber 200 is bounded on one side by the passivating coating 219 of the first compound porous electrode 217, to inhibit an electrolysis reaction at the inlet side of the first compound porous electrode 217 to generate the first fluid reaction product (e.g. oxygen).

Electrolyte fluid and/or associated ions enter into the channels 352 of the first compound porous electrode 217 during operation, for example as entrained in a branch flow of electrolyte fluid through the first compound porous electrode 217, by general motion of the electrolyte fluid, or by electromotive force on the ions.

Upon entering the channels 352, the electrolyte fluid and/or associated ions react with the electrocatalytic region 211 (the first electrode). For example, the reaction may occur at the interior surfaces of the channels 352 which provide an electrolyte interface of the electrocatalytic region, and which may be defined by either an electrocatalytically active matrix material of the compound porous electrode, or an electrocatalytically active coating provided over a matrix material as described above. The reaction generates the first fluid reaction product (oxygen). The first fluid reaction product has a lower density than the electrolyte fluid but remains at supercritical conditions and completely miscible with the electrolyte fluid. Owing to the lower density of the generated first fluid reaction product, it is driven to flow along an upward direction through the respective channel 352 and in doing so is directed into the retention chamber 210, from where it is discharged through the first outlet 213 of the retention chamber 210. It may be that the buoyancy-driven flow of the first fluid reaction product upwardly though the channel 352 (and onward through the first outlet 213) draws in a replacement flow of electrolyte fluid into the channel.

The inclined channels thereby inhibit a reverse flow of the first fluid reaction product through the first compound porous electrode 217 towards the inlet chamber 200, by downstream-biased buoyancy effects.

It may be that the inclined channels extend through the electrocatalytic region such that the respective half-reaction of electrolysis occurs within the compound porous wall in the electrocatalytic region. It may be that the electrocatalytic region also defines the outlet side of the compound porous wall 217, such that the respective half-reaction of electrolysis may be conducted within the retention chamber 210 at the outlet side. Alternatively, as discussed above it may be that the outlet side of the compound porous wall is defined by a passive region (e.g. by a passivating coating applied on both sides of a body for compound porous wall prior to formation of the inclined channels), such that the respective half-reaction of electrolysis takes place substantially entirely (e.g. only) within the inclined channels.

When applied to an example electrolyser as described above, the electrode configuration of Figure 3f or 3g may, when there is a pressure drop from the inlet chamber to the retention chamber, inhibit reverse flow of a fluid reaction product by a pressure gradient over the first porous wall, or a pressure-driven flow through the porous wall. With a suitable thickness of the passive region defining the inlet side of the compound porous electrode, it may inhibit a reverse flow of a fluid reaction product by upstream flow resistance of a passive region. Further, the electrode configuration may inhibit reverse flow of a fluid reaction product by downstream-biased buoyancy effects, as described above.An anisotropic compound porous electrode may be used in conjunction with other features as described herein with reference to the examples Figures 1-3e. For example, any of the example configurations of a compound porous electrode as described herein may be modified to comprise inclined channels in a porous wall or a compound porous electrode, such that the respective porous wall or compound porous electrode may additionally function to inhibit a reverse flow of the respective fluid reaction product by downstream-biased buoyancy effects as described above. The downstream-biased buoyancy effects may be relied on in preference to establishing a pressure gradient or a pressure-driven flow to inhibit a reverse flow, and may enable reverse flow of a fluid reaction product to be better inhibited in the absence of a pressure difference over the porous wall or compound porous electrode.

Further, while it is thought that a reaction rate within the inclined channels of the compound porous electrode may by improved by providing the electrocatalytic region close to (but not at) the inlet side of the compound porous electrode, inclined channels may be used in passive porous regions or walls, or in compound porous electrodes in which an upstream portion of a flow path through a passive region of the compound porous wall accounts for a significant proportion or a majority of the total flow path through the compound porous electrode.

**Figure** 5 shows a further example electrolyser 50 which is similar to the electrolyser 20 described above with reference to Figure 2 such that the above description of like features applies equally to the electrolyser 50 of Figure 5, and the same reference numerals are used for like components. The electrolyser 50 of Figure 5 differs from the electrolyser 20 described above with respect to Figure 2 in that it comprises first and second retention chambers 210, 520 on opposing sides of the inlet chamber 200 for retaining fluid reaction products generated at respective first and second electrodes. First and second porous walls separate the inlet chamber 200 from the first and second retention chambers 210, 520 respectively. Relative to the electrolyser 20 of Figure 2, the second porous wall and second electrode replace the second electrode 202 which defines the radially outer wall of the inlet chamber 200 in Figure 2.

In the example electrolyser 50 of Figure 5 there are first and second compound porous electrodes 217, 528 which provide the respective porous walls and electrodes associated with the first and second retention chambers 210, 520. In this particular example, the first and second compound porous electrodes 217, 528 are substantially as described above with respect to Figure 3f, having inclined channels which promote the fluid reaction products generated at the respective electrodes flowing upwardly along the channels into the respective reaction chambers, and which prevent a reverse flow of such fluid reaction products downwardly through the channels against buoyancy forces. However, it will be appreciated that either or both of the compound porous electrodes may be replaced with any suitable arrangement of an electrode and a porous wall, for example any arrangement as described above with reference to Figures 1-3g.

The example electrolyser of Figure 5 has an annular configuration, with the inlet chamber 200 being an intermediate annular chamber which surrounds the first retention chamber 210 which is a core inner chamber. The second retention chamber 220 is an outer annular chamber which surrounds the inlet chamber 200 (the intermediate annular chamber). However, it will be appreciated that the cross-sectional arrangement of Figure 5 can equally be applied to an electrolyser in which the inlet chamber 200, first retention chamber 210 and second retention chamber 520 are rectilinear ducts separated by planar compound porous electrodes, similar to the electrolyser 10 of Figure 1 but with a dual retention chamber arrangement.

In this (annular) example electrolyser 50, the first outlet 213 for discharging the first fluid reaction product generated at the first electrode (of the first compound porous electrode 217) is at an upper end of the first retention chamber 210. Unlike the electrolyser 20 of Figure 2, there is no second outlet at an upper end of the inlet chamber 200. Instead, the second outlet 524 for discharging the second fluid reaction product generated at the second electrode (of the second compound porous electrode 528) is at an upper end of the second retention chamber 520, and is thereby an annular outlet in this example.

An example of operation will be briefly described only remarking on differences that may result owing to the dual retention chamber configuration (i.e. as compared with the first example of operation described above with respect to the electrolyser 20 of Figure 2).

In use, supercritical electrolyte fluid is provided to the inlet chamber 200 (e.g. continuously during operation) via the annular inlet 22 of the inlet manifold 23 as described above. The supply of electrolyte fluid displaces electrolyte fluid from the inlet chamber, and in the absence of an outlet port from the inlet chamber, such displaced fluid is driven through the compound porous walls to the retention chambers as first and second branch flows. Accordingly, in this example it may be that a flow of displacing electrolyte fluid through each compound porous wall becomes established owing to the inlet flow rate, rather than owing to establishing or maintaining a pressure drop over the respective compound porous electrode.

The pressure in the inlet chamber 200 corresponds to the pressure at the inlet 22, whereas the pressures in the respective retention chambers 210, 220 correspond to the pressures at the first and second outlets 213, 523. As porous members, each compound porous electrode may restrict a flow rate of electrolyte fluid to the respective retention chamber based on the pressure difference between the inlet chamber and the retention chamber. Therefore, a pressure difference may be established between the inlet 22 and each of the first and second outlets 213, 524, corresponding to first and second branch flows of electrolyte fluid through the first and second compound porous electrodes 217, 528 respectively. The relative flow rates of the branch flows may be controlled by controlling a pressure or flow rate associated with an outlet as will be described below.

In this example, each of the first and second compound porous electrodes 217, 528 is substantially as described above with reference to the compound porous electrode 217 of Figure 3f. In use, electrolyte fluid and/or associated ions do not react with the compound porous electrodes 217, 528 at their respective inlet sides adjacent to the inlet chamber, owing to the presence of the passivating coatings (not shown in Figure 5 for simplicity) that define the respective inlet sides of the compound porous electrodes. Accordingly, the contents of the inlet chamber 200 substantially consists of electrolyte fluid and associated ions, with substantially no fluid reaction products generated at the respective electrodes.

Each branch flow carries electrolyte fluid and/or associated ions into the respective inclined channels and to an electrocatalytic region of the respective compound porous electrode, where a respective electrolysis half-reaction takes place to generate a respective fluid reaction product. Owing to the relatively lower density of the fluid reaction product (as compared to the electrolyte fluid), the fluid reaction product tends to flow upwardly and thereby along the inclined channels to be retained downstream in the respective reaction chamber.

Either of the compound porous electrodes can function as the anode, the other functioning as the cathode, with a suitable selection of electrocatalyst as discussed elsewhere herein.

In the example electrolyser of Figure 5, a reverse flow of a fluid reaction product through a compound porous electrode may be inhibited by: there being a pressure gradient, or a pressure-driven or displacing flow of electrolyte fluid as described above; and/or by downstream biased-buoyancy effects as described above. Optionally (for example depending on a thickness of the passivating layer), a reverse flow may be inhibited by upstream flow resistance of a passive region as described above with respect to earlier examples.

When the electrode arrangements of any of Figures 3a-3g are applied to the electrolyser of Figure 5 such that there is a dual arrangement of retention chambers for the respective reaction products, each with a respective porous wall or compound porous electrode, a reverse flow may be inhibited by a displacing flow of electrolyte flow through those porous walls or compound porous electrodes.

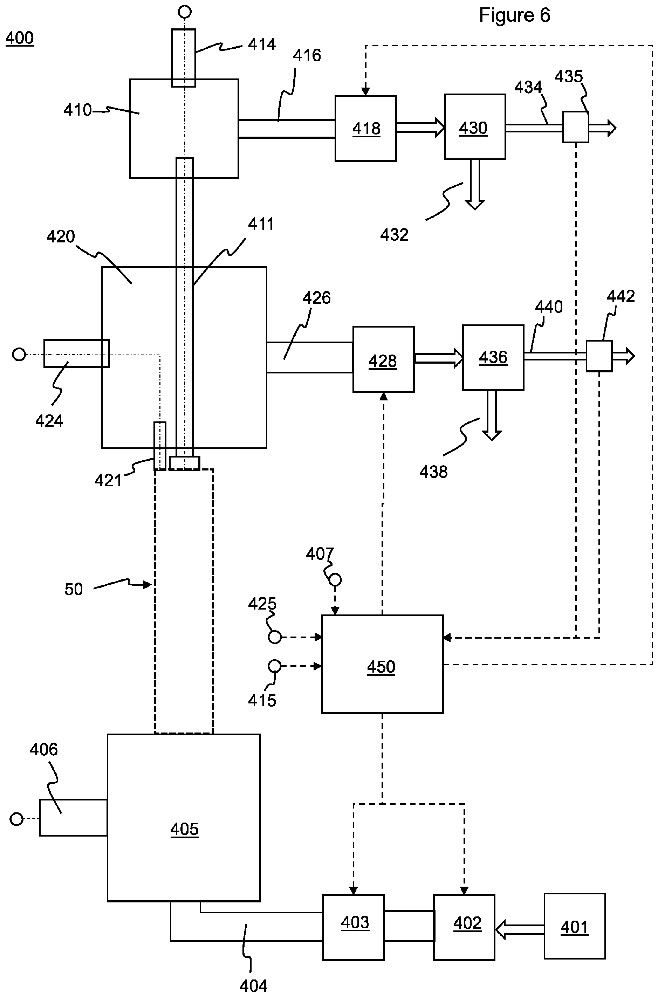

**Figure 6** shows an example electrolyser installation 400 comprising an electrolyser 50 which may be in accordance with any embodiment envisaged herein, but which will be described with reference to the example electrolyser 50 as described above with reference to Figure 5 (with further reference to Figures 2 and 3f).

The electrolyser installation may otherwise be understood to be an electrolyser comprising any of the features described above with reference to Figures 1-3g and 5 and additional features to be described with reference to Figure 6. In this regard, it will be understood that references herein to "an electrolyser installation" are interchangeable with references to "an electrolyser".

In sequential flow order, the example electrolyser installation 400 comprises a source of electrolyte fluid 401, a compressor 402 to compress (pressurise) the electrolyte fluid, a heater 403 to heat the electrolyte fluid, an inlet conduit 404 leading to a monitoring manifold 405, an electrolyser 50 as described above, a first discharge manifold 420 and a second discharge manifold 430.

In this example, the electrolyser installation is for operation at supercritical conditions with an electrolyte fluid which comprises an aqueous electrolyte solution, for example as described above with respect to the first example of operation of the electrolyser 20 of Figure 2. Accordingly, the compressor 402 is configured to compress the electrolyte fluid to a pressure of at least 22 MPa, for example between 22 MPa and 27 MPa. Further, the heater 403 is configured to heat the electrolyte fluid to a temperature of at least 374°C, for example 374°C-550°C or 374°C-400°C.

The inlet conduit 404 directs the heated and pressurised electrolyte fluid to the inlet manifold 405, which supports a temperature sensor 406 for monitoring a temperature of electrolyte in the monitoring manifold, the temperature sensor being coupled to a controller 450 via a connection 407. Although the connection 407 is illustrated in Figure 6 separately from the temperature sensor 406, it will be appreciated that the connection 407 may be any suitable form of connection, for example a wired or wireless link.

The electrolyte fluid flows into the electrolyser 50 for an electrolysis reaction as described above with respect to Figures 1-5. There are separate first and second outlet pathways 411, 421 coupled with the first and second outlets of the electrolyser respectively (the first and second outlets being configured to discharge first and second fluid reaction products respectively). Figure 6 schematically shows the first outlet pathway 411 coupled to a centrally located first outlet of the electrolyser 50, whereas the second outlet pathway 421 is coupled to a radially-outwardly (e.g. annular) second outlet of the electrolyser 50.

The first outlet pathway 411 is in fluid communication with a first discharge manifold 410 which receives a flow of electrolyte fluid and a first reaction product from the first outlet of the electrolyser 20. The first discharge manifold 410 is fluidically coupled to a first discharge valve 418 via a discharge line 416. The first discharge valve 418 may be a control valve that provides a variable restriction to flow therethrough.

The second outlet pathway 421 is in fluid communication with a second discharge manifold 420. As schematically shown in Figure 6, in this example the first outlet pathway 411 extends through the second discharge manifold 420 while functionally bypassing it (i.e. such that flow within the first outlet pathway 411 does not mix with fluid in the second discharge manifold 420), but in other implementations may be configured differently. As with the first discharge manifold 410, the second discharge manifold 420 is fluidically coupled to a second discharge valve 428 via a discharge line 426, which may be of a similar type as the first discharge valve 418.

Optionally each of the first discharge manifold 410 and the second discharge manifold 420 is provided with respective a pressure sensor 414, 424 having a pressure sensor element in communication with the fluid discharged from the respective (first or second) outlet of the electrolyser or in the respective chamber immediately upstream of the outlet. Each pressure sensor 414, 424 is coupled to a controller 450 via a respective connection 415, 425 to provide a respective pressure signal to the controller 450 (as above, any suitable form of connection may be provided despite the connections 415, 425 being shown as separate from the respective pressure sensors 414, 424 in the drawing). Alternatively or additionally, a differential pressure sensor may be provided in communication with the respective discharge manifolds or outlet pathways, and connected to the controller 450 to provide a differential pressure signal to the controller 450.

The first discharge valve 418 and/or the second discharge valve 428 may be a control valve. For example, the first discharge valve 418 and/or the second discharge valve 428 may be a controllable pressure-maintaining valve configured to maintain a target pressure upstream of the respective valve corresponding to target operating conditions in the electrolyser 50 (e.g. supercritical pressure conditions for the electrolyte fluid). The first discharge valve 418 and/or the second discharge valve 428 may expand the flow to a lower pressure, for example a pressure at which the respective reaction product is gaseous and the residual electrolyte fluid is liquid, whereby the respective reaction product may be separated from the electrolyte fluid relatively easily (for example by phase separation in an accumulator tank). The residual electrolyte fluid may be recirculated to the source 401 of electrolyte fluid.

Optionally the electrolysis installation comprises separators 430, 436 downstream of the respective discharge valves 418, 428 for separating the respective fluid reaction product from the electrolyte fluid. Each separator 430, 436 has a respective return line 432, 438 for a flow of discharged electrolyte fluid 432, 438 from the separator, which may be returned to the source of electrolyte fluid for re-use. Each separator 430, 436 further comprises an outlet line for 434, 440 for discharging the respective fluid reaction product. The fluid reaction product may be in gaseous form within the respective separator and discharged through the outlet line as a gas. Optionally, the monitoring apparatus comprises flowmeters 435, 442 on the respective outlet lines for monitoring a flow rate of the respective fluid reaction product, each outputting a respective signal to a controller 450 as described below.

As shown in Figure 6, there is a controller 450 which is coupled to flow control apparatus and monitoring apparatus in order to control operation of the electrolyser installation 400. The monitoring apparatus may comprise the temperature sensor 406 for monitoring an inlet temperature of electrolyte fluid, the pressure sensors 414, 424 (or differential pressure sensor) for monitoring pressures of fluid within or discharged from the first and second outlets of the electrolyser 50 respectively, and the flowmeters 435, 442 on the outlet lines 434, 440 for monitoring the outlet flows of the reaction products. The flow control apparatus may comprise the monitoring apparatus.

The flow control apparatus includes one or more components that determine (i.e. influence or affect) conditions within the electrolyser, such as the thermodynamic and/or flow rate conditions within the electrolyser.

The thermodynamic conditions relate to the pressure and temperature of fluid within the electrolyser, for example the pressure and temperature of electrolyte fluid provided to the electrolyser, or the pressure and temperature of the electrolyte fluid in combination with the first and/or second reaction products in the respective chambers in which they are retained within the electrolyser. In this example the thermodynamic conditions are a function of a pressure to which the electrolyte fluid is pressurised at the compressor 402, a temperature to which the electrolyte fluid is heated at the heater 403, and the operation of the first and second discharge valves 418, 428 (e.g. a target back pressure which the valves are configured to maintain upstream of the valves).

The flow rate conditions relate to the flow rate of electrolyte fluid provided to the electrolyser, and optionally to the or each flow rate of a branch flow of electrolyte fluid that passes from the inlet chamber to the or each retention chamber via a respective porous wall.

In steady state conditions, the flow rate into the electrolyser is equivalent to the total of first and second flow rates out of the respective first and second outlets. Each outlet flow depends on the pressure difference between the compressor 402 and the respective one of the first and second discharge valves 418, 428, and any flow resistance along the respective flow path (e.g. primarily any associated porous wall, but also any other features of the flow path which may effect a pressure drop, such as bends and flow restrictions).

A flow rate through either of the first and second outlets of the electrolyser (which may correspond to a branch flow through an upstream porous wall) may depend on the relative pressures at the first and second outlets.

It may be desirable for rates at which the reactions take place at the respective electrodes to be balanced, in order to sustain the ion exchange and the electrolysis reaction.

The reaction rate at each electrode may be a function of multiple variables, including the composition of the electrolyte fluid, the fluid interaction between the electrolyte fluid and the respective electrode, the area of an electrolyte interface of the electrocatalytic region of each respective electrode (i.e. the surface region of the electrocatalytic region which is adjacent to the electrolyte fluid in use), the ratio of the surface area of the respective electrolyte interface to the volume of electrolyte fluid exposed to the electrodes (e.g. in the separation gap between the electrodes), and the flow rate of the electrolyte fluid associated with the respective electrode (which may be a flow rate through the electrode in the case of a flow-through electrode or a flow rate past the electrode in the case of a flow-past electrode).

The flow-resistant properties of the porous wall may be selected so as to achieve a suitable flow rate of the branch flow of electrolyte fluid through the porous wall. It will be appreciated that the flow rate is a function of multiple variables which can be varied in the design and configuration of an electrolyser. In general, a flow rate through a device may be determined by re-arrangement of the equation for the flow factor $K_V$, as shown in Equation 1 below:

$$Q = K_v \cdot \sqrt{\frac{\Delta P}{SG}} \qquad\qquad \text{Equation 1}$$

where Q is the flow rate ($m^3h^{-1}$), $K_v$ is the flow factor for the porous wall ($m^3h^{-1}bar^{-0.5}$), $\Delta P$ is the pressure drop over the porous wall (bar), and SG is the specific gravity of the fluid.

The flow factor may be a constant for the porous wall, and it will be appreciated that various properties of the porous wall can be varied in order to achieve a suitable flow factor, for example the porosity of the porous wall and the thickness of the porous wall.

A flow rate may be determined by Darcy's law, as shown in Equation 2 below:

$$q = -\frac{k}{\mu}\Delta P \qquad\qquad\qquad \text{Equation 2}$$

Where q is the instantaneous flux (i.e. $m^3 s^{-1}$ of fluid per $m^2$ of flow area, equivalent to Q/A where A is the flow area), k is the permeability of the medium ($m^2$), $\mu$ is the dynamic viscosity ($Pa.s^{-1}$) and $\Delta P$ is the total pressure drop (Pa).

The pressure drop $\Delta P$ over the porous wall may be determined as a function of the target back pressures applied to each respective chamber by the discharge valves 418, 428 in fluid communication with the first and second outlets of the electrolyser.

It may be that there is a pressure gradient within the chambers of the electrolyser owing to the generation of reaction products at the electrodes which are of a lower density than the electrolyte fluid provided to the respective chambers. Accordingly, the pressure may vary within a chamber between a location adjacent to a porous wall and a respective outlet of the electrolyser in communication with the respective discharge valve. Accordingly, when a discharge valve is configured to maintain a back pressure, a pressure difference between electrolyte fluid provided to the inlet chamber and the respective back pressure may not be equal a pressure difference over a porous wall disposed therebetween. Nevertheless, such pressure gradients within the respective chambers will be steady-state in use at constant operating conditions (e.g. flow rate, pressure and temperature set-points, voltage and current of an electrolysis circuit), such that a pressure at an outlet side of a porous wall may be a function of a back pressure applied at a downstream discharge valve. Accordingly, the pressure drop over each porous wall may be a function of the back pressure applied to the respective chamber by the discharge valves.

Discharge valves associated with each chamber may be controllable so as to vary the back pressure, for example by a controller. This may permit calibration of the electrolyser for use, or variation of its operating conditions during use. Alternatively, the discharge valves may be configured to maintain a fixed back pressure, for example a pressure which has been determined in the design of the electrolyser to be suitable for use at the intended operating conditions.

In the example installation of Figure 6, in use the controller 450 controls operation of the flow control apparatus to maintain desired conditions within the electrolyser. The controller 450 controls operation of the flow control apparatus, for example the first and/or second discharge valves, based on outputs from the monitoring apparatus to maintain the desired conditions using a feedback loop. In a variant example, there may be no controller and/or the components of the flow control apparatus may be preconfigured to set operating points corresponding to a predetermined operating condition of the electrolyser.

The controller 450 may control the flow control apparatus in order to maintain a flow rate within the inlet chamber and/or the or each retention chamber of the electrolyser corresponding to a desired flow regime, such as a laminar flow or a laminar and/or transition flow. When the inlet chamber is configured to retain one of the reaction products (for example when there is a single retention chamber associated with a first electrode and the inlet chamber is associated with the second electrode), it may be desirable to avoid turbulent flow within the inlet chamber in order to inhibit migration of a reaction product generated at one electrode towards the other electrode. A laminar or transitional flow regime may avoid such migration by preventing migration of fluidic (nonionic) components across uniform streamlines in the flow. Accordingly the controller 450 may be configured to control the flow control apparatus to maintain a flow rate within the inlet chamber corresponding to a Reynolds number of no more than 4000 (considered to be the limit for transitional flow), or no more than 2300 (considered to be the limit for laminar flow). It will be appreciated that variables other than velocity in the calculation of the Reynolds number may be constants and provided to the controller - for example a characteristic dimension of the respective chamber (e.g. the radial extent of the inlet chamber), and the inertial and viscous constants of the fluid.

In some implementations of an electrolysis installation, a controller such as the controller 450 of the installation 400 of Figure 6 may control operation of the electrolysis installation, for example to maintain flows within the electrolysis reaction within target ranges or to balance the electrolysis half-reactions.

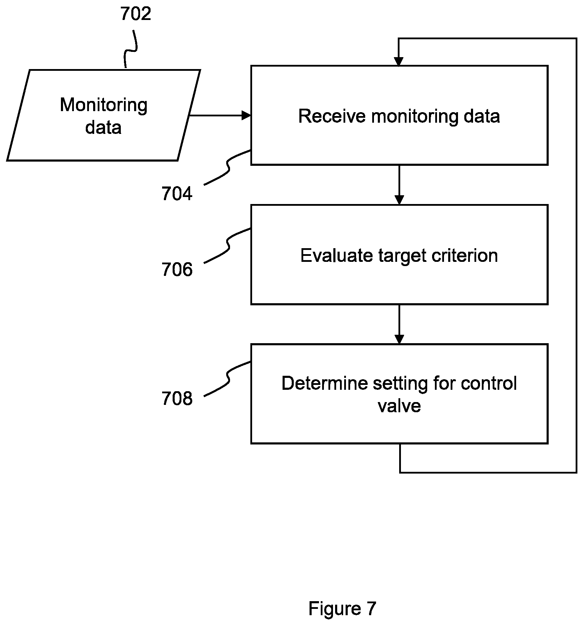

Example methods of controlling an electrolysis reaction will be described below merely by way of example with reference to the electrolysis installation 400, and with reference to the flow diagrams of Figure 7.

Figure 7 is a flow diagram of a method 700 of controlling the or each discharge valve 418, 428 associated with the outlet flows comprising, respectively a mixture of the first fluid reaction product and the electrolyte fluid, and a mixture of the second fluid reaction product and electrolyte fluid

Block 702 represents monitoring data received at the controller 450 from associated sensors of the monitoring apparatus.

In block 704, monitoring data is received at the controller from associated sensors of the monitoring apparatus. For example, the data may be received continuously, periodically, on demand, or at the initiative of the respective sensor (e.g. when it detects a predetermined condition).

In block 706, the controller evaluates a target criterion relating to the monitoring data.

In block 708, the controller determines a setting for one or more of the discharge valves 418, 428 to control operation of the electrolysis installation, based on the evaluation of the target criterion in block 706. The method continuously repeats by returning to block 704.

In a first example of the method 700, the monitoring data is upstream pressure data received from pressure sensors 414, 425 configured to monitor a pressure of fluid discharged from the respective first and second outlets of the electrolyser (i.e. outlets of the respective chambers of the electrolyser), or from a differential pressure sensor.

Evaluating the target criterion may comprise determining a difference between a pressure of fluid discharged through a first outlet 213 (e.g. associated with a first retention chamber 210) and a pressure fluid discharged through a second outlet 524 (e.g. associated with a second retention chamber 210, or the inlet chamber when the electrolyser has a single flow-through electrode), or comparing a pressure of fluid discharged from a respective outlet with a target range of pressures for the fluid.

In block 708, a setting for one or more of the discharge valves may be determined based on the evaluation target criterion. For example, there may be a predetermined target range for the pressure difference, and the setting may be determined to maintain or return the pressure difference to the target range. When the electrolyser is to be operated with no pressure difference between the outlets, the target range may include a zero pressure difference. When the electrolyser is to be operated with a pressure difference between the outlets, the target may range may not include a zero pressure difference. The target range (or respective target ranges for each pressure) may be predetermined, for example based on commissioning of the electrolysis installation to determine pressure differences that correspond to satisfactory performance of the electrolysis installation, with a suitable balance of flow rates between the outlets. Accordingly, maintenance of the pressures or pressure difference within respective target ranges may result in maintaining a target flow rate ratio between flow out of the first outlet and flow out of the second outlet.

In a second example of the method 700, the monitoring data may be flow rate data, for example as received from flowmeters configured to monitor a flow rate of a mixture of flow a fluid reaction product and electrolyte fluid discharged from a respective outlet 213, 524 of the electrolyser (whether upstream of the respective discharge valve 418, 428, such as along the respective discharge line 416, 426; or downstream of the respective discharge valve). The flow rate data may be received from flowmeters configured to monitor a component flow rate of a respective fluid reaction product separated from the electrolyte fluid, for example from a flowmeter 435, 442 installed on an outlet line for discharging the respective fluid reaction product from a separator 430, 436 downstream of the discharge valves 418, 428.

The target criterion may correspond to maintaining a target flow rate out of one or each of the outlets, or maintaining a target flow rate ratio between flow out of the first outlet and flow out of the second outlet. Evaluating the target criterion may comprise comparing the associated flow rate data with predetermined targets, or determining a ratio of the respective flow rates out of the outlets. The controller may determine a control setting of one or both the valves in order to maintain the flow rate or flow rate ratio within a target range.

In a third example of the method 700, the monitoring data may be composition data relating to a composition of the mixture of fluid out of the respective outlets. For example, the composition data may be determined by comparing a flow rate of a component fluid reaction product out of a separator and a total flow rate of fluid discharged from the respective outlet, for example to determine a mass fraction of the respective fluid reaction product in the fluid mixture discharged from the respective chamber of the electrolyser. Alternatively, the composition data may be determined as a flow rate of the respective fluid reaction product, irrespective of the flow rate of the electrolyte fluid with which it was discharged from the respective outlet.

The target criterion may correspond to maintaining a target composition out of the respective outlet, for example a target mass fraction or target flow rate of the fluid reaction product which may be considered to correspond to satisfactory performance of the electrolyser. The controller may determine a setting for the respective discharge valve based on the composition data. For example, if it is determined that the mass fraction of a reaction product is below a target range, this may correspond to too much electrolyte fluid flowing through the respective chamber. Accordingly, the controller may determine to adjust a setting of the discharge valve to further restrict flow through the discharge valve, which may raise the mass fraction of the respective fluid reaction product.

Alternatively, the target criterion may correspond to maintaining a target ratio of the flow rates of the respective fluid reaction products out of respective outlets of the electrolyser. For example, there may be a target range for the ratio corresponding to satisfactory performance of the electrolyser, for example with a flow rate of a first reaction product being within a target range of a desired ratio to a flow rate of the second reaction product. The desired ratio may correspond to the sustainable performance of the respective electrolysis reaction (i.e. with the respective half-reactions in balance).

Flow rates as discussed above may be mass flow rates. A flowmeter may monitor a volume flow rate of a fluid, and the flowmeter or a controller may be provided with information corresponding to a density of the respective fluid in order to determine a parameter corresponding to the mass flow rate.

In a fourth example of the method, the monitoring data may be composition data relating to an amount of a contaminant fluid reaction product in a fluid flow out of a respective outlet of the reaction chamber. For example, as discussed above the first fluid reaction product is to be retained in a chamber (a retention chamber) for discharge through a first outlet of the electrolyser, whereas the second fluid reaction product is to be retained in a chamber (e.g. another retention chamber or the inlet chamber) for discharge through a second outlet of the electrolyser. Discharge of the second fluid reaction product through the first outlet corresponds to the presence of a contaminant fluid reaction product in the respective outlet flow, and vice versa. The monitoring data may be received from a component gas sensor configured to monitor a composition of a gas, for example downstream of a separator for the respective fluid reaction product (e.g. at the location of the respective flowmeter 435, 442 as described above). Any suitable sensor may be selected, but merely as an example a thermal conductivity sensor may be used, configured to determine a composition of a flow stream based on a monitored amount of energy (e.g. electrical power) to maintain a temperature probe within the flow stream at a target level. When calibrated based on the respective fluid reaction product that is expected to be discharged (e.g. hydrogen), and the contaminant fluid reaction product (e.g. oxygen), for example based on the respective specific heat capacities of the fluid reaction products, the sensor or a controller to which it is coupled is configured to determine when the flow stream comprises an amount of the contaminant fluid reaction product. For example it may be calibrated to indicate that the amount is above a threshold, or may be configured to estimate or calculate the mass fraction of the respective fluid reaction products (e.g. hydrogen and oxygen).

The presence of a contaminant fluid reaction product may be indicative of a bias of flow towards the respective chamber of the electrolyser from which the outlet flow comprising the contaminant fluid reaction product is discharged. Accordingly, the controller may determine to adjust a setting of one or more of the discharge valves so as to reduce or remove the bias. For example, if an excess amount of a contaminant fluid reaction product is determined in an outlet flow associated with the first discharge valve 218, the controller may control the first discharge valve 218 to reduce a flow rate through the first discharge valve 218 (for example, by partially closing the valve or setting a higher back pressure to be maintained).

While the above examples discuss reactive control methods to maintain target operating parameters of the electrolyser, such control methods may be optional and the electrolyser may be configured such that the electrolysis reaction proceeds without such interventions. Control of the discharge valves may be particularly suitable for electrolysers having a single porous wall (e.g. electrode arrangements as shown in Figures 3a-3g), as it may be that the retention chamber is to be maintained at a lower pressure than the inlet chamber in order to drive a branch flow of electrolyte fluid through the porous wall. It may be that electrolysers having a dual configuration of porous walls (e.g. as described above with reference to Figure 5) can be more easily configured to operate without control of the back pressure applied to the respective outlets. For example, it may be that the respective porous walls can be configured so that a desired flow rate of electrolyte fluid passes through each of the porous walls in use without reactive control or balancing of the outlet pressures, for example by suitable selection of a permeability and/or porosity of the respective porous walls.

Further example methods of manufacturing a compound porous electrode for use with an electrolyser 10, 20 50 as described above with respect to any of Figures 1, 2, and 5 using any of the electrode configurations of 3b-3g will now be described by way of example, with reference to the method 70 of Figure 8a and the method 75 of Figure 8b.

In the examples described below, the compound porous electrode is formed by an additive manufacture or powder pressing process in the form of a sheet-like or tubular wall having a thickness direction between two opposing major surface of the compound porous electrode (i.e. the first and second surfaces of the compound porous electrode). The compound porous electrode is formed so that it has a layered structure between the two major surfaces of the electrode including at least two layers or layered regions having different material compositions, such as an electrocatalytic region and a passive region as described above with reference to Figures 3b-3e. Accordingly, in use a branch flow of electrolyte fluid through the compound porous electrode between the two opposing major surfaces (e.g. from the inlet surface adjacent to the inlet chamber to the outlet surface adjacent to a respective retention chamber) along the thickness direction (the radial direction when the electrolyser has an axisymmetric configuration) passes through the at least two layers or layered regions. One of the layers or layered regions forms an electrocatalytic region of the porous electrode which is spaced apart from at least one of the major surfaces of the electrode. By way of example, as described above with respect to the examples of Figures 3b-3e, the electrocatalytic region 211 is spaced apart from at least the inlet side of the first compound porous electrode 217 electrode which opposes the second electrode 202, by a passive region of the compound porous electrode which is configured to be less electrocatalytically active than the electrocatalytic region for the respective half-reaction of electrolysis of an electrolyte fluid, or to inhibit the respective half-reaction.

In the method 70 of Figure 8a, the compound porous electrode is formed by an additive manufacturing process. the compound porous electrode may be formed in a layer-by-layer (or slice-by-slice) manner (each successive layer of the additively manufacturing process not being associated with the layered electrocatalytic and/or non-electrocatalytic regions of the formed component, and referred to in the following description as slices) in which a build material (e.g. a powder) is deposited on a bed or platform in successive layers which are progressively selectively sintered or fused to form the compound porous electrode in a slice-by-slice manner. Suitable additive manufacturing processes include selective laser sintering (SLS) and metal binder jetting.

In block 72 of the method, build material for the additive manufacturing process is distributed so that the compound porous electrode can be formed with the respective layers having different material compositions. In block 74 of the method, the compound porous electrode is progressively formed by sintering or fusing the build material. As will be appreciated, in an additive manufacturing process, blocks 72 and 74 are repeated for each successive layer of build material.

In examples where the porous electrode is substantially planar, the at least two layered regions of the electrode having different material compositions may be formed by depositing and then sintering or fusing slices of a first build material having a first composition to form one of the layered regions such as a passive region (typically formed of multiple fused slices of build material), and then transitioning to depositing and sintering or fusing slices of a second build material having a different second composition to form another of the layered regions such as an electrocatalytic region.

In other examples, for example where the porous electrode has a tubular structure in which the layered regions are annular and coextensive along a longitudinal extent of the electrode, the at least two layered regions of the electrode having different material compositions may be formed by depositing and selectively sintering or fusing slices in a stacking direction corresponding to the longitudinal direction of the electrode, wherein the slices comprise both a first build material and a second build material having different compositions in a pattern corresponding to the cross-sectional profile of the layered regions. It may be that slices of build material comprise first and second build materials corresponding to a passive region and an electrocatalytic region of the compound porous electrode respectively.

When the compound porous electrode is formed by a powder processing process, the at least two layers having different material compositions may be formed sequentially, as will now be described by way of example with reference to the method 75 of Figure 8b.

In block 76, a first powder material (e.g. for a relatively less electrocatalytically active passive region of the compound porous wall, such as stainless steel 316 or titanium) may be provided within a first die having a shape corresponding to a first layer of the compound porous electrode (e.g. a passive region) to be manufactured, and in block 77 the first die may subjected to pressure to press the contained powder at a suitable porosity to provide an intermediate product. In block 78, the intermediate product may be transferred to a second die having a shape corresponding to a union of the first layer and a second layer (e.g. an electrocatalytic region), and a second powder material (e.g. for an electrocatalytic region, such as nickel, or a nickel alloy as described herein, for example an Inconel® alloy such as Inconel® 600) added in a location of the die corresponding to the second layer. In block 79, a second pressing is applied to press the second powder material at a suitable porosity to provide a two-layer product having both layers with respective compositions (e.g. passive and electrocatalytic regions). The second pressing or a separate process may be applied to sinter the two layers or regions together to provide an integrated compound porous electrode (for example by applying elevated temperature and pressure). For example, it may be that the intermediate product is sintered in the first die (e.g. in a hot pressing process), or may be sintered after removal from the first die and before insertion into the second die (e.g. in a hot or cold pressing process). It may be that the intermediate product is pressed but not sintered in the first die, and it may be that the two layers are only sintered after both layers are pressed together, whether in the same die or a separate die. Further regions or layers may be added using further dies and pressings. Any suitable powder pressing technique may be used, such as hot pressing (HP), cold isostatic pressing or hot isostatic pressing (HIP).

Optionally, in block 80 the integrated compound porous electrode may be machined to size. For example, it may be that the dies for the two or more regions are configured so that the product (e.g. the integrated compound porous electrode) has a size and shape larger than the net shape of the finished compound porous electrode. For example, the respective regions may have a thickness greater than that of the finished compound porous electrode, which may assist with maintaining structural integrity of the intermediate product for transfer between the dies, and may transfer a requirement for dimensional accuracy to the machining step rather than the pressing steps. When the finished compound porous electrode is to be annular, it may be that the respective inner region is formed as a cylinder. Machining may comprise boring a core to define the radially-inner surface of the compound porous electrode. Further machining may be performed to remove material (e.g. by lathing) to define the radially outer surface of the compound porous electrode.

While some example configurations of an electrolyser are disclosed herein it will be appreciated that the invention is defined in the claims and may not be limited to any specific configuration shown in and described with reference to the drawings.

Example

A test electrolysis installation was arranged as illustrated schematically in Figure 6, including a source of electrolyte fluid 401, a compressor 402, a heater 403, an inlet conduit 404 leading to a monitoring manifold 405, an electrolyser 50, a first discharge manifold 410, and a second discharge manifold 420.

The electrolyser 50 was constructed in the form of an annular electrolyser as illustrated schematically in Figure 5. The electrolyser 50 comprised first and second retention chambers 210, 520 on opposing sides of an inlet chamber 200. The inlet chamber 200 was separated from the first retention chamber 210 by first (inner) porous wall 217 functioning as an electrode of the electrolyser 50. The inlet chamber 200 was separated from the second retention chamber 520 by second (outer) porous wall 528 also functioning as an electrode of the electrolyser 50. The first (inner) porous wall and the second (outer) porous wall were each connected to a power supply biased such that the first (inner) porous wall functioned as a cathode and the second (outer) porous wall functioned as an anode.

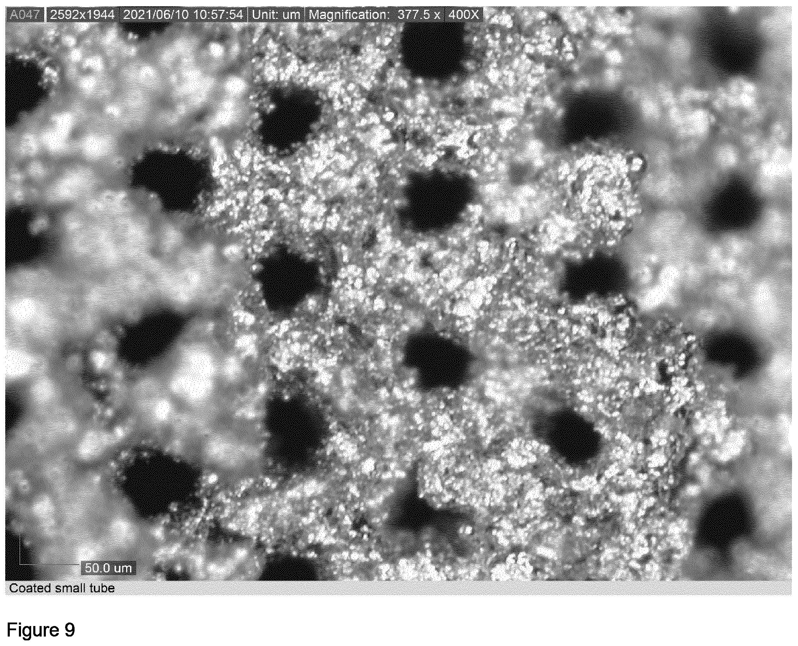

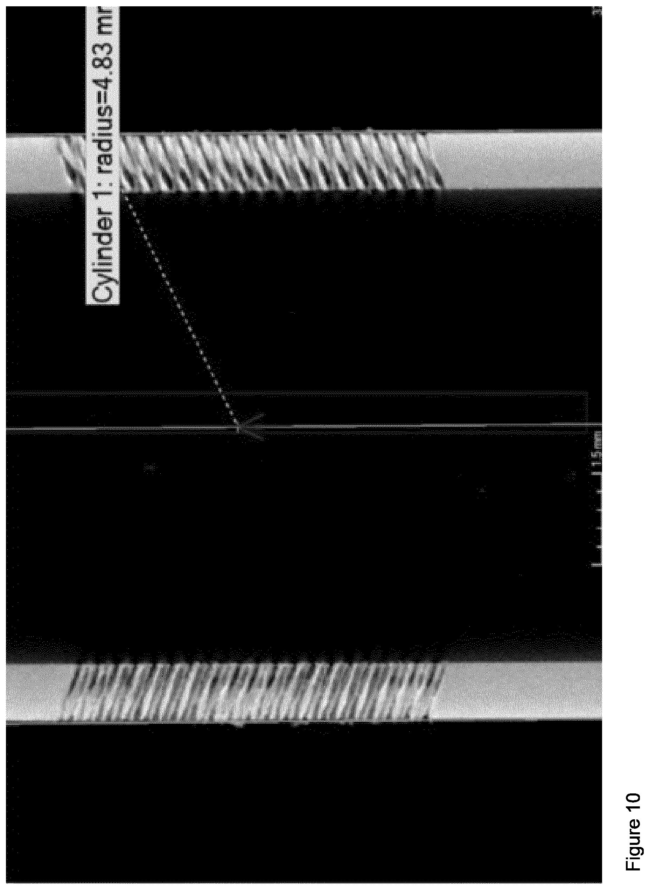

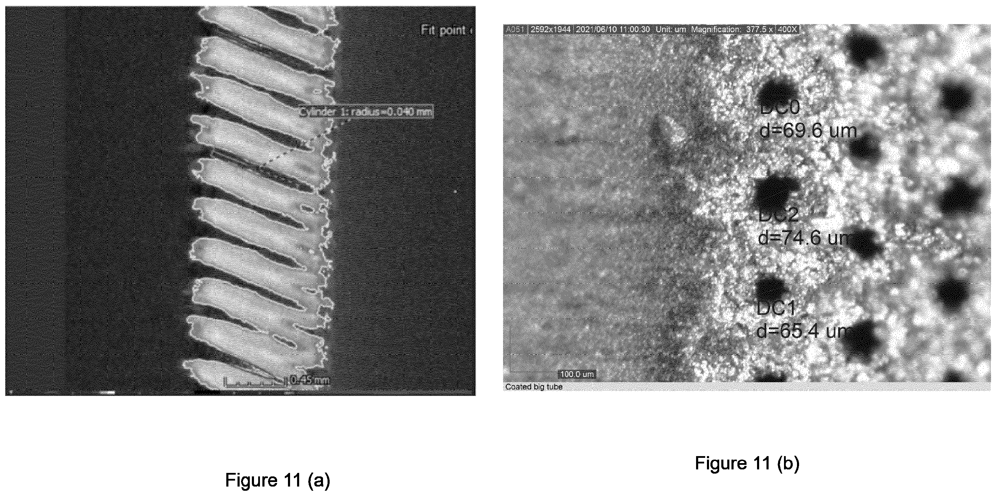

The first porous wall was prepared by laser drilling channels into a first tube formed from Inconel® alloy 625 (a nickel-chromium alloy also containing iron, molybdenum, niobium and other alloying elements). The first tube had an outer diameter of 0.25 inches (6.35 mm), a tube wall thickness of 0.889 mm and a longitudinal length of 215 mm. Prior to laser drilling, the outer and inner surfaces of the first tube were passivated by coating with alumina ($Al_2O_3$) by chemical vapour deposition (CVD). The coating of alumina was about 1 $\mu$m thick, as determined by gravimetric estimation. The channels were drilled through the full thickness of the first tube wall (including the alumina coating) using a millisecond laser operating at 500 Hz. The channels were inclined at 20° to the horizontal when the longitudinal axis of the tube was aligned with the vertical. The channels were drilled in rows to form a pattern as shown in Figure 9. The pattern was characterised by a channel-to-channel offset of 0.2 mm, a row-to-row offset of 0.2 mm (such that there were 5 rows per mm) and a circumferential channel number density of 99 holes per circumference of the tube. Each channel was formed using 30 laser pulses and requiring 0.2 J of energy. The dimensions of the channels were assessed using X-ray Computed Tomography (XCT) and optical microscopy and analysis of the resultant images, the results of which are shown in Figures 10, 11 (a) and 11 (b). The channels were found to have diameters from about 60 $\mu$m to about 80 $\mu$m at the inlets and outlets of the channels (i.e. at the outer and inner external surfaces of the tube). Figure 11 (a) illustrates a channel found to have an internal radius of about 40 $\mu$m using XCT. Figure 11 (b) illustrates channels found to have inlet diameters of about 69.6 $\mu$m, about 74.6 $\mu$m and about 65.4 $\mu$m by optical microscopy.

The second porous wall was prepared by laser drilling channels into a second tube formed from Inconel® alloy 625. The second tube had an outer diameter of 0.375 inches (9.525 mm), a tube wall thickness of 0.889 mm and a longitudinal length of 142 mm. Prior to laser drilling, the outer and inner surfaces of the second tube were passivated by coating with alumina ($Al_2O_3$) by chemical vapour deposition (CVD). The coating of alumina was about 1 $\mu$m thick, as determined by gravimetric estimation. The channels were drilled through the full thickness of the second tube wall (including the alumina coating) using a millisecond laser operating at 500 Hz. The channels were inclined at 20° to the horizontal when the longitudinal axis of the tube was aligned with the vertical. The channels were drilled in rows to form a pattern as shown in Figure 9. The pattern was characterised by a channel-to-channel offset of 0.152 mm, a row-to-row offset of 0.2 mm (such that there were 5 rows per mm) and a circumferential channel number density of 196 holes per circumference of the tube. Each channel was formed using 20 laser pulses and requiring 0.18 J of energy. The dimensions of the channels were assessed using XCT and optical microscopy and analysis of the resultant images. The channels were found to have diameters from about 60 $\mu$m to about 80 $\mu$m at the inlets and outlets of the channels (i.e. at the inner and outer external surfaces of the tube).

The first and second porous walls 217, 528 were arranged as illustrated in Figure 5 with a separation gap of about 0.692 mm. The first and second walls were surrounded by an outer tubular housing having a diameter of 19.05 mm. The first, core retention chamber 210 was defined as the internal space surrounded by the first porous wall 217. The second, outer retention chamber 520 was defined as the space between the second porous wall 528 and the outer tubular housing. The inlet chamber 200 was defined as the space between the first and second porous walls 217, 528. The first and second tubes are installed so that in the assembled configuration, the effective lengths of the electrodes that are exposed to the inlet chamber for radial flow and ion transfer are equal and approximately 40mm.

The electrolyser was operated using an electrolyte consisting of a 0.5 mol (1.2 wt. %) solution of lithium hydroxide (LiOH) in water. The electrolyte was prepared by diluting 98% reagent grade lithium hydroxide (available from Sigma-Aldrich) with deionised water to obtain the desired concentration.

The heater and the compressor were operated to hold the system at a pressure of 230 bar (23MPa) and a temperature of 385°C.

The flow rate of electrolyte through the electrolyser was controlled to be 10 ml/minute.

Following an initial pressurisation and heating of the system using deionised water, once the operating pressure and temperature were reached, the electrolyte was pumped through the electrolyser. The electrolyser cell was monitored until a voltage drop was observed on the power supply and then the current supplied to the cell was gradually increased to reach operating conditions of 500 mA at 1.56 V (corresponding to 80 % of the lower heating value of hydrogen). Electrolysis of the electrolyte was then carried out for 15 minutes.

Gas output from the first and second retention chambers into the first and second discharge manifolds during electrolysis was collected in corresponding glass vessels filled with deionised water (the product gases displacing the water in the vessels as it was collected). The gases collected in the glass vessels were analysed by gas chromatography using an Agilent 6890 Gas Chromatograph (available from Agilent Technologies, Inc., USA) equipped with a Shincarbon ST column (available from Shinwa Chemical Industries Ltd., Japan) supplied with argon as the carrier gas. Gases were detected using a thermal conductivity detector built into the Agilent 6890 Gas Chromatograph. Gas chromatography runs were performed isothermally at 35°C. 100 $\mu$L samples of gas were injected into the column at time. Calibration plots were also produced by injecting various quantities of oxygen and hydrogen into the gas chromatograph and analysing the results.

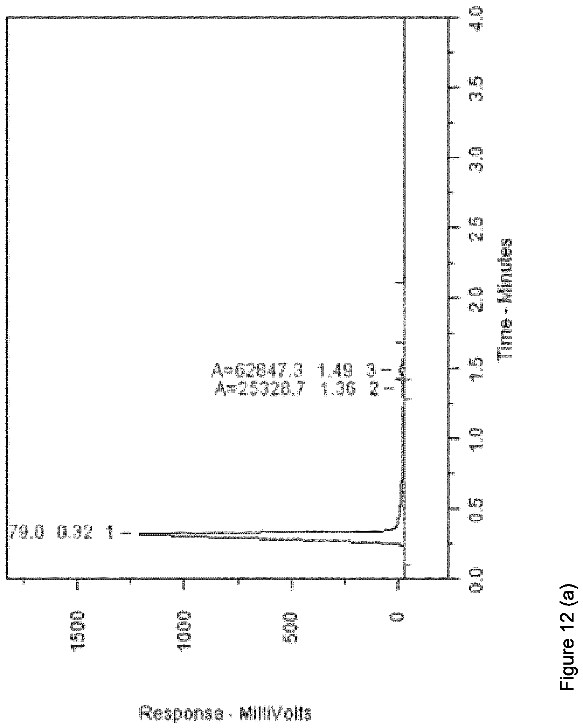

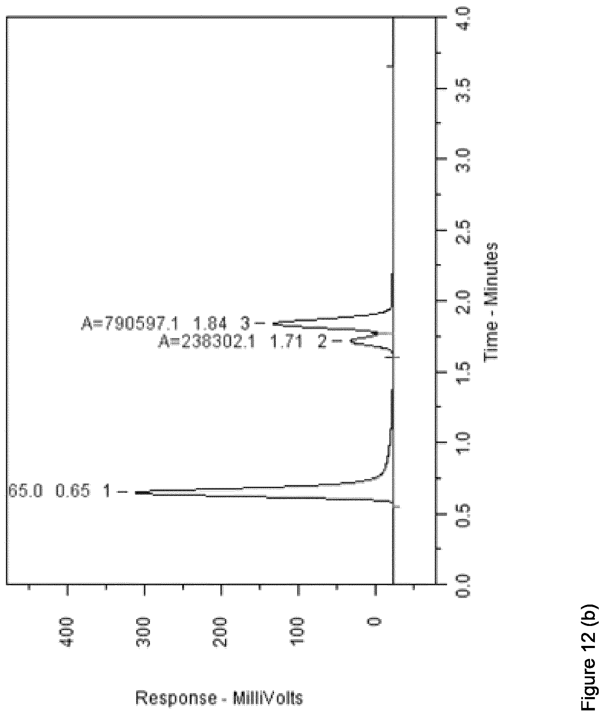

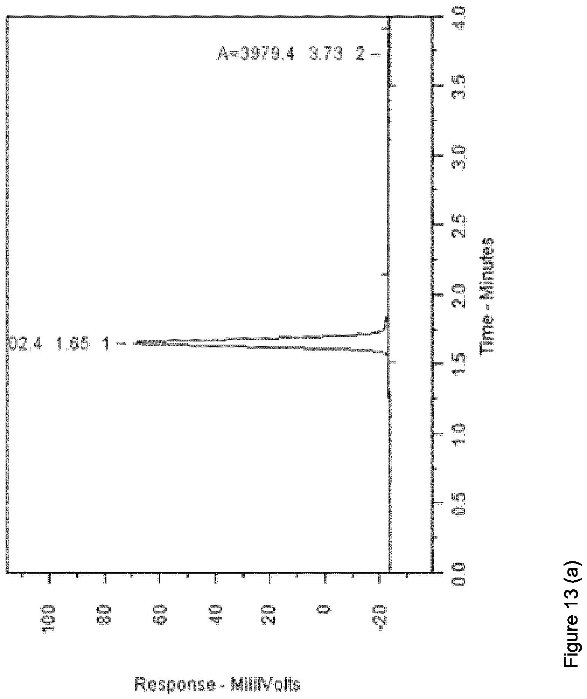

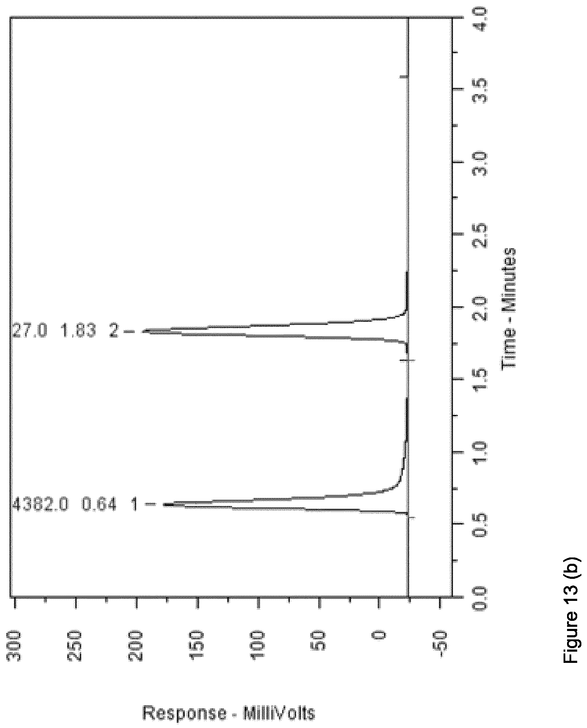

Representative gas chromatography results for the gases obtained from running the electrolyser are shown in Figures 12 and 13. Figure 12 (a) is a representative chromatogram of gas obtained from the cathode (cathode gas) featuring three peaks relating to (going from left to right) hydrogen, oxygen and nitrogen content. Figure 12 (b) is a representative chromatogram of gas obtained from the anode (anode gas) also featuring three peaks relating to (going from left to right) hydrogen, oxygen and nitrogen content. Figure 13 (a) is a representative chromatogram of oxygen calibration gas. Figure 13 (b) is a representative chromatogram of hydrogen and nitrogen calibration gas.

The composition of the cathode gas and anode gas, as obtained by the gas chromatography, is provided in Table 1. These results were obtained by averaging measurement values across three different injected samples. The corresponding standard deviations in the measurement values are also provided.

Table 1.

| | Cathode gas | | Anode gas | |
|---|---|---|---|---|
| | Average value | Standard deviation | Average value | Standard deviation |
| Hydrogen content (mol %) | 98.46 | ±0.95 | 57.30 | ±0.17 |
| Oxygen content (mol %) | 1.54 | ±0.95 | 42.70 | ±0.17 |

The values in Table 1 have been corrected to account for air ingress into the gas storage vessels by quantifying the amount of nitrogen present in each sample and subtracting the equivalent amount of oxygen according to the ratio of nitrogen to oxygen in air. For example, assuming that the ratio of $N_2:O_2$ in air is 3.7, the volume of oxygen in the sample arising from air contamination can be calculated as the measured volume of nitrogen in the sample divided by 3.7.

**Modelling and Simulations**

Simulations of supercritical flow through example electrolyser cells were conducted to determine a composition distribution of hydrogen and oxygen reaction products and evaluate flow patterns that relate to diffusion and crossover of species between the respective retention chambers.

The simulations relate to an example axisymmetric electrolyser configuration having an inlet chamber, a radially inner (core) retention chamber separated from the inlet chamber by an inner compound porous electrode, and a radially outer retention chamber separated from the inlet chamber by an outer compound porous electrode. In this example configuration the inner electrode is the anode such that the inner retention chamber is for retaining and discharging oxygen as a reaction product, and the outer electrode is the cathode such that the outer retention chamber is for retaining and discharging hydrogen as the reaction product.

*Model Geometry*

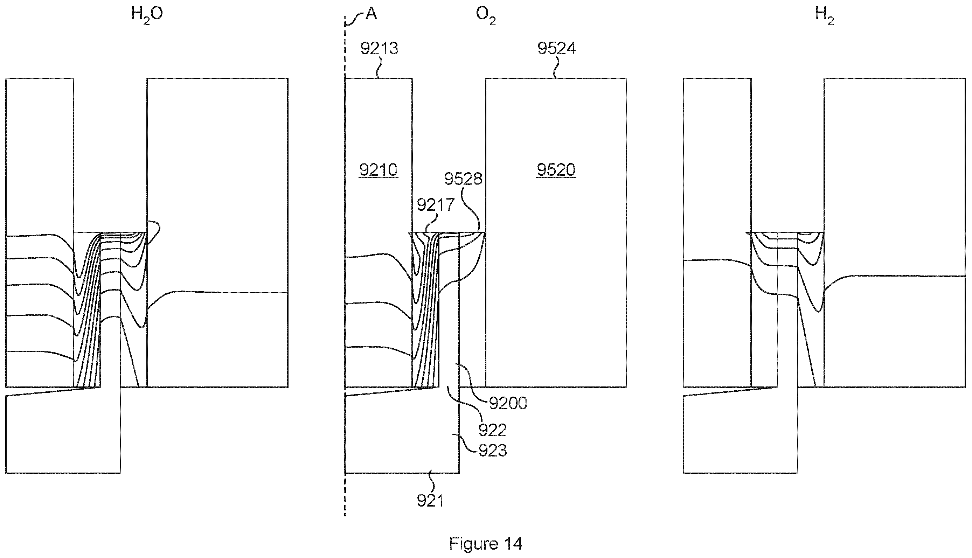

The model geometry is shown in each of Figures 14-16, with the principal radial dimensions of the compound porous walls and their separation substantially corresponding to that described above with respect to the tested example.

The model has a vertical orientation as shown in the drawings, so that gravity is downward in the orientation of the drawing. The model is axisymmetric, with a longitudinal axis A of axisymmetry as shown in Figure 14.

As annotated in Figure 14, the model has an inlet manifold 923 at its lower end, with an inflow boundary 921 having a mass flow condition as described above.

The manifold 923 opens into an annular inlet chamber 9200 at an inlet 922, which extends substantially linearly between two compound porous electrodes 9217, 9518 along a length of 100mm. This length corresponds to the length over which the electrodes oppose each other for ion exchange as described elsewhere herein. The inner radius of the annular inlet chamber is 0.125inches (3.175mm) and the outer radius of the annular inlet chamber is 3.675mm, such that there is a separation between the compound porous electrodes of 0.6875mm.

Each of the compound porous electrodes 9217, 9518 have a thickness of 0.9mm and are simulated with an equal length as that of the annular inlet chamber 9200.

On a radially inner side of the (first) radially inner compound porous electrode 9217 there is a (first) radially inner retention chamber 9210, which is cylindrical with a radius corresponding to the inner dimension of the first compound porous electrode 9217. The inner retention chamber 9210 extends upwards by 100mm beyond the longitudinal extent of the compound porous electrodes (as modelled) towards an upper first outflow boundary 9213.

On a radially outer side of the (second) radially outer compound porous electrode there is a (second) radially outer retention chamber 9520, which is annular with an internal radius corresponding to the outer radius of the outer dimension of the second compound porous electrode 9518, and an outer radius of 0.375 inches (9.525mm). The outer retention chamber 9520 extends upwards beyond the longitudinal extent of the compound porous electrodes (as modelled) towards an upper first outflow boundary 9524.

*Model Definition and Conditions*

The simulations were conducted using simulation software provided by COMSOL Multiphysics (RTM) 5.6, developed by COMSOL AB of Sweden.

The simulation models reflect the following assumptions. A hydrogen-oxygen-water mixture with NaOH electrolyte is a fully miscible and supercritical single phase at all conditions of interest (pressure >22.MPa, temperature > 380°C). An inlet flow of up to 30 g/minute to the electrolyser remains laminar within the electrolyser at the operating conditions.

The simulations model diffusion of the components of a hydrogen-oxygen-water mixture. Density and viscosity are modelled as functions of the local composition, and pressure, for a reference temperature of 400°C. The simulations model fluid flow using the weakly compressible Navier-Stokes equations, including gravity (for modelling buoyancy forces). The simulations solve a steady-state flow condition.

The simulations model the inlet flow as a fully developed (parabolic) laminar flow profile at a specified mass flow rate. The simulations model the outflow boundaries as constant outlet pressure boundaries (at 23 MPa). The no slip condition is applied for walls of the chambers of the model. The simulations model the inlet flow as water at a pressure of 23 MPa, and at a temperature of 400°C (corresponding to a density of $134 kg/m^{-3}$, viscosity of 27.4 $\mu$Pa).

The simulations model the electrodes as a porous media. The simulations model an isotropic porous electrode with a porosity of $\varepsilon=0.2$, and a pore diameter of $10\mu m$.

The simulations are defined to reflect an assumption that the respective hydrolysis half-reactions occur throughout the porous electrodes on the basis of a uniform current density. The simulations model the reaction using sources and sinks for the respective components in the porous electrodes.

The simulations reflect an assumed operating current of 250A, corresponding to a target hydrogen production rate of $1.42 kg.h^{-1}$ for 150 cells in parallel.

*Simulation Conditions*

Results for three simulations are discussed below.

In the first simulation, both of the electrodes are modelled as isotropic porous electrodes.

In the second simulation, both of the electrodes are modelled with anisotropic porosity, to simulate the effect of the inclined channels as disclosed elsewhere herein. The anisotropic porosity is implemented to reflect a channel inclination of 20° from the vertical. In order to study the effects of implementing anisotropic porosity in isolation, other parameters of the simulation are identical to the first simulation.

The third simulation directly corresponds to the first simulation, but the simulation is performed without modelling the effects of gravity (i.e. no buoyancy).

*Simulation Results*

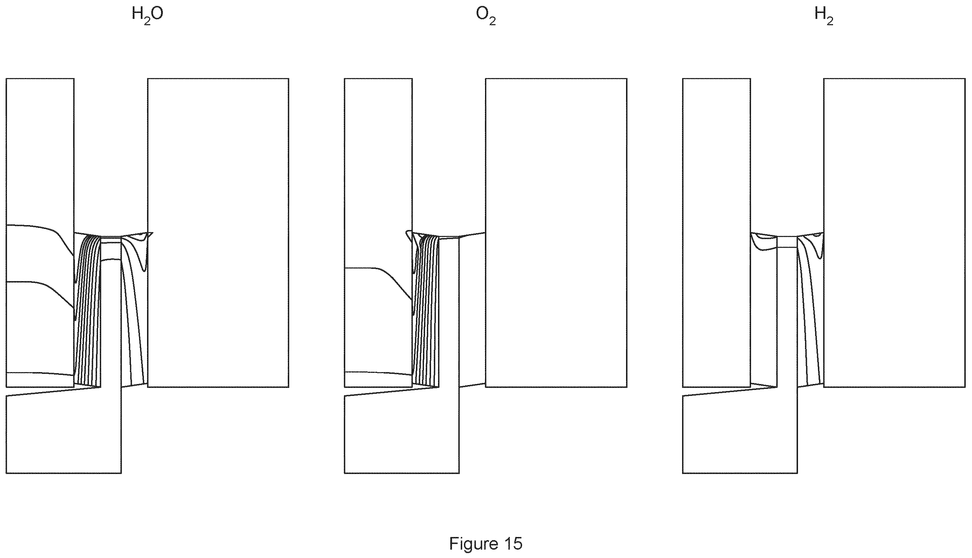

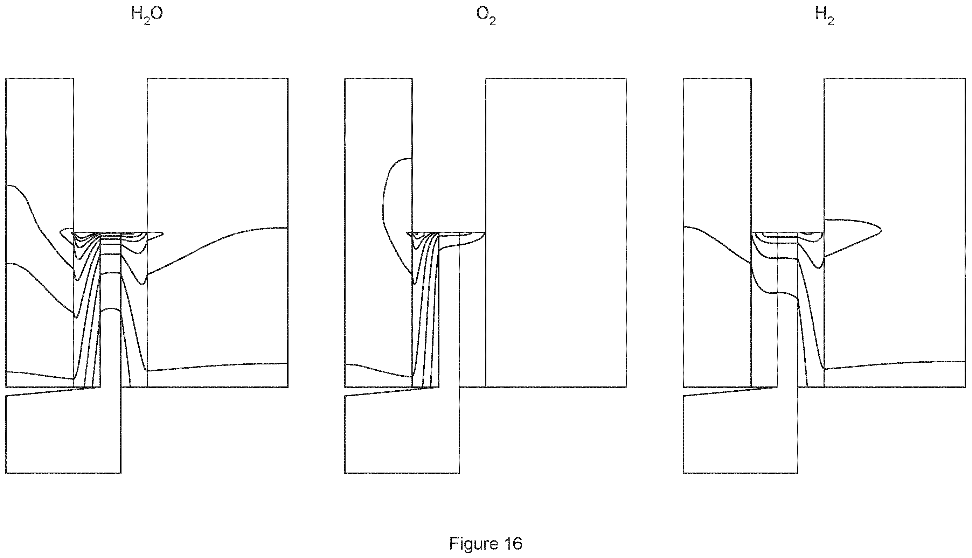

Results for the three simulations respectively are shown in Figures 14-16 (Simulation 1 - Figure 14; Simulation 2 - Figure 15; Simulation 3 - Figure 16). Each Figure includes three contour plots showing contours for local molar concentration of $H_2O$, $O_2$ and $H_2$ as annotated. The contour lines show variations of local molar concentration at dimensionless intervals of 0.1 (on a scale from 0 to 1). It should be appreciated that the inflow boundary has a molar concentration of $H_2O$ equal to 1, and as such each progressive contour in the $H_2O$ contour plots along flow directions towards the outflow boundaries represents an incremental reduction of the respective molar concentration of 0.1. Similarly, it should be appreciated that the inflow boundary of the other components ($H_2$ and $O_2$ is 0 at the inflow boundary, and so each progressive contour towards the outflow boundaries represents an incremental increase of the respective molar concentration of 0.1. The contours are generally curvilinear and so are easily distinguished from the boundaries between the electrodes and the chambers, which are linear.

As shown in Figure 14 and as reported in Table 2 below, the first simulation results in relatively high levels of $O_2$ in the first retention chamber 9210 associated with the first compound porous electrode 9217 (serving as the anode), with relatively lower levels of $O_2$ present in the second retention chamber 9524 associated with the second compound porous electrode 9524 serving as the cathode. Similarly, there are relatively high levels of $H_2$ in the second retention chamber 9524 and relatively lower levels of $O_2$ in the first retention chamber.

As shown in the contour plot for $H_2O$ concentration, $H_2O$ concentration is significantly lower towards the outflow of the inner retention chamber 9213 than in the outer retention chamber, with significant stratification. As the simulation takes into account buoyancy effects, and defines the outflows 9213, 9524 as constant pressure boundaries, it is thought that the higher density of $O_2$ which is generally retained in the first retention chamber 9213 effectively displaces even denser $H_2O$ from the first retention chamber 9213. In other words, unreacted $H_2O$ does not build up in the inner retention chamber owing to accumulation of a column of $O_2$ in the inner retention chamber, which is relatively more dense than the $H_2$

which accumulates in the opposing retention chamber, with the equilibrating buoyancy forces biasing flow (e.g. flow of unreacted $H_2O$) in the branch flow towards and through the outer electrode to the outer retention chamber.

Consequently, in the first simulation flow (e.g. of unreached $H_2O$) may be biased towards and through the radially outer compound porous electrode 9528 (the cathode), as demonstrated by the relatively high molar concentration of $H_2O$ in the outer retention chamber 9520. This biasing of the branch flows dependent on the flow properties associated with the compound porous electrodes and the outflow conditions is as envisaged elsewhere herein. It is thought that this bias in the branch flows may promote prevention of a reverse flow of $H_2$ through the cathode (the outer compound porous electrode), while permitting a relatively higher crossover flow of $O_2$ from the anode (the inner compound porous electrode) and the associated inner retention chamber.

As defined above, the second simulation differs from the first simulation in that the model is adapted to simulate anisotropic porosity representative of inclined channels. As shown in Figure 15, the second simulation results in generally similar flow patterns in the component concentrations, but with improved separation of the reaction products and thereby lower levels of crossover (i.e. lower levels of $O_2$ in the retention chamber associated with the cathode, and lower levels of $H_2$ in the retention chamber associated with the anode).

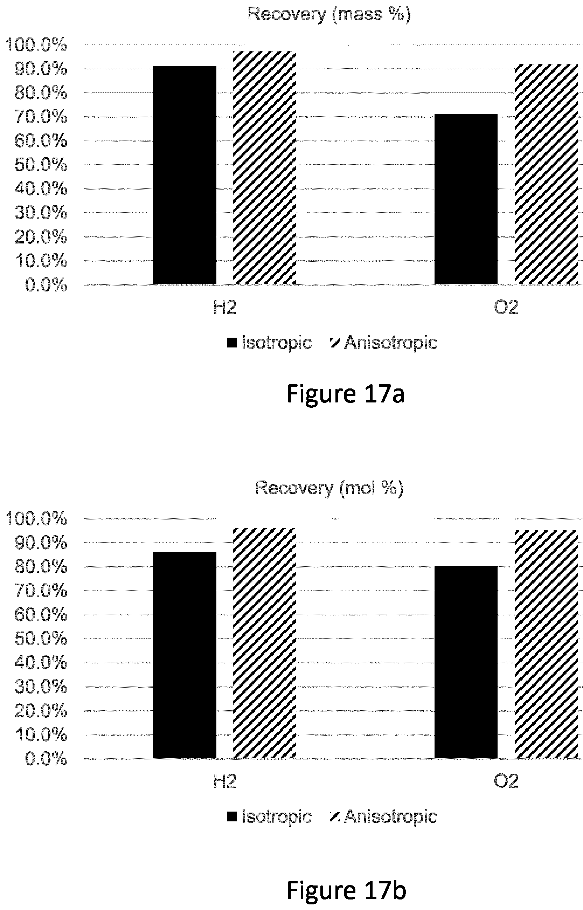

This is best shown in the Table 2 below and in the charts Figures 17a and 17b. Table 2 below reports local molar and mass concentrations of the components at the respective outflows. Figure 17a reports the recovery of $H_2$ and $O_2$ at the respective retention chambers, as a percentage of the total mass of each respective reaction product. Figure 17b reports the recovery of the components as a molar concentration.

**Table 2**

| | Isotropic (Simulation 1) | | Anisotropic (Simulation 2) | |
|---|---|---|---|---|
| Mass Flow Quantity | Inner Channel | Outer Channel | Inner Channel | Outer Channel |
| Total mass g/min | 0.95 | 4.05 | 1.22 | 3.78 |
| H2 g/min | 0.01 | 0.14 | 0.00 | 0.15 |
| O2 g/min | 0.90 | 0.37 | 1.15 | 0.10 |
| H20 g/min | 0.03 | 3.54 | 0.06 | 3.53 |
| % of total H2 outflow by mass | 8.9% | 91.1% | 2.4% | 97.6% |
| % of total O2 outflow by mass | 71.0% | 29.0% | 92.1% | 7.9% |
| H2 mole fraction %, extracted gas | 19.8% | 86.2% | 4.9% | 96.1% |
| O2 mole fraction %, extracted gas | 80.2% | 13.8% | 95.1% | 3.9% |

As stated elsewhere herein, it is considered that the anisotropic nature of the porosity corresponding to the inclined channels inhibits reverse flow (e.g. reverse diffusion) of the respective reaction products. In particular, such a reverse flow is against the net flow direction through the respective channels, and also against the direction of buoyancy forces considering the relatively lower density of the reaction products generated at the respective compound porous electrodes, as compared with water.

Notably, the separation performance (i.e. crossover reduction) of the second simulation relative to the first simulation is provided for both gases, reducing crossover flows in both directions (i.e. reducing reverse flows of the reaction products through the respective electrodes).

Consequently, a comparison of the second simulation and the first simulation does not support a conclusion that the modification to utilise anisotropic porosity merely adjusts a bias of an unreacted flow of $H_2O$ towards one electrode or the other. In particular, as shown in Table 1 above, the flow of unreacted $H_2O$ through the respective outflows appears to be substantially the same between the two simulations, such that an underlying (but acceptable) bias in the branch flows is still considered to persist. Despite this, the anisotropic electrodes appear to better resist reverse flow of $O_2$ through the anode. This results in a greater difference between the fluid densities observed at the inner and outer outflows (and along the longitudinal extent of the retention chambers) due to the relatively higher concentration of $O_2$ in the inner retention chamber, and despite the action of buoyancy forces which would otherwise tend to drive a bias in the branch flows in order to stratify the fluid.

As defined above, the third simulation (with results shown in Figure 16) corresponds to the first simulation but differs in that gravity is not simulated (i.e. there are no buoyancy forces). While this is a non-physical simulation, it provides a comparative example of the flow pattern of unreacted $H_2O$ and the impact on the branch flows. In particular, in the absence of buoyancy forces driving stratification of the reaction products in the retention chambers, there is a relatively greater proportion of unreacted $H_2O$ in the inner retention chamber, and a relatively lower amount in the outer retention chamber, indicating that a change in any bias of the branch flows. Correspondingly, there is a relatively lower crossover flow of $O_2$ to the outer retention chamber, but a relatively higher diffusion of $H_2$ to the inner retention chamber, as shown in the results reported in Table 3 below.

**Table 3**

| Mass Flow Quantity | Isotropic Porosity (Simulation 1) | | Isotropic (no buoyancy) (Simulation 3) | |
|---|---|---|---|---|
| | Inner Channel | Outer Channel | Inner Channel | Outer Channel |
| Total mass g/min | 0.95 | 4.05 | 1.82 | 3.18 |
| H2 g/min | 0.01 | 0.14 | 0.02 | 0.14 |
| O2 g/min | 0.90 | 0.37 | 1.07 | 0.19 |
| H20 g/min | 0.03 | 3.54 | 0.73 | 2.85 |
| % of total H2 outflow by mass | 8.9% | 91.1% | 13.1% | 86.9% |
| % of total O2 outflow by mass | 71.0% | 29.0% | 84.7% | 14.3% |
| H2 mole fraction %, extracted gas | 19.8% | 86.2% | 23.7% | 91.9% |
| O2 mole fraction %, extracted gas | 80.2% | 13.8% | 76.3% | 8.1% |

The flow patterns discussed above in the context of there being a bias in branch flows towards one electrode, and the associated impacts on separation of the reaction products and any crossover flows, are envisaged elsewhere herein. In particular, it is discussed elsewhere herein how the net branch flow through a compound porous electrode (or porous wall) serves to prevent a reverse flow of the associated reaction product therethrough, and that the proportion of flow which is directed through each of the respective compound porous electrodes may vary in dependence on a number of factors, including for example the flow resistance presented by the respective compound porous electrodes (which may be adjusted to influence the pattern of branch flows) and the outflow conditions such as a maintained back pressure.

The disclosure extends to the subject-matter of the following numbered clauses:

Clause 1. A method of manufacturing a compound porous electrode for an electrolyser, comprising:

forming the compound porous electrode by an additive manufacturing or powder pressing process in the form of a sheet-like or tubular wall having a thickness direction between two opposing major surfaces of the porous electrode;
wherein build material for the additive manufacturing process, or powder for the powder pressing process, is distributed so that the compound porous electrode is formed with a layered structure between the two major surfaces including at least two layers having different material compositions, whereby in use flow through the porous electrode between the two opposing surfaces along the thickness direction passes through the at least two layers; and
wherein one of the layers forms an electrocatalytic region of the porous electrode which is spaced apart from at least one of the major surfaces of the electrode.

Clause 2. A method according to Clause 1, wherein the electrocatalytic region comprises an electrocatalyst for catalysing an oxidation or reduction reaction with an aqueous electrolyte fluid.

Clause 3. A method according to Clause 1 or 2, wherein a layer of the porous electrode other than the electrocatalytic region provides a passive region which is less electrocatalytically than the electrocatalytic region for catalysing a respective half-reaction of electrolysis of the electrolyte fluid, the passive region optionally comprising an insulating or dielectric material to inhibit the respective half-reaction of electrolysis of the electrolyte fluid.

Clause 4. A method according to any of Clauses 1 to 3, comprising installing the compound porous electrode in an electrolyser to provide an electrolyser or electrolyser installation in accordance with the first or second aspect, or any of appended claims 1-22.

Clause 5. A method of manufacturing a compound porous electrode for an electrolyser, comprising:

forming a body of the compound porous electrode so that the body extends linearly along a longitudinal axis and has an orthogonal thickness direction from a first major surface to an opposing major surface;

forming a plurality of inclined channels extending through the body form the first major surface to the second major surface, each being inclined with respect to both the longitudinal axis and the thickness direction;

wherein the plurality of inclined channels are formed:

during manufacture of the body by an additive manufacturing process; or

after manufacture of the body, for example by removing material from the body such as by a laser drilling process.

Clause 6. A method according to Clause 5, wherein each channel is formed to have a diverging cross section along the thickness direction.

Clause 7. A method according to Clause 5 or 6, further comprising:

providing a coating comprising an electrocatalyst on interior surfaces of the channels and/or on one or both major surfaces of the body, to provide an electrocatalytic region of the body; and/or

providing a passivating coating on a major surface of the body, optionally over a coating comprising an electrocatalyst.

The disclosure extends to the following numbered paragraphs, or "Paras":

Para 1. An electrolyser for performing continuous electrolysis of an electrolyte fluid, comprising:

first and second electrodes;

an inlet chamber disposed between the electrodes and configured to receive a flow of electrolyte fluid;

a retention chamber associated with one of the electrodes for retaining a fluid reaction product generated at the respective electrode, the retention chamber having an outlet to discharge the respective fluid reaction product;

a porous wall separating the inlet chamber and the retention chamber, wherein the porous wall is configured to permit electrolyte fluid to flow from the inlet chamber to the retention chamber, and is configured to inhibit return flow of the respective fluid reaction product from the retention chamber into the inlet chamber; and

a controller configured to control flow control equipment to control thermodynamic and/or flow rate conditions within the electrolyser to maintain supercritical conditions for the electrolyte fluid within the inlet and retention chambers.

Para 2. An electrolyser according to Para 1, wherein the porous wall is configured to inhibit return flow of the respective fluid reaction product from the retention chamber into the inlet chamber when there is no pressure difference over the porous wall and/or when there is a pressure drop over the porous wall from the inlet chamber to the retention chamber.

Para 3. An electrolyser according to Para 1 or 2, wherein the porous wall and a respective one of the electrodes are provided by a compound porous electrode separating the inlet chamber and the retention chamber, the compound porous wall having an inlet side adjacent to the inlet chamber and an outlet side adjacent to the retention chamber; wherein the electrode is provided by an electrocatalytic region of the compound porous electrode.

Para 4. An electrolyser according to Para 3, wherein the electrocatalytic region comprises a coating or layer comprising an electrocatalyst, the coating or layer defining the outlet side of the compound porous electrode.

Para 5. An electrolyser according to Para 3 or 4, wherein the compound porous electrode extends linearly along a longitudinal axis and has an orthogonal thickness direction from the inlet side to the outlet side;

wherein the compound porous electrode has an anisotropic porous structure defined by a plurality of inclined channels configured to permit electrolyte fluid to flow from the inlet chamber to the retention chamber, each being inclined with respect to both the longitudinal axis and the thickness direction;

optionally wherein the inclined channels extend through at least part of the electrocatalytic region.

Para 6. An electrolyser according to Para 5, wherein each channel has a diverging cross section along the thickness direction.

Para 7. An electrolyser according to Para 5 or 6, wherein the inlet side of the compound porous electrode is defined by a passive region which is configured to be less electrocatalytically active than the electrocatalytic region or to inhibit a respective half-reaction of electrolysis or; and/or
wherein the passive region comprises a passivating coating defining the inlet side of the compound porous electrode.

Para 8. An electrolyser according to any of Paras 5 to 7, wherein each channel has an average diameter along its length of between 25-150 $\mu$m.

Para 9. An electrolyser according to any preceding Para, wherein there is a flow path for electrolyte fluid from the inlet chamber to the retention chamber, the flow path comprising:

an upstream portion through a passive region of the porous wall;
a downstream portion through, or adjacent to, an electrocatalytic region of the electrode associated with the retention chamber;
wherein the passive region is configured to be less electrocatalytically active than the electrocatalytic region, or to inhibit a respective half-reaction of electrolysis.

Para 10. An electrolyser according to Para 9, wherein the passive region of the porous wall has a thickness $t_w$ and a permeability $k_w$;

wherein the downstream portion is through an electrocatalytic region having a thickness $t_e$ and a permeability $k_e$;
wherein a relative flow permeability of the passive region of and the electrocatalytic region satisfies the inequality:

$$\frac{k_w t_e}{k_e t_w} \leq 5$$

Para 11. An electrolyser according to any preceding Para, wherein the first and second electrodes have respective ion exchange boundaries that oppose each other, each ion exchange boundary being an electrocatalytic surface of the respective electrode or a boundary of an electrocatalytic region of the respective electrode;

wherein for at least 50% of a surface area of one of the ion exchange boundaries, there is a substantially constant shortest distance of separation to the opposing ion exchange boundary; and/or
wherein the opposing ion exchange boundaries are substantially locally parallel with each other.

Para 12. An electrolyser according to any preceding Para, wherein the electrode associated with the retention chamber is an anode, whereby in use with an aqueous electrolyte fluid:

hydrogen produced at the other electrode which is a cathode is inhibited from migrating to the retention chamber associated with the anode by oxidation at the anode; and
oxygen produced at the anode is inhibited from migrating to the inlet chamber through the porous wall.

Para 13. An electrolyser according to any preceding Para, wherein one of the inlet chamber and the retention chamber is an outer annular chamber and the other is an inner core chamber surrounded by the outer annular chamber.

Para 14. An electrolyser according to any preceding Para, wherein the retention chamber is associated with the first electrode, the outlet of the first retention chamber being a first outlet;

wherein the second electrode is a flow-past electrode defining a wall of the inlet chamber; and
wherein the inlet chamber is for retaining a fluid reaction product generated at the second electrode, and has a second outlet to discharge the respective fluid reaction product.

Para 15. An electrolyser according to any of Paras 1-13, wherein the electrolyser comprises:

a first retention chamber associated with the first electrode for retaining a fluid reaction product generated at the first electrode and discharging it through a first outlet; and
a second retention chamber associated with the second electrode for retaining the fluid reaction product generated at the second electrode and discharging it through a second outlet; and

wherein the electrolyser comprises first and second porous walls each separating the inlet chamber and a respective one of the retention chambers.

Para 16. An electrolyser according to Para 15, wherein:

the inlet chamber is an annular chamber;
one of the first and second retention chambers is an inner core chamber surrounded by the inlet chamber; and
the other of the first and second retention chambers is an outer annular chamber that surrounds the inlet chamber.

Para 17. An electrolyser according to any preceding Para, wherein the controller is configured to control the flow control apparatus to maintain supercritical pressure and temperature conditions for the electrolyte fluid within the inlet and retention chambers, of at least 22 MPa pressure and at least 374°C for an aqueous electrolyte fluid.

Para 18. An electrolyser according to Para 16 or 17, wherein the electrolyser has a first outlet associated with the first electrode for discharging a fluid reaction product generated at the first electrode; and a second outlet associated with the second electrode for discharging a fluid reaction product generated at the second electrode;
wherein the flow control equipment comprises a first discharge valve and a second discharge valve in fluid communication with the first and second outlets respectively.

Para 19. An electrolyser according to Para 14 and Para 18, wherein the first discharge valve is configured to maintain a first target pressure upstream of the valve and the second discharge valve is configured to maintain a second target pressure upstream of the valve;

wherein the first discharge valve and the second discharge valve are configured to maintain different target pressures to cause a pressure drop over the porous wall driving a branch flow of electrolyte fluid through the porous wall from the inlet chamber into the retention chamber; or
wherein the first discharge valve and the second discharge valve are configured to maintain the same target pressure, thereby inhibiting a pressure-driven branch flow of electrolyte fluid through the porous wall from the inlet chamber into the retention chamber;
optionally wherein the controller is configured to control the first discharge valve and/or the second discharge valve to maintain the respective target pressure(s).

Para 20. An electrolyser according to Para 18 or 19, wherein the controller is configured to control the first and/or second discharge valves to:

maintain a target flow rate or a target composition out of one, or each of, the first and second outlets, based on flow rate data, upstream pressure data and/or composition data received by the controller; and/or
maintain a target flow rate ratio between flow out of the first outlet and flow out of the second outlet, based on flow rate data, upstream pressure data and/or composition data received by the controller;
optionally wherein the target flow rate ratio corresponds to:

a ratio of a total flow rate out of the first outlet and a total flow rate out of the second outlet; or
a ratio of a flow rate of a first fluid reaction product out of the first outlet and a flow rate of a second fluid reaction product out of the second outlet.

Para 21. An electrolyser according to any preceding Para, wherein the controller is configured to determine whether there is an excessive amount of the second fluid reaction product in an outlet flow through the first outlet; or configured to determine whether there is an excessive amount of the first fluid reaction product in an outlet flow through the second outlet, based on composition data received at the controller for the respective outlet flow;
wherein the controller is configured to control the first discharge valve and/or the second discharge valve to vary a flow rate through a porous wall of the electrolyser, based on the determination.

Para 22. An electrolysis installation comprising:

a source of an electrolyte fluid, optionally an aqueous electrolyte fluid;
an electrolyser in accordance with any of the preceding Paras for performing continuous electrolysis of the electrolyte fluid.

43

Para 23. A method of operating an electrolyser in accordance with any preceding Para, comprising:

providing an inlet flow of electrolyte fluid to the inlet chamber to conduct electrolysis half-reactions with the first and second electrodes to generate respective fluid reaction products;

controlling thermodynamic and/or flow rate conditions to maintain supercritical temperature and pressure conditions for the electrolyte fluid within the inlet chamber and the or each retention chamber

wherein the electrolyte fluid and/or associated ions flow at least part way through the or each porous wall to react with the respective electrode;

wherein the or each retention chamber retains the respective fluid reaction product and the respective porous wall inhibits return flow of the fluid reaction product from the retention chamber to the inlet chamber.

Para 24. A method according to Para 23, comprising controlling inlet and/or outlet conditions of the electrolyser so that there is no pressure difference over the or each porous wall and/or so that there is a pressure drop over the or each porous wall from the inlet chamber to the respective retention chamber.

Para 25. A method according to Para 23 or 24, wherein the electrolyte fluid is received into the or each retention chamber only through the respective porous wall.

Para 26. A method according to any of Paras 23 to 25, comprising operating the electrolyser so that the electrode associated with the retention chamber, or associated with one of the retention chambers, is an anode; wherein the electrolyte fluid is an aqueous electrolyte fluid, such that:

hydrogen produced at the other electrode which is a cathode is inhibited from migrating to the retention chamber associated with the anode by oxidation at the anode; and

oxygen produced at the anode is inhibited from migrating to the inlet chamber through the porous wall.

Para 27. A method according to any of Paras 23 to 26, wherein the electrolyser is in accordance with one or more of Paras 7 and 9, wherein for each electrode associated with a retention chamber, the rate of the respective half-reaction of electrolysis at the respective electrocatalytic region is greater than the rate of the half-reaction of electrolysis at the respective passive region.

Para 28. A method according to any of Paras 23 to 27, wherein the electrolyser is in accordance with Para 9, wherein a flow of electrolyte fluid to the retention chamber, or a respective flow to each of the retention chambers, passes along the upstream portion of the flow path through the passive region thereby effecting a pressure drop in the flow prior to reacting with the electrocatalytic region.

Para 29. A method according to any of Paras 23 to 28, wherein thermodynamic and/or flow rate conditions are controlled to maintain supercritical pressure and temperature conditions for the electrolyte fluid within the inlet chamber and the or each retention chamber, of at least 22 MPa pressure and at least 374°C for an aqueous electrolyte fluid.

Para 30. A method according to any of Paras 23 to 29, wherein the electrolyser is in accordance with Para 19;

wherein the first discharge valve maintains a first target pressure upstream of the valve;

wherein the second discharge valve maintains a second target pressure upstream of the valve;

wherein the first and second target pressures differ such that there is a pressure drop over the porous wall driving a branch flow of electrolyte fluid through the porous wall from the inlet chamber into the retention chamber; or

wherein the first and second target pressures are substantially equal such that a pressure-driven branch flow of electrolyte fluid through the porous wall from the inlet chamber into the retention chamber;

optionally wherein the controller controls the first discharge valve and/or the second discharge valve to maintain the respective target pressure(s).

Para 31. A method according to any of Paras 23 to 30, wherein the electrolyser is in accordance with Para 18, the method comprising the controller controlling the first and/or second discharge valves to:

maintain a target flow rate or a target composition out of one of, or each of, the first and second outlets, based on flow rate data, upstream pressure data and/or composition data received by the controller; and/or

maintain a target flow rate ratio between flow out of the first outlet and flow out of the second outlet, based on flow rate data and/or composition data received by the controller;
optionally wherein the target flow rate ratio corresponds to:

a ratio of a total flow rate out of the first outlet and a total flow rate out of the second outlet; or
a ratio of a flow rate of a first fluid reaction product out of the first outlet and a flow rate of a second fluid reaction product out of the second outlet

Para 32. A method according to any of Paras 23 to 31, wherein the electrolyser is in accordance with Para 18, the method comprising the controller:

determining whether there is an excessive amount of the second fluid reaction product in an outlet flow through the first outlet, or determining whether there is an excessive amount of the first fluid reaction product in an outlet flow through the second outlet, based on composition data received at the controller for the respective outlet flow;
controlling the first discharge valve and/or the second discharge valve to vary a flow rate through a porous wall of the electrolyser, based on the determination.

**Claims**

1. An electrolyser (10, 50) for performing continuous electrolysis of an aqueous electrolyte fluid at supercritical conditions, comprising:

first and second electrodes (111, 102, 217, 528);
an inlet chamber (100, 200) disposed between the electrodes and configured to receive a flow of electrolyte fluid;
a first retention chamber (110, 210, 520) associated with the first electrode for retaining a fluid reaction product generated at the first electrode, the retention chamber having an outlet (204) to discharge the respective fluid reaction product;
a second retention chamber (110, 210, 520) associated with the second electrode for retaining a fluid reaction product generated at the second electrode and discharging it through a second outlet;
first and second porous walls (115, 217, 528) each separating the inlet chamber and a respective one of the retention chambers, wherein each porous wall is configured to permit electrolyte fluid to flow from the inlet chamber to the respective retention chamber, and is configured to inhibit return flow of the respective fluid reaction product from the respective retention chamber into the inlet chamber;

wherein for each porous wall, the porous wall and the respective electrode are provided by a compound porous electrode separating the inlet chamber and the respective retention chamber, the compound porous electrode having an inlet side adjacent to the inlet chamber and an outlet side adjacent to the respective retention chamber, the respective electrode being provided by an electrocatalytic region of the compound porous electrode.

2. An electrolyser (10, 50) for performing continuous electrolysis of an electrolyte fluid, comprising:

first and second electrodes (111, 102, 217, 528);
an inlet chamber (100, 200) disposed between the electrodes and configured to receive a flow of electrolyte fluid;
a first retention chamber (110, 210, 520) associated with the first electrode for retaining a fluid reaction product generated at the first electrode, the retention chamber having an outlet (204) to discharge the respective fluid reaction product;
a second retention chamber (110, 210, 520) associated with the second electrode for retaining a fluid reaction product generated at the second electrode and discharging it through a second outlet;
first and second porous walls (115, 217, 528) each separating the inlet chamber and a respective one of the retention chambers, wherein each porous wall is configured to permit electrolyte fluid to flow from the inlet chamber to the respective retention chamber, and is configured to inhibit return flow of the respective fluid reaction product from the respective retention chamber into the inlet chamber;
wherein for each porous wall, the porous wall and the respective electrode are provided by a compound porous electrode separating the inlet chamber and the respective retention chamber, the compound porous electrode having an inlet side adjacent to the inlet chamber and an outlet side adjacent to the respective retention chamber, the respective electrode being provided by an electrocatalytic region of the compound porous electrode;
wherein for one of or each of the retention chambers, there is a flow path for electrolyte fluid from the inlet chamber to the respective retention chamber, the flow path comprising:

an upstream portion through a passive region of the respective compound porous electrode, the passive region defining the inlet side of the compound porous electrode;

a downstream portion through the electrocatalytic region of the compound porous electrode;

wherein the passive region is configured to be less electrocatalytically active than the electrocatalytic region, or to inhibit a respective half-reaction of electrolysis.

3. An electrolyser according to claim 2, wherein the passive region comprises a passivating coating (219) defining the inlet side of the respective compound porous electrode.

4. An electrolyser according to claim 1, wherein for one of or each of the retention chambers, there is a flow path for electrolyte fluid from the inlet chamber to the respective retention chamber, the flow path comprising:

an upstream portion through a passive region of the respective compound porous electrode, the passive region defining the inlet side of the compound porous electrode;

a downstream portion through the electrocatalytic region of the compound porous electrode;

wherein the passive region is configured to be less electrocatalytically active than the electrocatalytic region, or to inhibit a respective half-reaction of electrolysis;

optionally wherein for each compound porous electrode, the passive region comprises a passivating coating (219) defining the inlet side of the respective compound porous electrode.

5. An electrolyser according to any one of the preceding claims, wherein each compound porous electrode extends linearly along a longitudinal axis (A) and has an orthogonal thickness direction from the inlet side to the outlet side;

wherein one or both of the compound porous electrodes has an anisotropic porous structure defined by a plurality of inclined channels (352) configured to permit electrolyte fluid to flow from the inlet chamber to the respective retention chamber, each being inclined with respect to both the longitudinal axis and the thickness direction;

optionally wherein the inclined channels extend through at least part of the electrocatalytic region.

6. An electrolyser (50) according to any one of the preceding claims , wherein:

the inlet chamber (200) is an annular chamber;

one of the first and second retention chambers is an inner core chamber (210) surrounded by the inlet chamber; and

the other of the first and second retention chambers is an outer annular chamber (520) that surrounds the inlet chamber.

7. An electrolyser (10, 50) according to any one of the preceding claims, further comprising a controller configured to control flow control equipment to control thermodynamic and/or flow rate conditions within the electrolyser.

8. An electrolyser (10, 50) according to claim 7, wherein the controller is configured to control the flow control equipment to control thermodynamic and/or flow rate conditions within the electrolyser to maintain supercritical conditions for the electrolyte fluid within the inlet and retention chambers, for example at least 22 MPa pressure and at least 374°C for an aqueous electrolyte fluid.

9. An electrolyser according to claim 7 or 8, wherein the electrolyser has a first outlet (213) associated with the first retention chamber for discharging a fluid reaction product generated at the first electrode; and a second outlet (524) associated with the second retention chamber for discharging a fluid reaction product generated at the second electrode;

wherein the flow control equipment comprises a first discharge valve (418) and a second discharge valve (428) in fluid communication with the first and second outlets respectively;

wherein the controller is configured to control the first and/or second discharge valves to:

maintain a target flow rate or a target composition out of one, or each of, the first and second outlets, based on flow rate data, upstream pressure data and/or composition data received by the controller; and/or

maintain a target flow rate ratio between flow out of the first outlet and flow out of the second outlet, based on flow rate data, upstream pressure data and/or composition data received by the controller; optionally wherein the target flow rate ratio corresponds to:

a ratio of a total flow rate out of the first outlet and a total flow rate out of the second outlet; or
a ratio of a flow rate of a first fluid reaction product out of the first outlet and a flow rate of a second fluid reaction product out of the second outlet.

10. An electrolyser according to any one of claims 7-9, wherein the controller is configured to determine whether there is an excessive amount of the second fluid reaction product in an outlet flow through the first outlet; or configured to determine whether there is an excessive amount of the first fluid reaction product in an outlet flow through the second outlet, based on composition data received at the controller for the respective outlet flow;
   wherein the controller is configured to control the first discharge valve and/or the second discharge valve to vary a flow rate through a porous wall of the electrolyser, based on the determination.

11. An electrolysis installation comprising:

a source (401) of an electrolyte fluid, optionally an aqueous electrolyte fluid;
an electrolyser in accordance with any of the preceding claims for performing continuous electrolysis of the electrolyte fluid.

12. A method of operating an electrolyser in accordance with any preceding claim, or an electrolysis installation in accordance with claim 11, comprising:

providing an inlet flow of electrolyte fluid to the inlet chamber to conduct electrolysis half-reactions with the first and second electrodes to generate respective fluid reaction products;
wherein the electrolyte fluid and/or associated ions flow at least part way through the or each porous wall to react with the respective electrode;
wherein each retention chamber retains the respective fluid reaction product and each of the respective porous wall inhibits return flow of the respective fluid reaction product from the respective retention chamber to the inlet chamber.

13. A method according to claim 12, wherein for one of or each of the retention chambers, there is a flow path for electrolyte fluid from the inlet chamber to the respective retention chamber, the flow path comprising:

an upstream portion through a passive region of the respective compound porous electrode, the passive region defining the inlet side of the compound porous electrode;
a downstream portion through the electrocatalytic region of the compound porous electrode;
wherein the passive region is configured to be less electrocatalytically active than the electrocatalytic region, or to inhibit a respective half-reaction of electrolysis; and
wherein the rate of the respective half-reaction of electrolysis at the respective electrocatalytic region is greater than the rate of the half-reaction of electrolysis at the respective passive region.

<u>10</u>

Figure 1

Figure 2

Figure 3a

Figure 3b

Figure 3c

Figure 3d

Figure 3e

Figure 3f

Figure 3g

40

Figure 4a

45

Figure 4b

Figure 5

Figure 6

702

Monitoring
data

Receive monitoring data

704

Evaluate target criterion

706

Determine setting for control
valve

708

Figure 7

70

| Distribute build material | ~ 72 |

↓

| Form body | ~ 74 |

Figure 8a

75

| Fill first die | ~ 76 |

↓

| Press to form intermediate component | ~ 77 |

↓

| Transfer to second die and fill | ~ 78 |

↓

| Press | ~ 79 |

↓

| Machine | ~ 80 |

Figure 8b

A047 | 2592x1944 | 2021/06/10 10:57:54 | Unit: um | Magnification: 377.5 x | 400X

50.0 um

Coated small tube

Figure 9

Figure 10

Figure 11 (b)

Figure 11 (a)

Figure 12 (a)

Figure 12 (b)

Figure 13 (a)

Figure 13 (b)

Figure 14

H₂

O₂

H₂O

Figure 15

H$_2$

O$_2$

H$_2$O

Figure 16

Figure 17a

Figure 17b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. EBERZ**; **E.U. FRANCK**. High Pressure Electrolyte Conductivity of the Homogeneous, Fluid Water-Sodium Hydroxide System to 400°C and 3000bar. *Ber. Bunsenges. Phys. Chem.*, 1995, vol. 99, 1091-1103